# EUROPEAN PATENT APPLICATION

(11) **EP 4 660 771 A1**
(43) Date of publication of application: **10.12.2025**
(21) Application number: 24838340.8
(22) Date of filing: 19.03.2024
(51) Int. Cl.: G06F 3/0485

(54) **ANNOTATION METHOD AND ELECTRONIC DEVICE**

(30) Priority: 12.07.2023 CN 202310862061
(71) Applicant: Honor Device Co., Ltd., Shenzhen, Guangdong 518040 (CN)
(72) Inventor: JI, Yaxin, Shenzhen, Guangdong 518040 (CN); WANG, Long, Shenzhen, Guangdong 518040 (CN)
(74) Representative: Goddar, Heinz J.
(86) International application number: PCT/CN2024/082529
(87) International publication number: WO 2025/011080

(57) **Abstract**

Embodiments of this application are applicable to the field of terminal technologies, and provide an annotation method and an electronic device. The method includes: displaying a second interface in response to a first operation on a first interface; obtaining a first annotation in response to an operation on a first control, and displaying a third interface, where the first annotation is an annotation for a first reading page; displaying a fourth interface in response to a second operation on the third interface, where the fourth interface includes a second reading page and a second editing window; and obtaining a second annotation in response to an operation on a second control, and displaying a fifth interface, where the fifth interface includes the second reading page and a first icon, the first icon is configured for indicating that the first annotation and the second annotation are saved into a first application, and the second annotation is an annotation for the second reading page. Because the first annotation and the second annotation are different annotations, it is equivalent to continuously annotating a reading material, thereby improving user experience.

## Description

This application claims priority to Chinese Patent Application No. 202310862061.8, filed with the China National Intellectual Property Administration on July 12, 2023 and entitled "ANNOTATION METHOD AND ELECTRONIC DEVICE", which is incorporated herein by reference in its entirety.

### TECHNICAL FIELD

This application relates to the field of terminal technologies, and more particularly, to an annotation method and an electronic device.

### BACKGROUND

At present, a user usually performs reading by using an electronic device. In a reading process, the user usually annotates reading text, and saves the annotations.

However, at present, the reading text is usually long, and needs to be displayed by using a plurality of pages. After annotating a current display interface, the user needs to first save the annotations on the current page, and then turn to another page to continue reading. When an interface to be annotated is viewed again, the interface displayed for the second time is annotated, the second annotation is saved, and page turning for reading is continued. This is equivalent to that continuous annotation cannot be performed. To be specific, annotations are performed by using the annotation method in the existing technology, and annotations cannot be continuously performed. Consequently, user experience is reduced.

Based on this, how to perform continuous annotation and improve user experience has become an urgent problem to be resolved.

### SUMMARY

This application provides an annotation method, which can continuously perform annotation, thereby improving user experience.

According to a first aspect, an annotation method is provided, including:
displaying a second interface in response to a first operation on a first interface, where the first interface displays a first reading page, and the second interface includes the first reading page and a first control;
obtaining a first annotation in response to an operation on the first control, and displaying a third interface, where the third interface includes the first reading page and a first editing window, the first editing window blocks some content of the first reading page, the first editing window includes a second control, and the first annotation is an annotation for the first reading page;
displaying a fourth interface in response to a second operation on the third interface, where the fourth interface includes a second reading page and a second editing window, and the second editing window blocks some content of the second reading page; and
obtaining a second annotation in response to an operation on the second control, and displaying a fifth interface, where the fifth interface includes the second reading page and a first icon, the first icon is configured for indicating that the first annotation and the second annotation are saved into a first application, the first application is an application corresponding to the first icon, and the second annotation is an annotation for the second reading page.

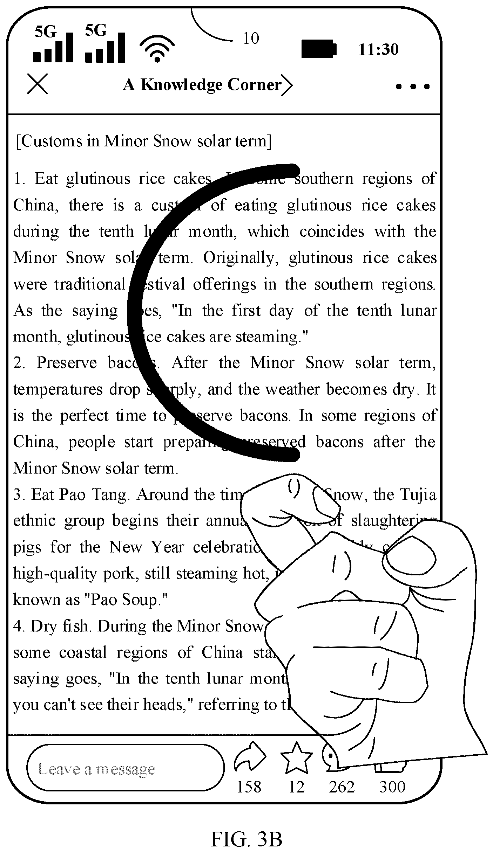

The first interface may be a display interface 10 shown in FIG. 3B. The first reading page may be, for example, a text page displayed on the display interface 10.

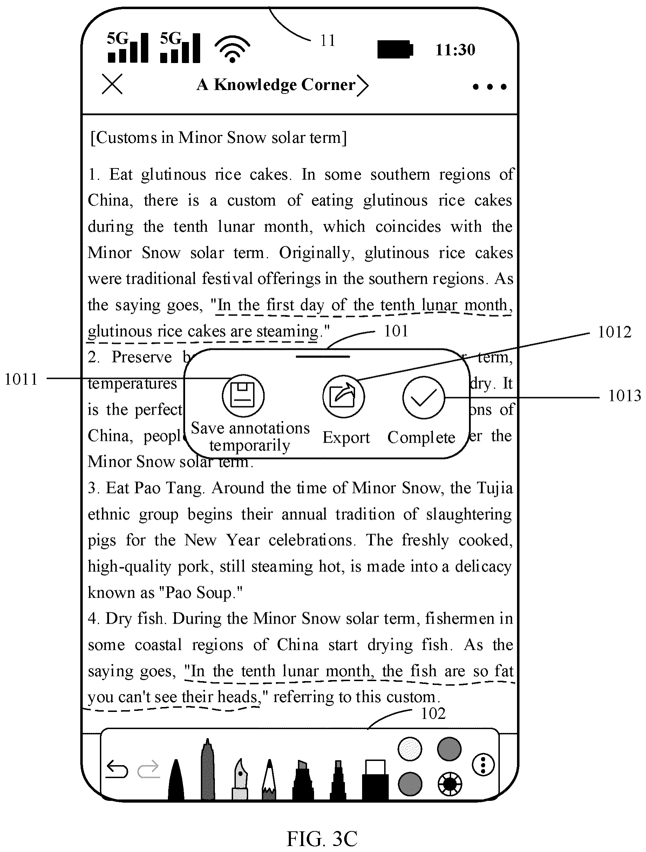

The second interface may be a display interface 11 shown in FIG. 3C. The first control may be a pause control 1011.

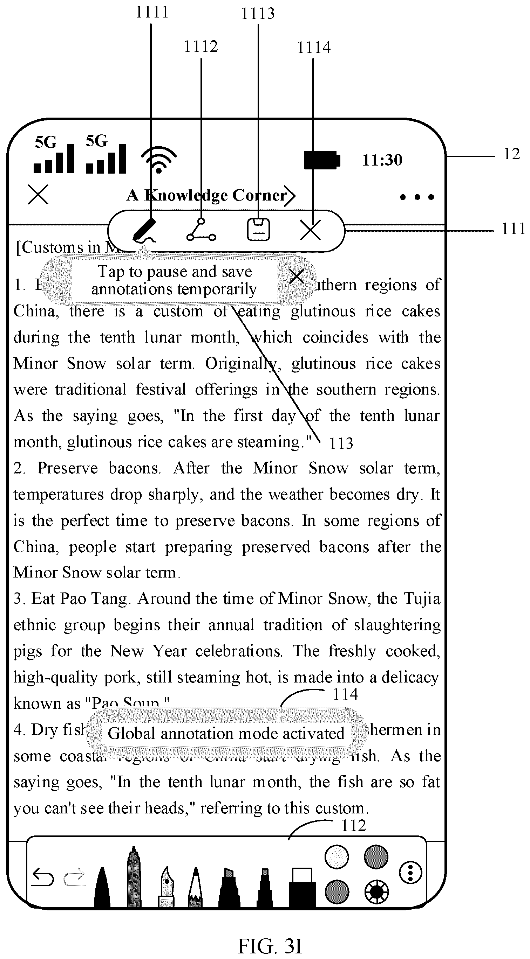

Alternatively, the second interface may be a display interface 12 shown in FIG. 3I. The first control may be a write control 1111.

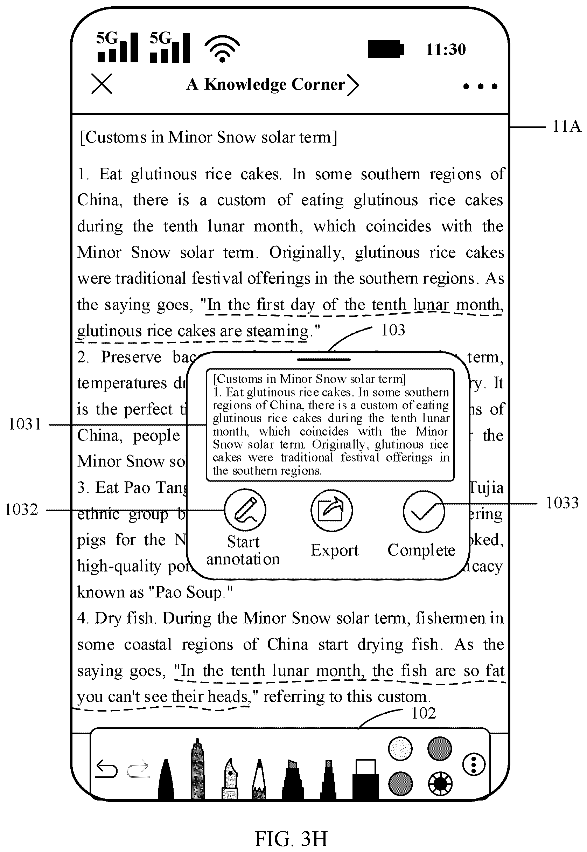

When the second interface is the display interface 11 shown in FIG. 3C and the first control may be the pause control 1011, the obtaining a first annotation in response to an operation on the first control may include an operation of tapping, after a user completes annotation, the pause control 1011 to temporarily save the annotation. The third interface may be a display interface 11A shown in FIG. 3H. The first editing window may be an editing tool bar 103 shown in FIG. 3H. The second control may be a complete control 1033.

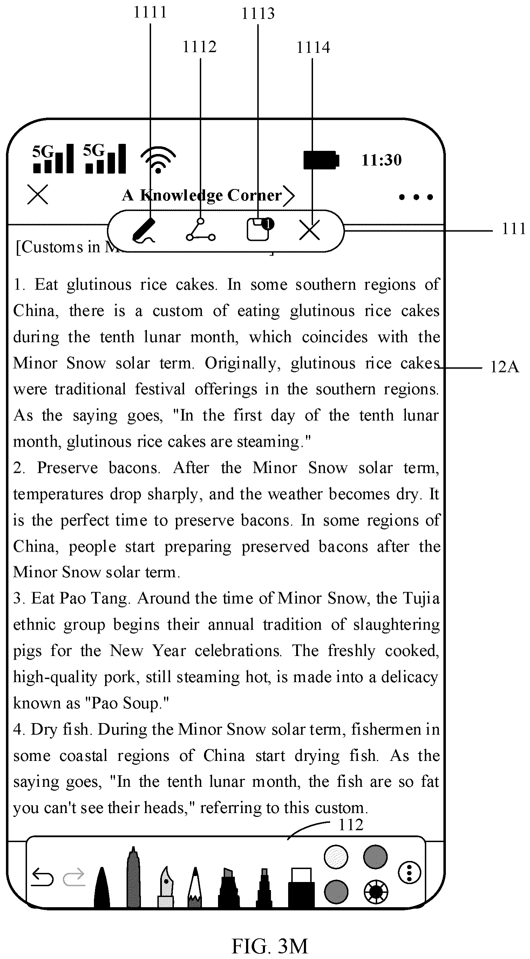

When the second interface may be the display interface 12 shown in FIG. 3I and the first control may be the write control 1111, the third interface may be a display interface 12A shown in FIG. 3M. The first editing window may be an editing tool bar 111. The second control may be a complete control 1114.

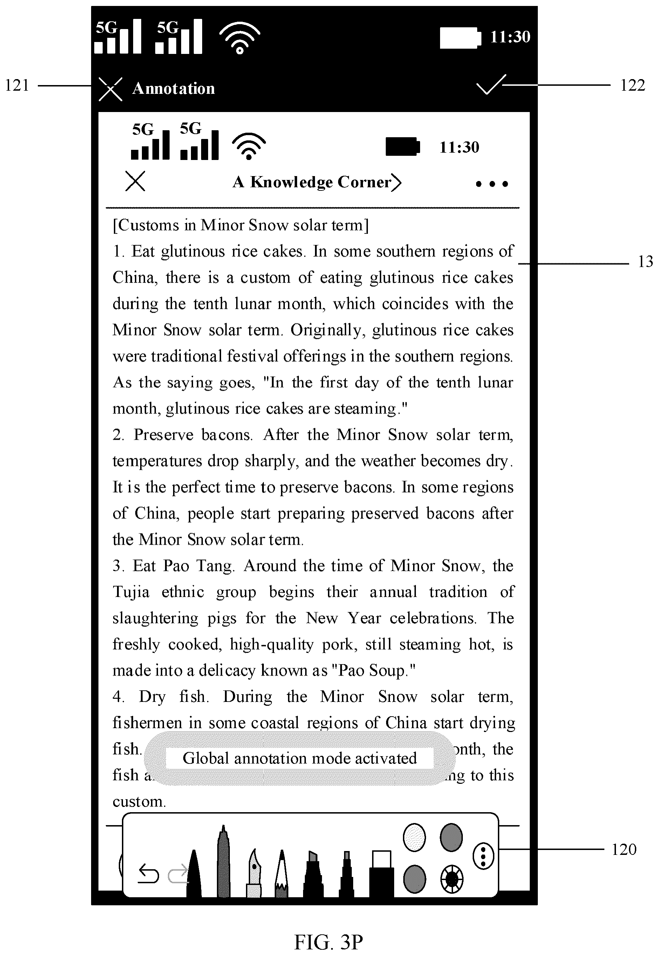

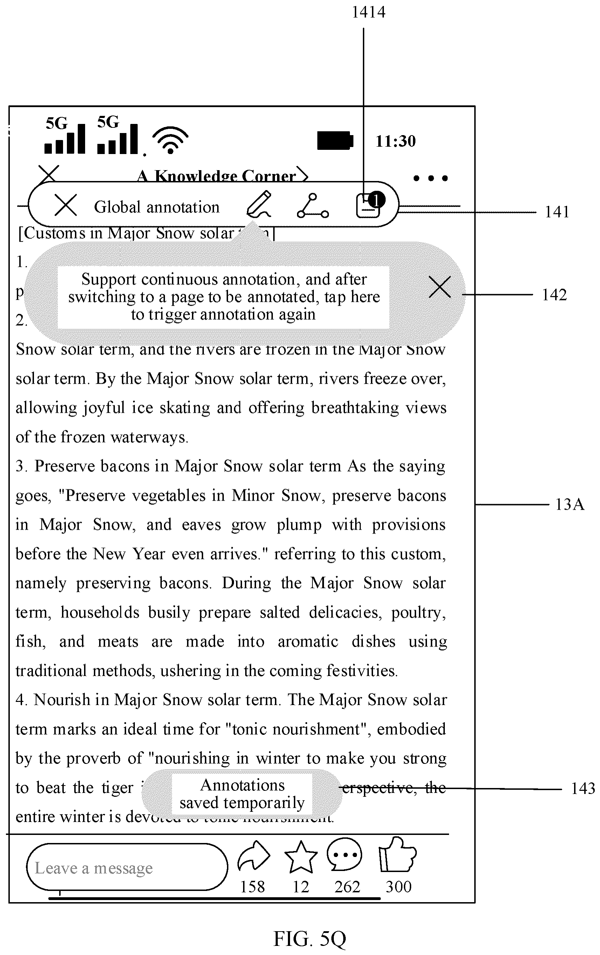

When the second interface may be a display interface 13 shown in FIG. 3P and the first control may be a complete control 122, the third interface may be a display interface 13A shown in FIG. 5Q. The first editing window may be an editing tool bar 141 shown in FIG. 5Q. The second control may be a temporary save control 1414 shown in FIG. 5Q.

The second operation may be a page turning operation on the third interface, so that the electronic device displays the second reading page. For example, the second operation may be swiping left. The second operation may further be an operation of exiting a currently running application and entering another application. This is not limited in this embodiment of this application.

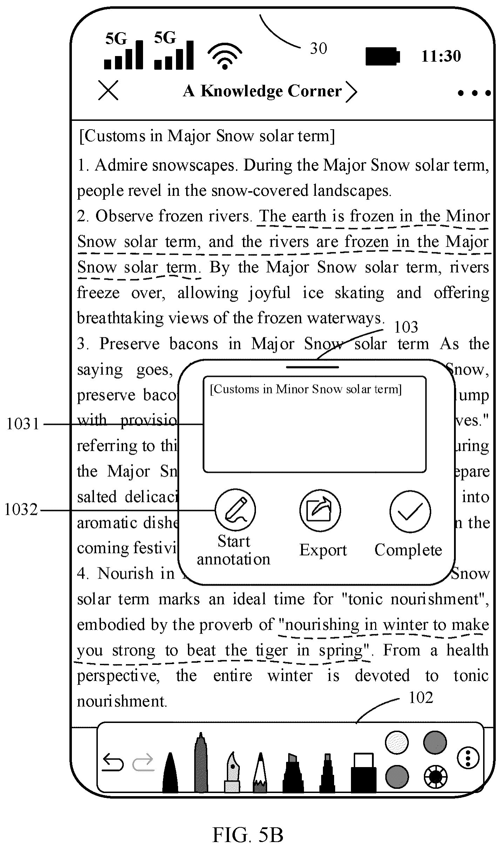

When the second interface is the display interface 11 shown in FIG. 3C, the first control may be the pause control 1011, the third interface may be the display interface 11A shown in FIG. 3H, the first editing window may be an editing tool bar 103 shown in FIG. 3H, and the second control may be a complete control 1033, the fourth interface may be a display interface 30 shown in FIG. 5B, the second reading page may be a text page displayed in the display interface 30, and the second editing window may be the editing tool bar 103.

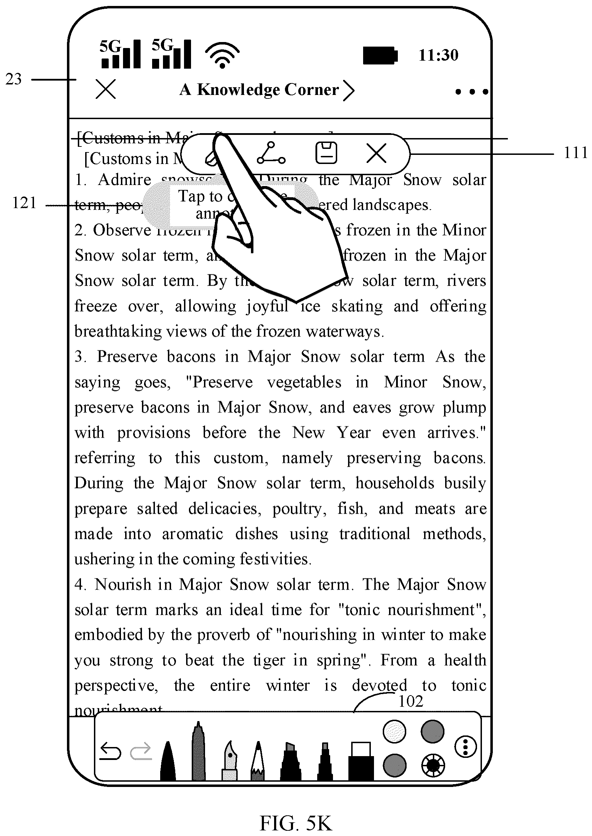

When the second interface may be the display interface 12 shown in FIG. 3I, the first control may be the write control 1111, the third interface may be the display interface 12A shown in FIG. 3M, the first editing window may be the editing tool bar 111, and the second control may be the complete control 1114, the fourth interface may be a display interface 23 shown in FIG. 5K, the second reading page may be a text page displayed in the display interface 23, and the second editing window may be the editing tool bar 111.

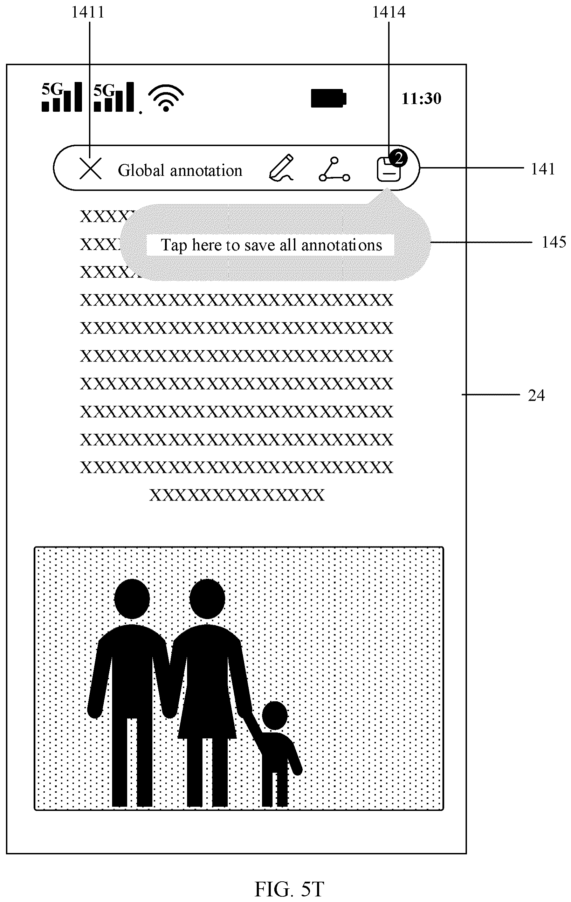

When the second interface may be the display interface 13 shown in FIG. 3P, the first control may be the complete control 122, the third interface may be the display interface 13A shown in FIG. 5Q, the first editing window may be the editing tool bar 141 shown in FIG. 5Q, and the second control may be the temporary save control 1414 shown in FIG. 5Q, the fourth interface may be a display interface 24 shown in FIG. 5T, the second reading page may be a text page displayed in the display interface 24, and the second editing window may be the editing tool bar 141.

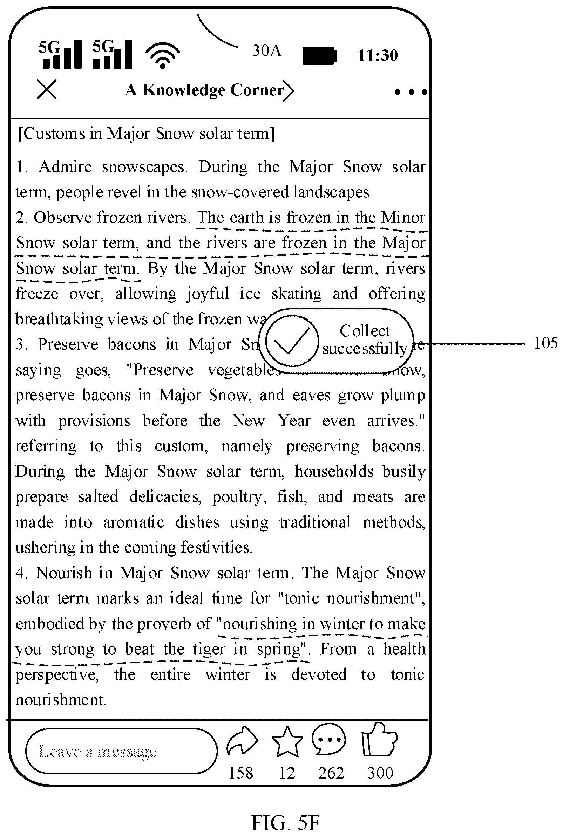

When the second interface is the display interface 11 shown in FIG. 3C, the first control may be the pause control 1011, the third interface may be the display interface 11A shown in FIG. 3H, the first editing window may be the editing tool bar 103 shown in FIG. 3H, the second control may be the complete control 1033, the fourth interface may be the display interface 30 shown in FIG. 5B, the second reading page may be the text page displayed in the display interface 30, and the second editing window may be the editing tool bar 103, the fifth interface may be a display interface 30A shown in FIG. 5F, and the first icon may be an icon 105.

When the second interface may be the display interface 12 shown in FIG. 3I, the first control may be the write control 1111, the third interface may be the display interface 12A shown in FIG. 3M, the first editing window may be the editing tool bar 111, the second control may be the complete control 1114, the fourth interface may be the display interface 23 shown in FIG. 5K, the second reading page may be the text page displayed in the display interface 23, and the second editing window may be the editing tool bar 111, the fifth interface may be a display interface 23A shown in FIG. 5F, and the first icon may be the icon 105.

When the second interface may be the display interface 13 shown in FIG. 3P, the first control may be the complete control 122, the third interface may be the display interface 13A shown in FIG. 5Q, the first editing window may be the editing tool bar 141 shown in FIG. 5Q, and the second control may be the temporary save control 1414 shown in FIG. 5Q, the fourth interface may be the display interface 24 shown in FIG. 5T, the second reading page may be the text page displayed in the display interface 24, and the second editing window may be the editing tool bar 141, the fifth interface may be a display interface 24A shown in FIG. 5F, and the first icon may be the icon 105.

The annotation method according to this embodiment of this application includes: displaying a second interface in response to a first operation on a first interface, where the first interface displays a first reading page, and the second interface includes the first reading page and a first control; obtaining a first annotation in response to an operation on the first control, and displaying a third interface, where the third interface includes the first reading page and a first editing window, the first editing window blocks some content of the first reading page, the first editing window includes a second control, and the first annotation is an annotation for the first reading page; displaying a fourth interface in response to a second operation on the third interface, where the fourth interface includes a second reading page and a second editing window, and the second editing window blocks some content of the second reading page; and obtaining a second annotation in response to an operation on the second control, and displaying a fifth interface, where the fifth interface includes the second reading page and a first icon, the first icon is configured for indicating that the first annotation and the second annotation are saved into a first application, the first application is an application corresponding to the first icon, and the second annotation is an annotation for the second reading page. Because the first annotation and the second annotation are different annotations, it is equivalent to continuously annotating a reading material, thereby improving user experience.

With reference to the first aspect, in some embodiments of the first aspect, the obtaining a first annotation in response to an operation on the first control and displaying a third interface includes:
obtaining the first annotation in response to the operation on the first control, and displaying the third interface by using a first preset dynamic effect.

With reference to the first aspect, in some embodiments of the first aspect, the first operation includes a gesture operation of drawing a character C with a knuckle.

With reference to the first aspect, in some embodiments of the first aspect, the displaying a second interface in response to a first operation on a first interface includes: displaying, in response to the gesture operation of drawing a character C with a knuckle on the first interface, the second interface by using a second preset dynamic effect.

With reference to the first aspect, in some embodiments of the first aspect, the first operation includes an operation of moving a stylus from a corner of a display screen to the center.

With reference to the first aspect, in some embodiments of the first aspect, the displaying a second interface in response to a first operation on a first interface includes: displaying, in response to the operation of moving a stylus from a corner of the first interface to the center on the first interface, the second interface by using a third preset dynamic effect.

With reference to the first aspect, in some embodiments of the first aspect, the second editing window further includes a first region. The first region includes a preview annotation image. The preview annotation image includes a thumbnail of the first annotation.

With reference to the first aspect, in some embodiments of the first aspect, there are a plurality of first annotations in the first region. The method further includes: displaying a sixth interface in response to a third operation in the first region, where the sixth interface includes a second region, and the second region includes the first annotations arranged in an order indicated by the second operation.

With reference to the first aspect, in some embodiments of the first aspect, a length of the first region is less than a preset threshold, and the first region displays one first annotation. The method further includes: displaying a seventh interface in response to a fourth operation in the first region, where the seventh interface includes a third region, a length of the third region is greater than that of the first region, and the third region includes the plurality of first annotations; and displaying an eighth interface in response to a fifth operation in the third region, where the eighth interface includes a fourth region, and the fourth region includes the first annotations arranged in an order indicated by the fifth operation.

With reference to the first aspect, in some embodiments of the first aspect, the method further includes: displaying a ninth interface in response to a zoom-in operation on the third interface, where the ninth interface includes some content of the first reading page, and an area of a reading material in the first reading page is increased from a first area value to a second area value.

With reference to the first aspect, in some embodiments of the first aspect, the first reading page includes a first image. An area of the first image on the ninth interface is greater than an area of the first image on the third interface.

With reference to the first aspect, in some embodiments of the first aspect, the method further includes: displaying a tenth interface, where the tenth interface includes a second icon of a first annotation; displaying an eleventh interface in response to an operation on the second icon, where the eleventh interface includes a fourth control; displaying a twelfth interface in response to an operation on the fourth control, where the twelfth interface includes the first reading page corresponding to the first annotation and a fifth editing window, and the fifth editing window includes a fifth control; and obtaining a third annotation in response to an operation on the fifth control, and displaying a thirteenth interface, where the thirteenth interface includes the first annotation and the third annotation.

With reference to the first aspect, in some embodiments of the first aspect, the method further includes: displaying a fourteenth interface, where the fourteenth interface includes a second icon of a first annotation; displaying a fifteenth interface in response to an operation on the first icon, where the fifteenth interface includes a thumbnail of the first annotation; displaying a sixteenth interface in response to an operation on the thumbnail of the first annotation, where the sixteenth interface includes an image of the first annotation and a sixth editing window, and the sixth editing window includes a sixth control; and obtaining a fourth annotation in response to an operation performed on the sixth control, and displaying a seventeenth interface, where the seventeenth interface includes the fourth annotation, and the fourth annotation is an annotation obtained by editing the first annotation.

With reference to the first aspect, in some embodiments of the first aspect, the first application includes a global collection.

According to a second aspect, an annotation apparatus is provided, including a unit for performing the method according to the first aspect. The apparatus may be a server, a terminal device, or a chip in a terminal device. The apparatus may include an input unit and a processing unit.

When the apparatus is a terminal device, the processing unit may be a processor, and the input unit may be a communication interface. The terminal device may further include a memory. The memory is configured to store computer program code. When the processor executes the computer program code stored in the memory, the terminal device is enabled to perform any method according to the first aspect.

When the apparatus is a chip in a terminal device, the processing unit may be a processing unit inside the chip, and the input unit may be an output interface, a pin, or a circuit. The chip may further include a memory. The memory may be a memory (for example, a register or a cache) in the chip, or may be a memory (for example, a read-only memory or a random access memory) located outside the chip. The memory is configured to store computer program code. When the processor executes the computer program code stored in the memory, the chip is enabled to perform any method according to the first aspect.

In a possible implementation, the memory is configured to store computer program code. A processor executes the computer program code stored in the memory. When the computer program code stored in the memory is executed, the processor is configured to perform the following operations.

According to a third aspect, a computer-readable storage medium is provided. The computer-readable storage medium stores computer program code. When the computer program code is run by an annotation apparatus, the annotation apparatus is enabled to perform any annotation method according to the first aspect.

According to a fourth aspect, a computer program product is provided. The computer program product includes: computer program code. When the computer program code is run by an annotation apparatus, the annotation apparatus is enabled to perform any method according to the first aspect.

Embodiments of this application provide an annotation method and an electronic device. The method includes: displaying a second interface in response to a first operation on a first interface, where the first interface displays a first reading page, and the second interface includes the first reading page and a first control; obtaining a first annotation in response to an operation on the first control, and displaying a third interface, where the third interface includes the first reading page and a first editing window, the first editing window blocks some content of the first reading page, the first editing window includes a second control, and the first annotation is an annotation for the first reading page; displaying a fourth interface in response to a second operation on the third interface, where the fourth interface includes a second reading page and a second editing window, and the second editing window blocks some content of the second reading page; and obtaining a second annotation in response to an operation on the second control, and displaying a fifth interface, where the fifth interface includes the second reading page and a first icon, the first icon is configured for indicating that the first annotation and the second annotation are saved into a first application, the first application is an application corresponding to the first icon, and the second annotation is an annotation for the second reading page. Because the first annotation and the second annotation are different annotations, it is equivalent to continuously annotating a reading material, thereby improving user experience.

### BRIEF DESCRIPTION OF DRAWINGS

FIG. 1 is a schematic diagram of a hardware system applicable to an electronic device of this application;
FIG. 2 is a schematic diagram of a software system applicable to an electronic device of this application;
FIG. 3A is a schematic diagram of an interface on which a global annotation method is performed according to an embodiment of this application;
FIG. 3B is a schematic diagram of an interface on which a global annotation method is performed according to an embodiment of this application;
FIG. 3C is a schematic diagram of an interface on which a global annotation method is performed according to an embodiment of this application;
FIG. 3D is a schematic diagram of an interface on which a global annotation method is performed according to an embodiment of this application;
FIG. 3E is a schematic diagram of an interface on which a global annotation method is performed according to an embodiment of this application;
FIG. 3F is a schematic diagram of an interface on which a global annotation method is performed according to an embodiment of this application;
FIG. 3G is a schematic diagram of an interface on which a global annotation method is performed according to an embodiment of this application;
FIG. 3H is a schematic diagram of an interface on which a global annotation method is performed according to an embodiment of this application;
FIG. 3I is a schematic diagram of an interface on which a global annotation method is performed according to an embodiment of this application;
FIG. 3J is a schematic diagram of an interface on which a global annotation method is performed according to an embodiment of this application;
FIG. 3K is a schematic diagram of an interface on which a global annotation method is performed according to an embodiment of this application;
FIG. 3L is a schematic diagram of an interface on which a global annotation method is performed according to an embodiment of this application;
FIG. 3M is a schematic diagram of an interface on which a global annotation method is performed according to an embodiment of this application;
FIG. 3N is a schematic diagram of an interface on which a global annotation method is performed according to an embodiment of this application;
FIG. 3O is a schematic diagram of an interface on which a global annotation method is performed according to an embodiment of this application;
FIG. 3P is a schematic diagram of an interface on which a global annotation method is performed according to an embodiment of this application;
FIG. 3Q is a schematic diagram of an interface on which a global annotation method is performed according to an embodiment of this application;
FIG. 3R is a schematic diagram of an interface on which a global annotation method is performed according to an embodiment of this application;
FIG. 3S is a schematic diagram of an interface on which a global annotation method is performed according to an embodiment of this application;
FIG. 3T is a schematic diagram of an interface on which a global annotation method is performed according to an embodiment of this application;
FIG. 3U is a schematic diagram of an interface on which a global annotation method is performed according to an embodiment of this application;
FIG. 3V is a schematic diagram of an interface on which a global annotation method is performed according to an embodiment of this application;
FIG. 3W is a schematic diagram of an interface on which a global annotation method is performed according to an embodiment of this application;
FIG. 3X is a schematic diagram of an interface on which a global annotation method is performed according to an embodiment of this application;
FIG. 4A is a schematic diagram of an interface on which a zoom-in operation is performed during annotation according to an embodiment of this application;
FIG. 4B is a schematic diagram of an interface on which a zoom-in operation is performed during annotation according to an embodiment of this application;
FIG. 4C is a schematic diagram of an interface on which a zoom-in operation is performed during annotation according to an embodiment of this application;
FIG. 4D is a schematic diagram of an interface on which a zoom-in operation is performed during annotation according to an embodiment of this application;
FIG. 5A is a schematic diagram of an interface on which continuous annotation is performed according to an embodiment of this application;
FIG. 5B is a schematic diagram of an interface on which continuous annotation is performed according to an embodiment of this application;
FIG. 5C is a schematic diagram of an interface on which continuous annotation is performed according to an embodiment of this application;
FIG. 5D is a schematic diagram of an interface on which continuous annotation is performed according to an embodiment of this application;
FIG. 5E is a schematic diagram of an interface on which continuous annotation is performed according to an embodiment of this application;
FIG. 5F is a schematic diagram of an interface on which continuous annotation is performed according to an embodiment of this application;
FIG. 5G is a schematic diagram of an interface on which continuous annotation is performed according to an embodiment of this application;
FIG. 5H is a schematic diagram of an interface on which continuous annotation is performed according to an embodiment of this application;
FIG. 5I is a schematic diagram of an interface on which continuous annotation is performed according to an embodiment of this application;
FIG. 5J is a schematic diagram of an interface on which continuous annotation is performed according to an embodiment of this application;
FIG. 5K is a schematic diagram of an interface on which continuous annotation is performed according to an embodiment of this application;
FIG. 5L is a schematic diagram of an interface on which continuous annotation is performed according to an embodiment of this application;
FIG. 5M is a schematic diagram of an interface on which continuous annotation is performed according to an embodiment of this application;
FIG. 5N is a schematic diagram of an interface on which continuous annotation is performed according to an embodiment of this application;
FIG. 5O is a schematic diagram of an interface on which continuous annotation is performed according to an embodiment of this application;
FIG. 5P is a schematic diagram of an interface on which continuous annotation is performed according to an embodiment of this application;
FIG. 5Q is a schematic diagram of an interface on which continuous annotation is performed according to an embodiment of this application;
FIG. 5R is a schematic diagram of an interface on which continuous annotation is performed according to an embodiment of this application;
FIG. 5S is a schematic diagram of an interface on which continuous annotation is performed according to an embodiment of this application;
FIG. 5T is a schematic diagram of an interface on which continuous annotation is performed according to an embodiment of this application;
FIG. 5U is a schematic diagram of an interface on which continuous annotation is performed according to an embodiment of this application;
FIG. 5V is a schematic diagram of an interface on which continuous annotation is performed according to an embodiment of this application;
FIG. 5W is a schematic diagram of an interface on which continuous annotation is performed according to an embodiment of this application;
FIG. 5X is a schematic diagram of an interface on which continuous annotation is performed according to an embodiment of this application;
FIG. 5Y is a schematic diagram of an interface on which continuous annotation is performed according to an embodiment of this application;
FIG. 5Z is a schematic diagram of an interface on which continuous annotation is performed according to an embodiment of this application;

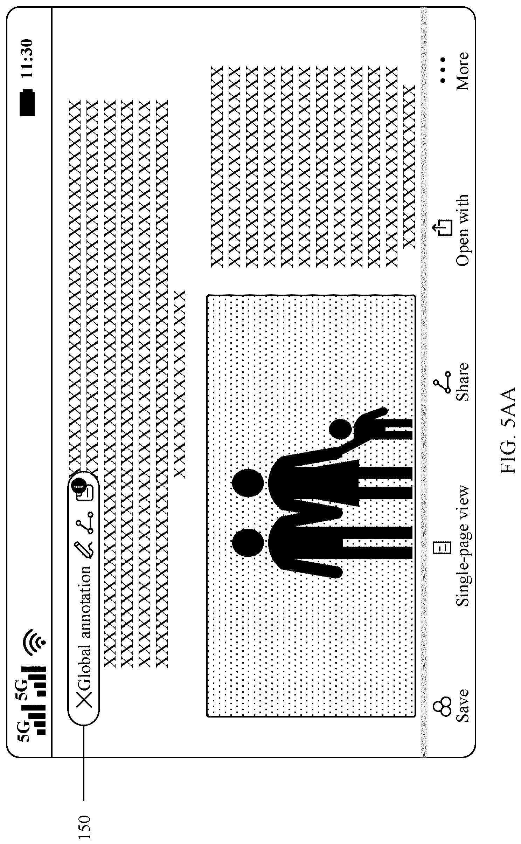

FIG. 5AA is a schematic diagram of an interface on which continuous annotation is performed according to an embodiment of this application;

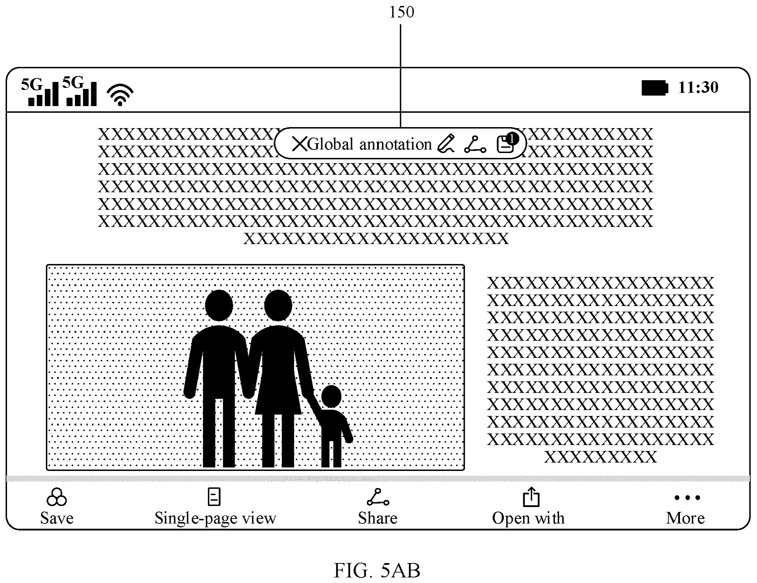

FIG. 5AB is a schematic diagram of an interface on which continuous annotation is performed according to an embodiment of this application;

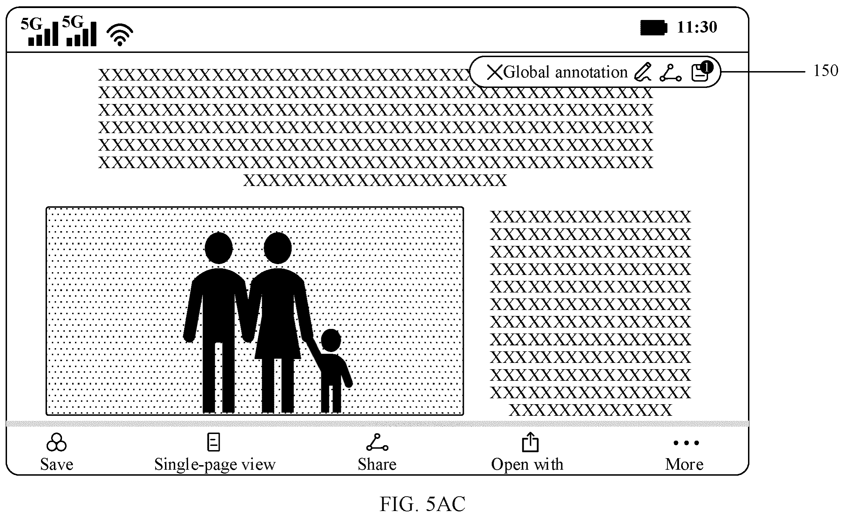

FIG. 5AC is a schematic diagram of an interface on which continuous annotation is performed according to an embodiment of this application;
FIG. SAD is a schematic diagram of an interface on which continuous annotation is performed according to an embodiment of this application;

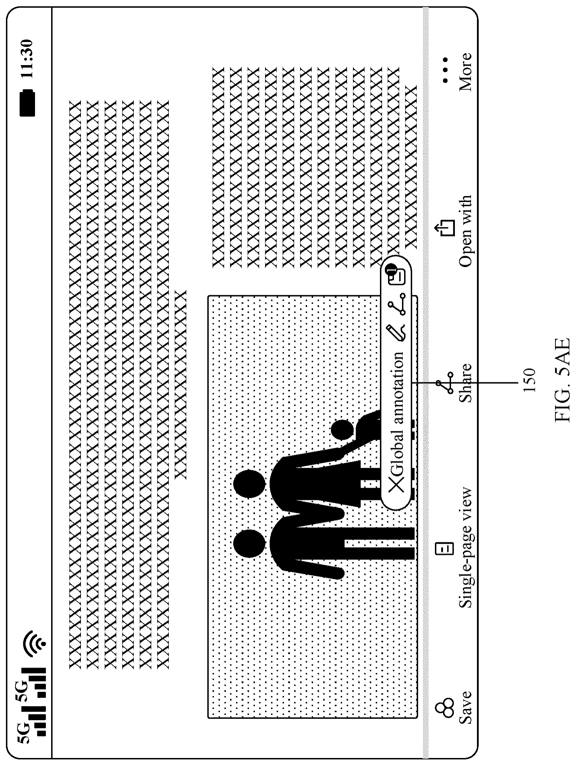

FIG. 5AE is a schematic diagram of an interface on which continuous annotation is performed according to an embodiment of this application;

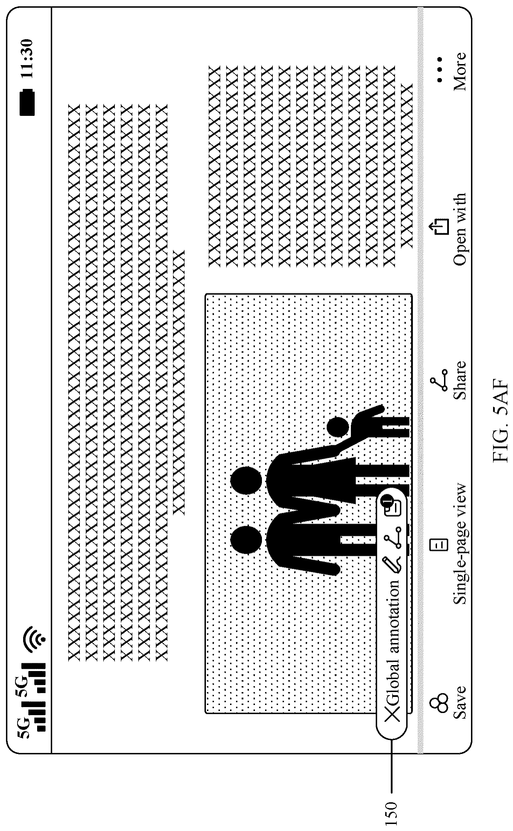

FIG. 5AF is a schematic diagram of an interface on which continuous annotation is performed according to an embodiment of this application;

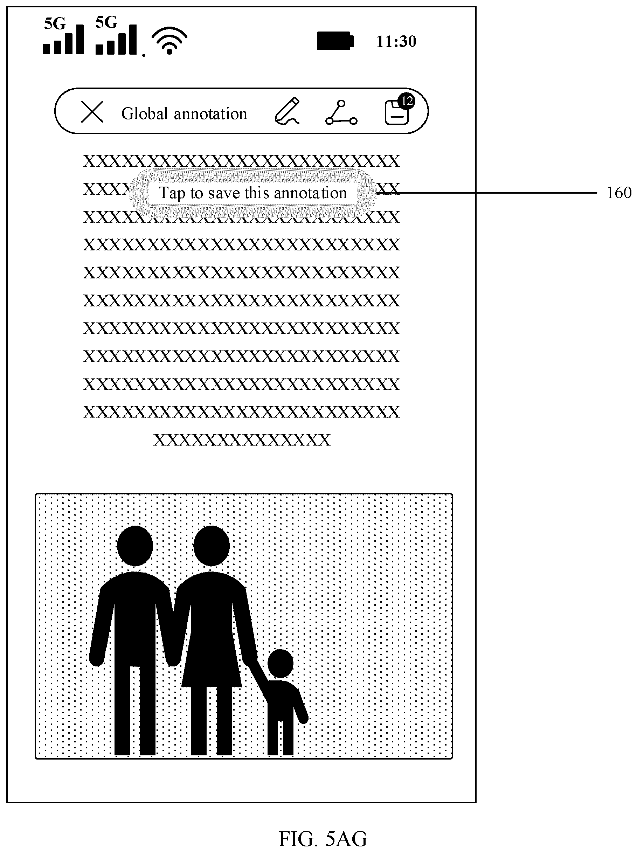

FIG. 5AG is a schematic diagram of an interface on which continuous annotation is performed according to an embodiment of this application;

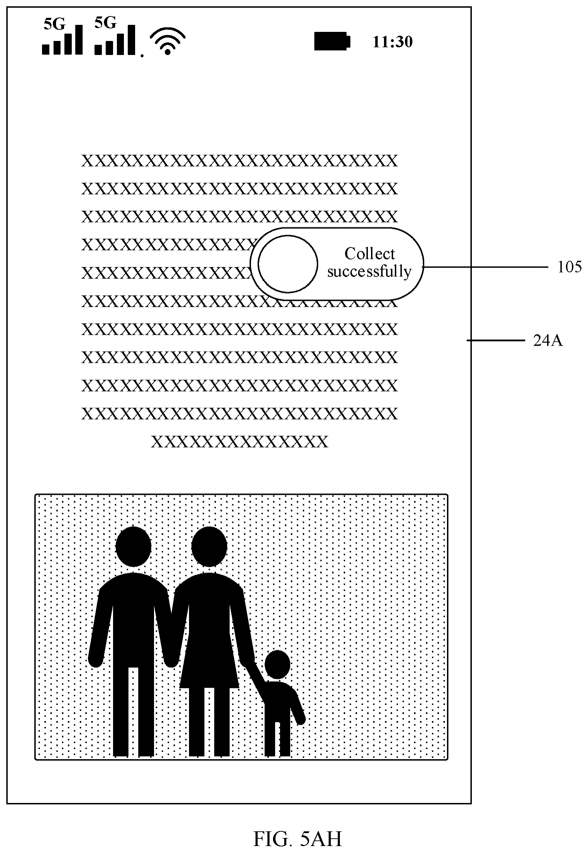

FIG. 5AH is a schematic diagram of an interface on which continuous annotation is performed according to an embodiment of this application;

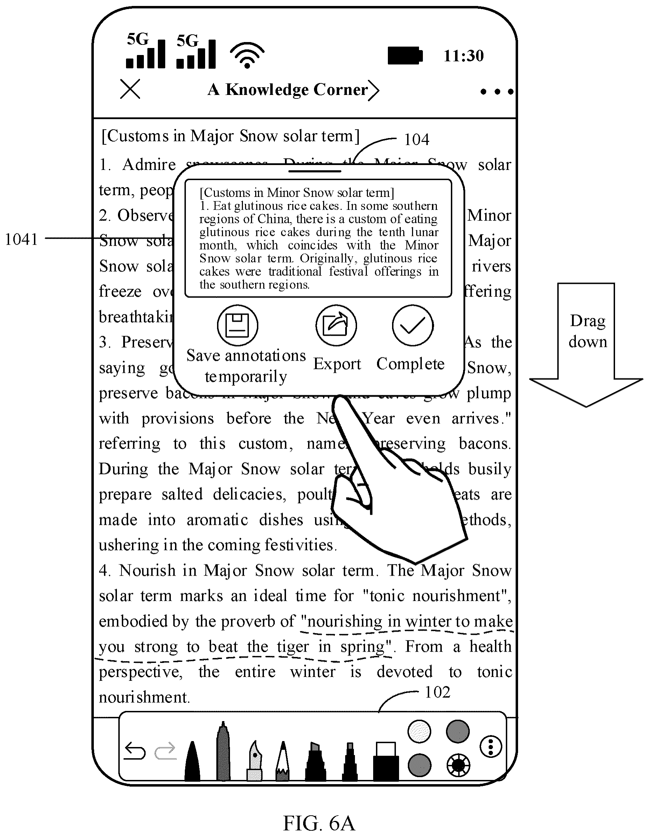

FIG. 6A is a schematic diagram of an interface on which an order of thumbnails is adjusted according to an embodiment of this application;

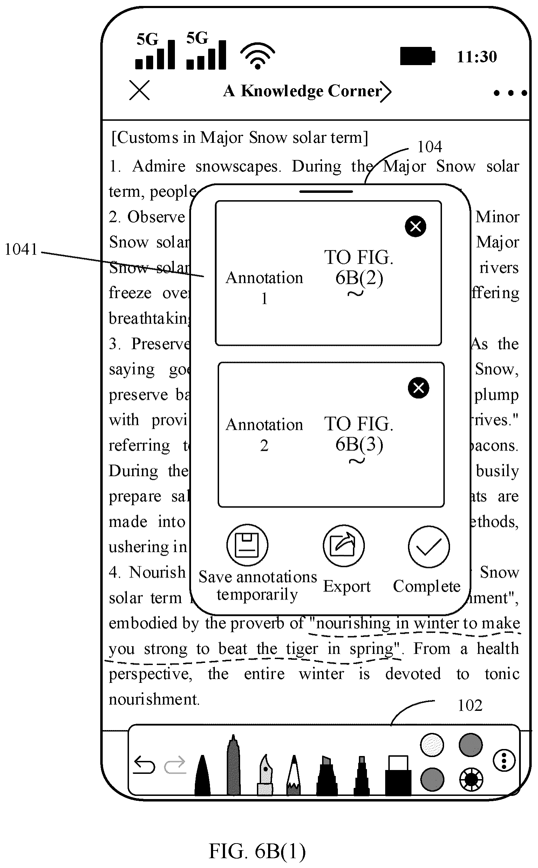

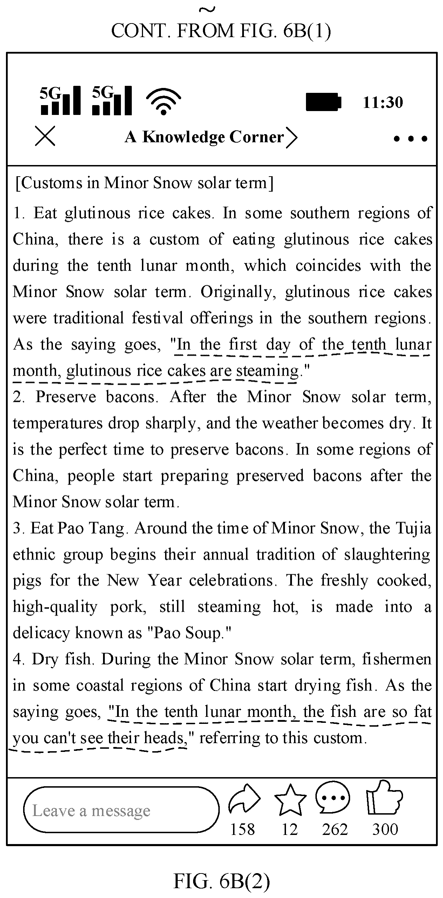

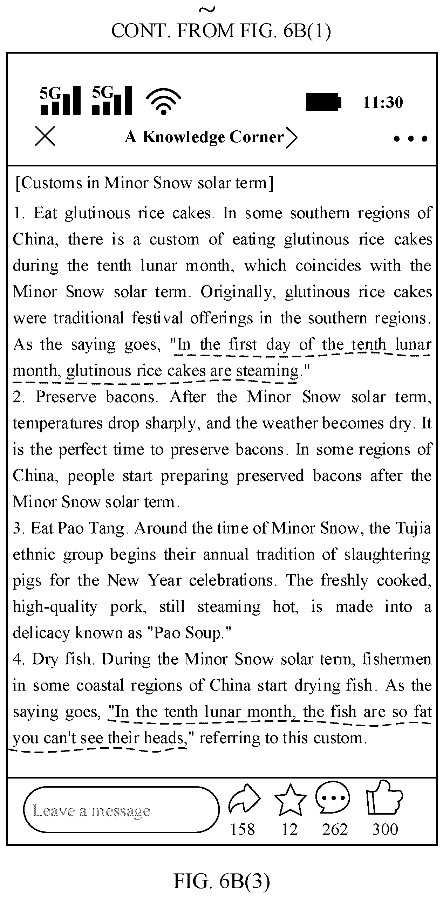

FIG. 6B(1), FIG. 6B(2), and FIG. 6B(3) are a schematic diagram of an interface on which an order of thumbnails is adjusted according to an embodiment of this application;

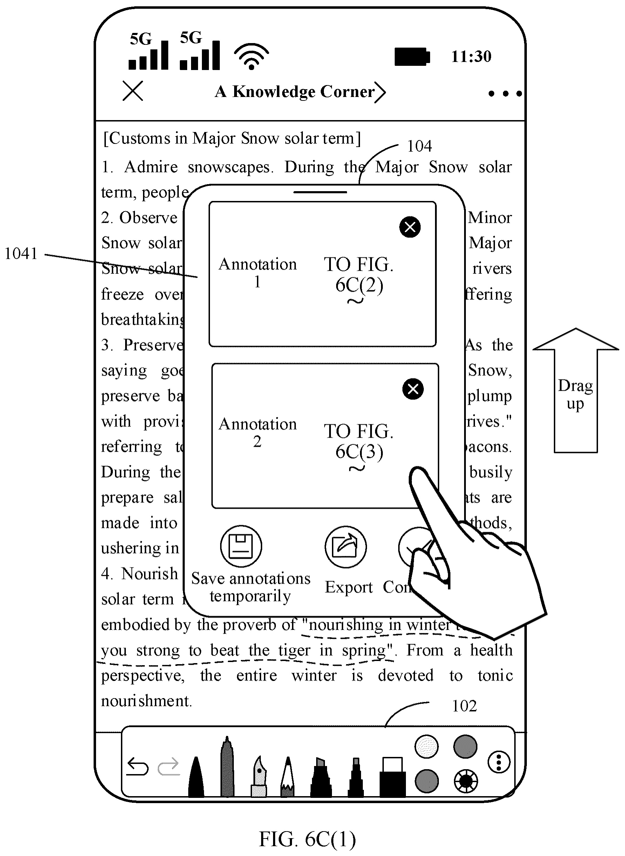

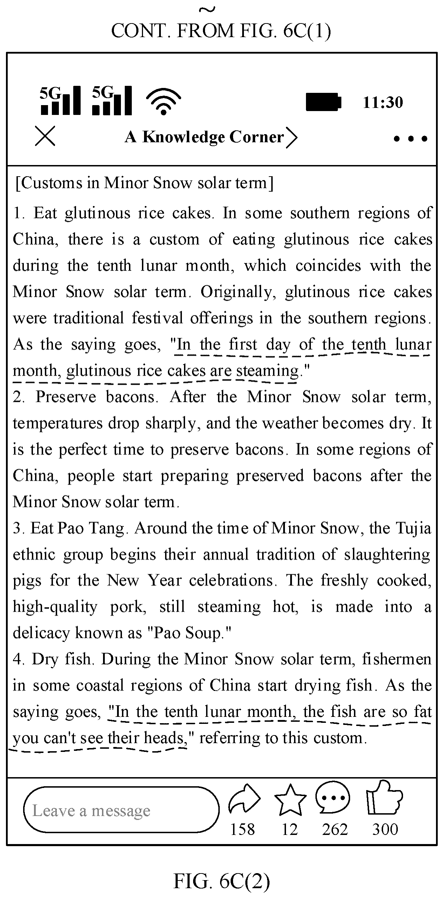

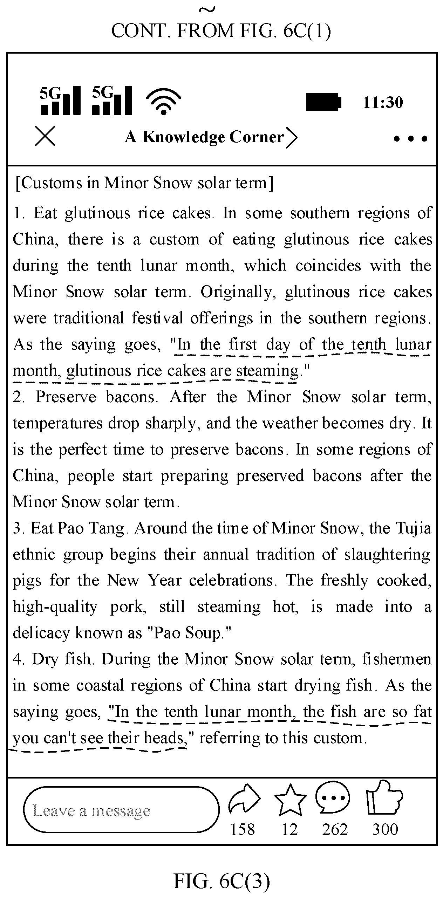

FIG. 6C(1), FIG. 6C(2), and FIG. 6C(3) are a schematic diagram of an interface on which an order of thumbnails is adjusted according to an embodiment of this application;

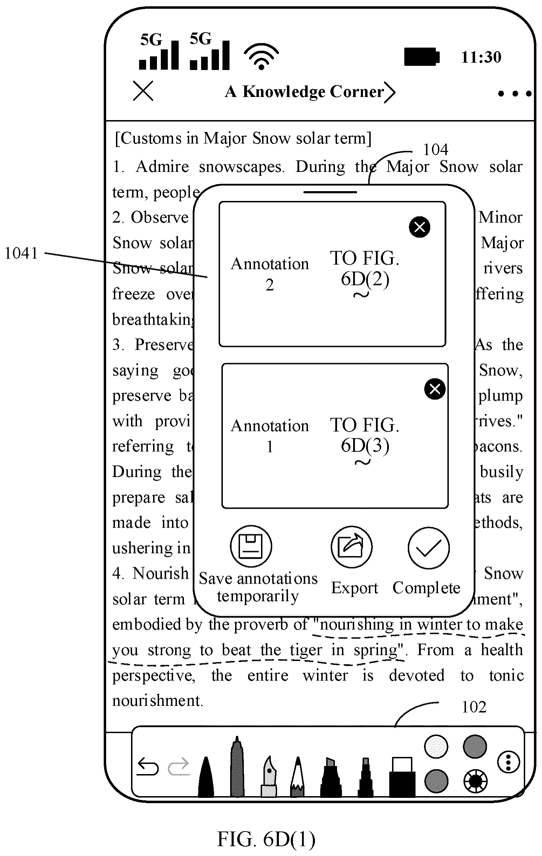

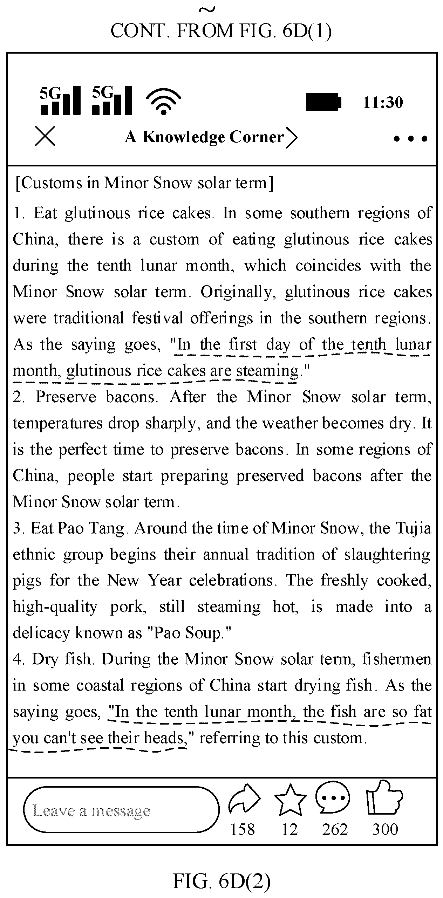

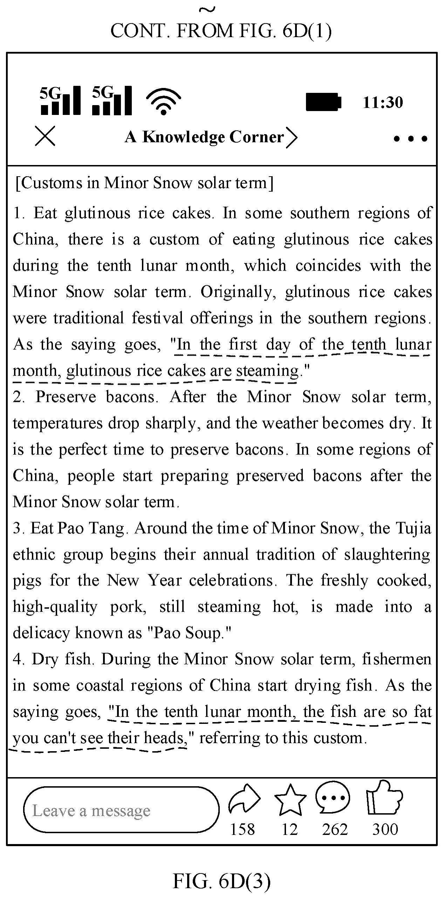

FIG. 6D(1), FIG. 6D(2), and FIG. 6D(3) are a schematic diagram of an interface on which an order of thumbnails is adjusted according to an embodiment of this application;

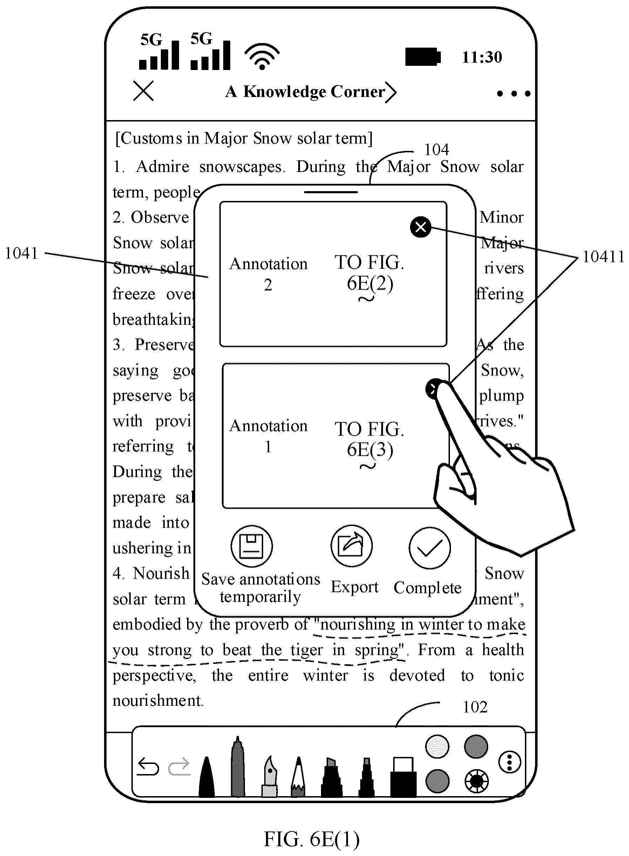

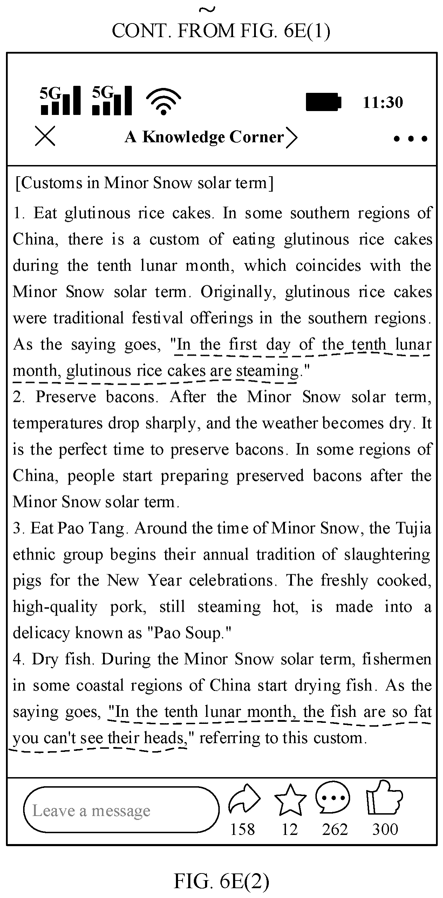

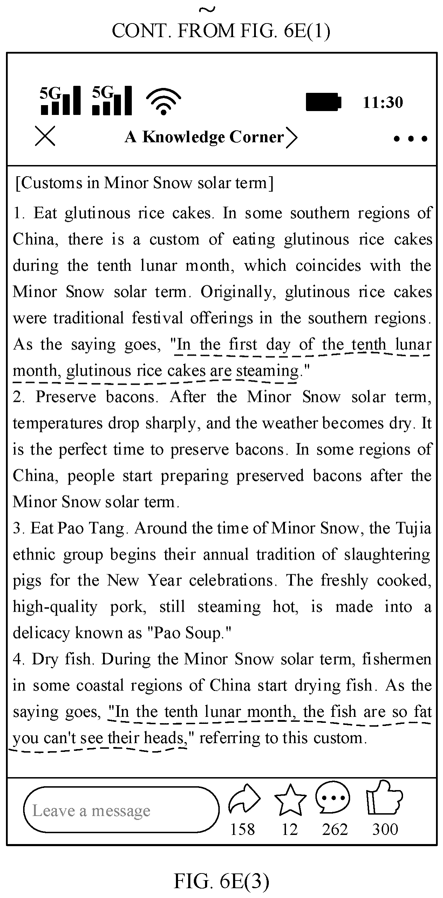

FIG. 6E(1), FIG. 6E(2), and FIG. 6E(3) are a schematic diagram of an interface on which an order of thumbnails is adjusted according to an embodiment of this application;

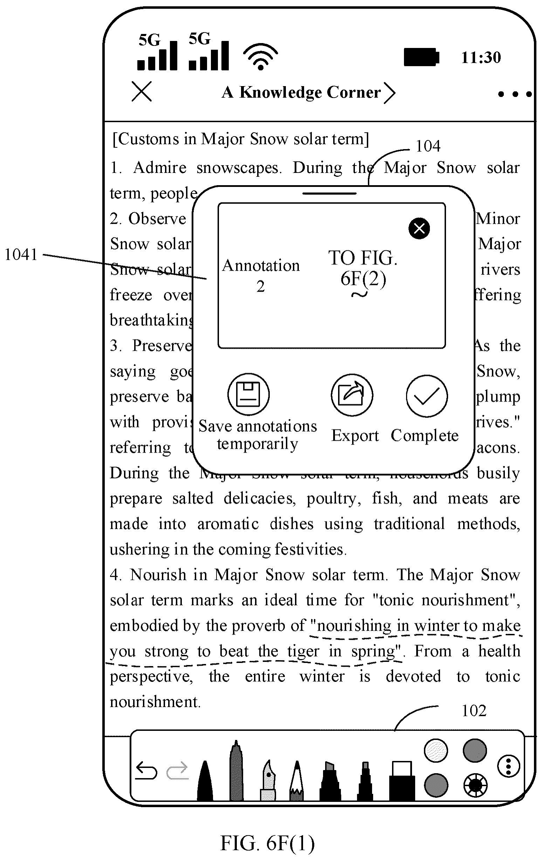

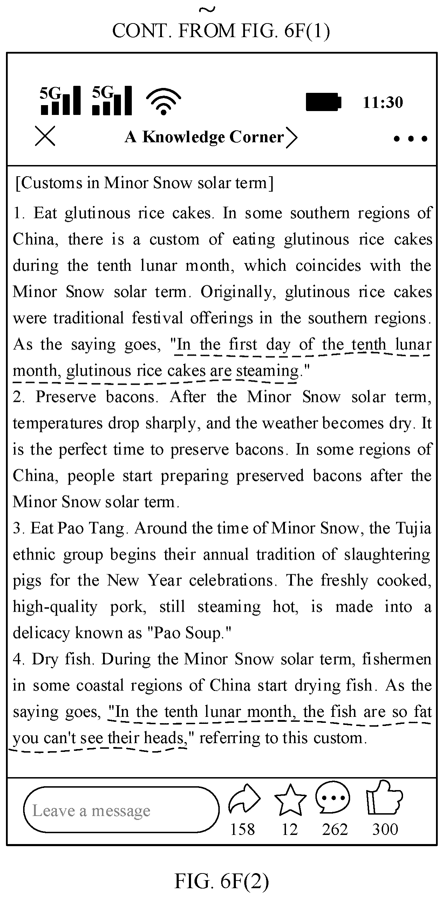

FIG. 6F(1) and FIG. 6F(2) are a schematic diagram of an interface on which an order of thumbnails is adjusted according to an embodiment of this application;

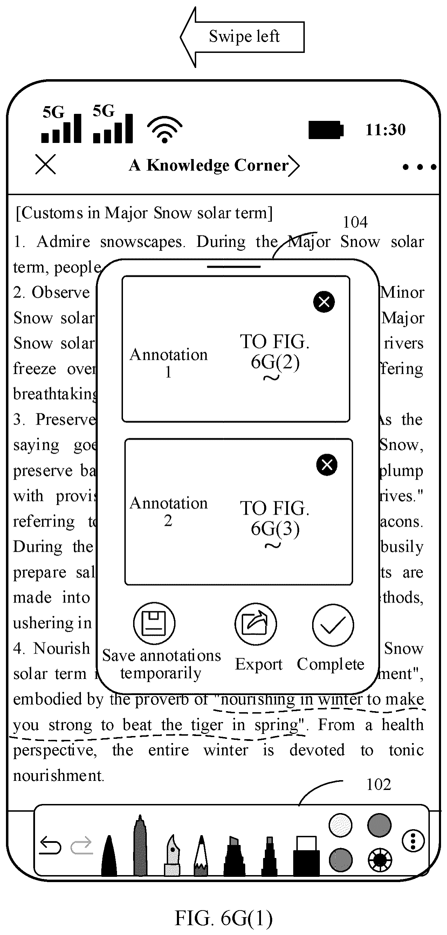

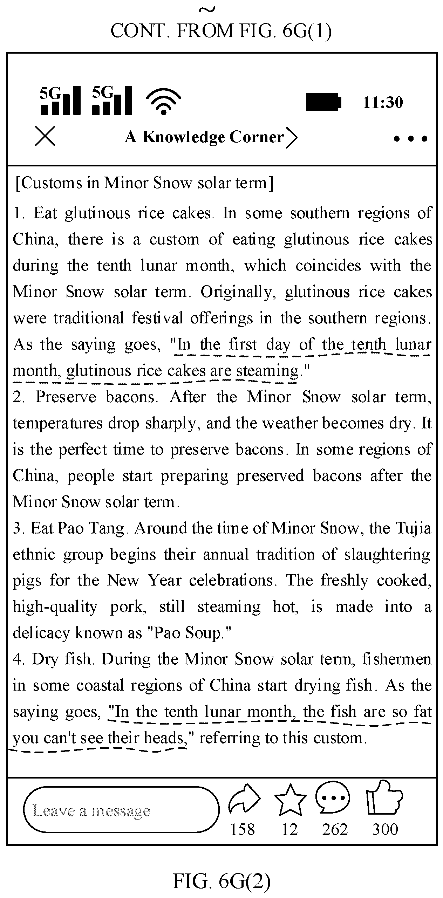

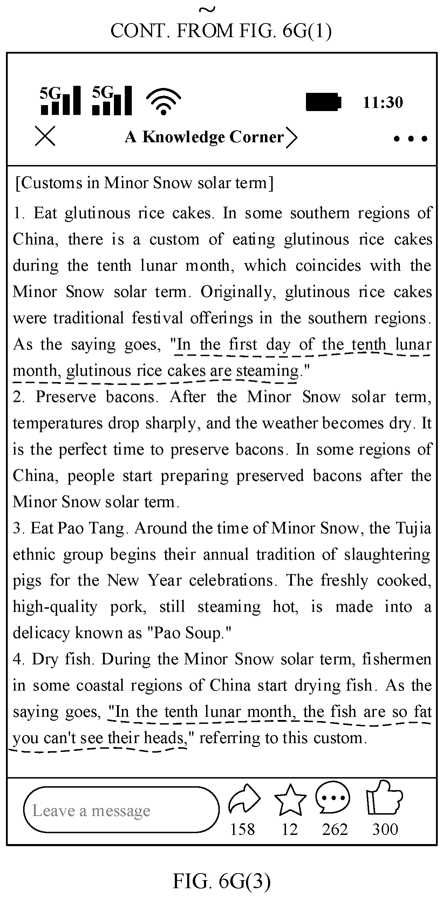

FIG. 6G(1), FIG. 6G(2), and FIG. 6G(3) are a schematic diagram of an interface on which an order of thumbnails is adjusted according to an embodiment of this application;

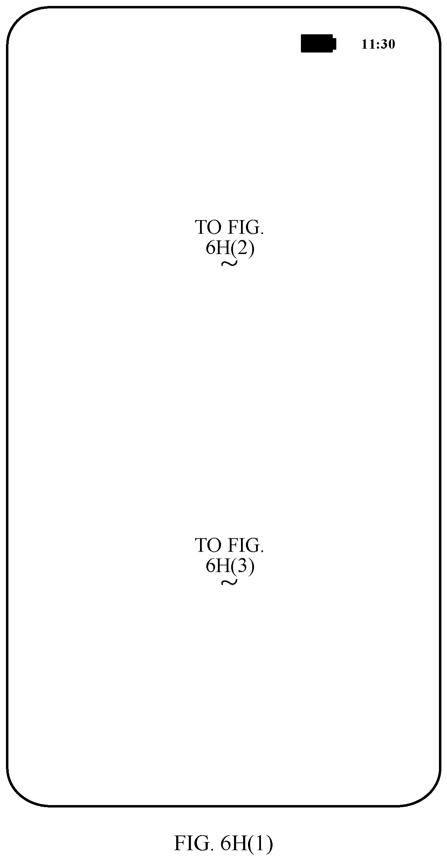

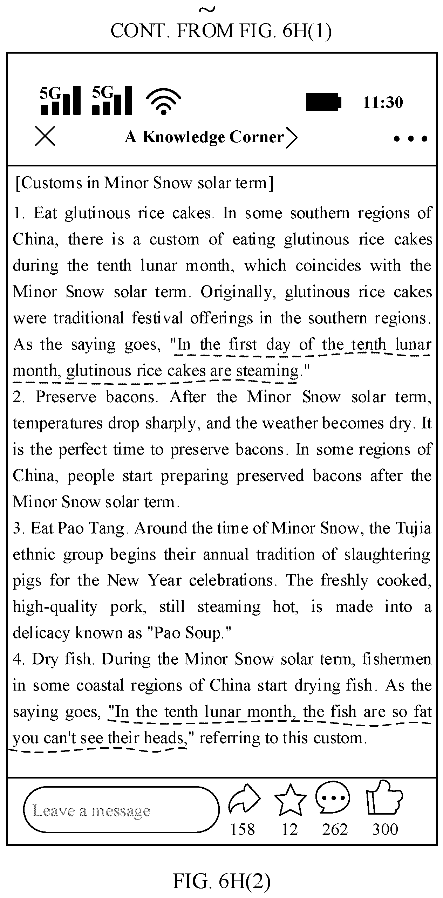

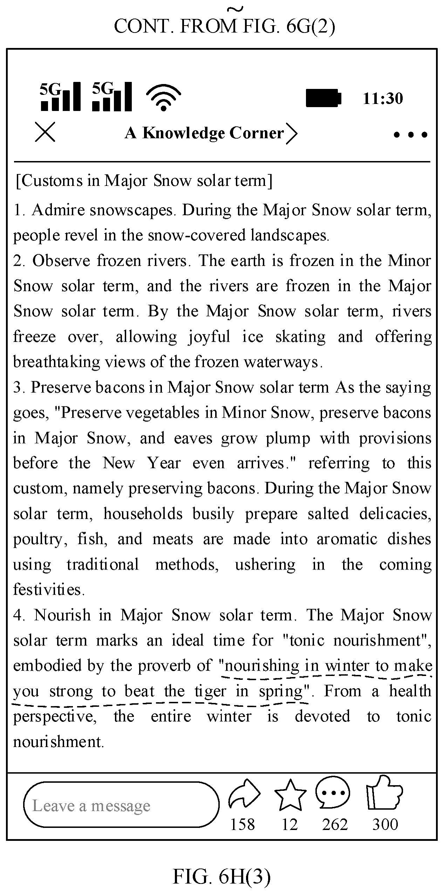

FIG. 6H(1), FIG. 6H(2), and FIG. 6H(3) are a schematic diagram of an interface on which an order of thumbnails is adjusted according to an embodiment of this application;

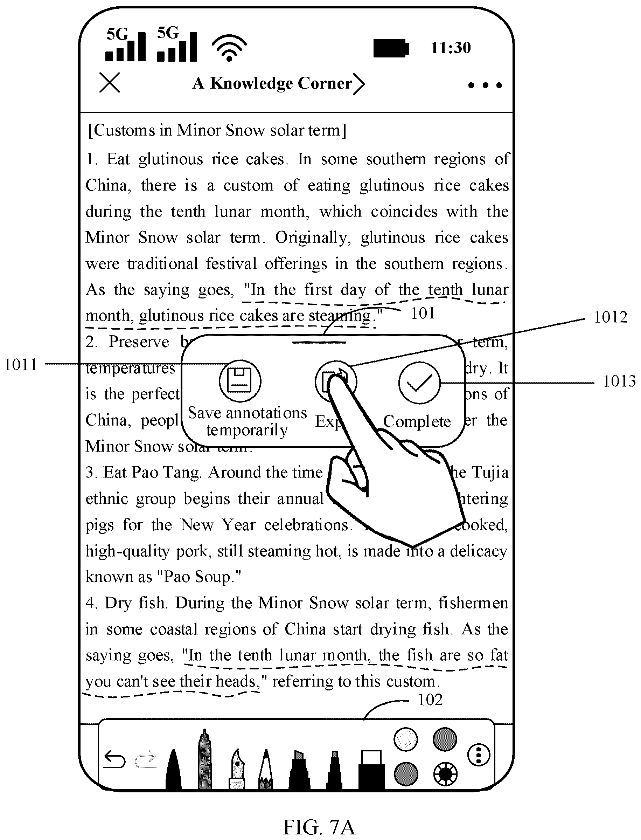

FIG. 7A is a schematic diagram of an interface on which an annotation is saved according to an embodiment of this application;

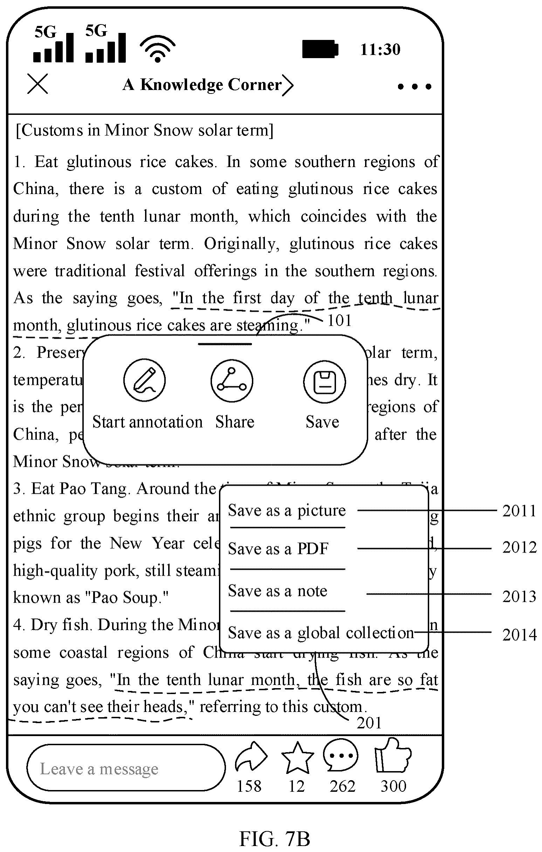

FIG. 7B is a schematic diagram of an interface on which an annotation is saved according to an embodiment of this application;

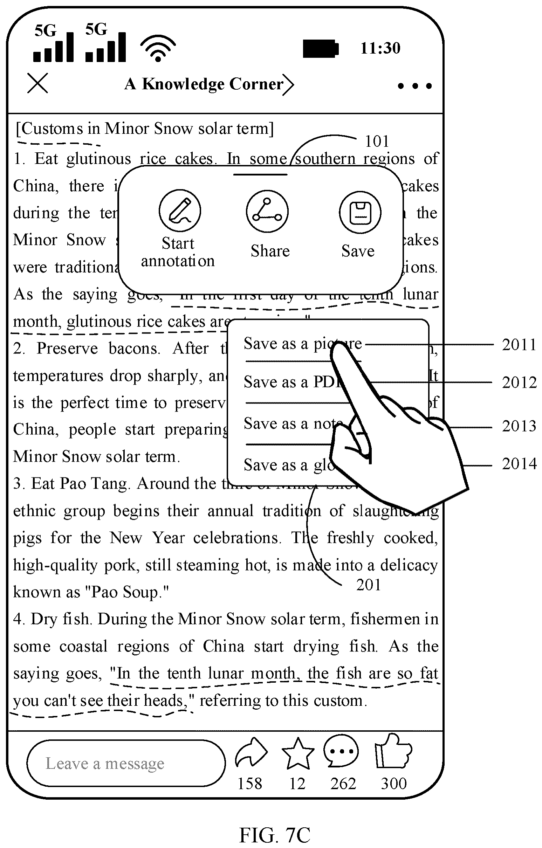

FIG. 7C is a schematic diagram of an interface on which an annotation is saved according to an embodiment of this application;

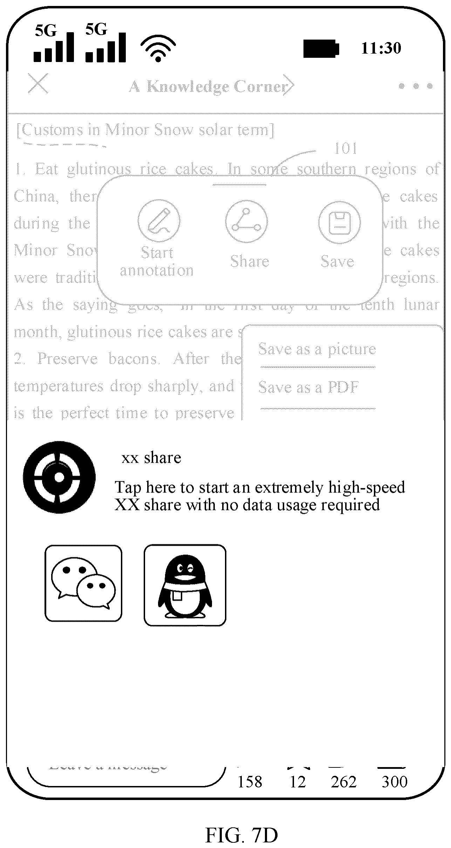

FIG. 7D is a schematic diagram of an interface on which an annotation is saved according to an embodiment of this application;

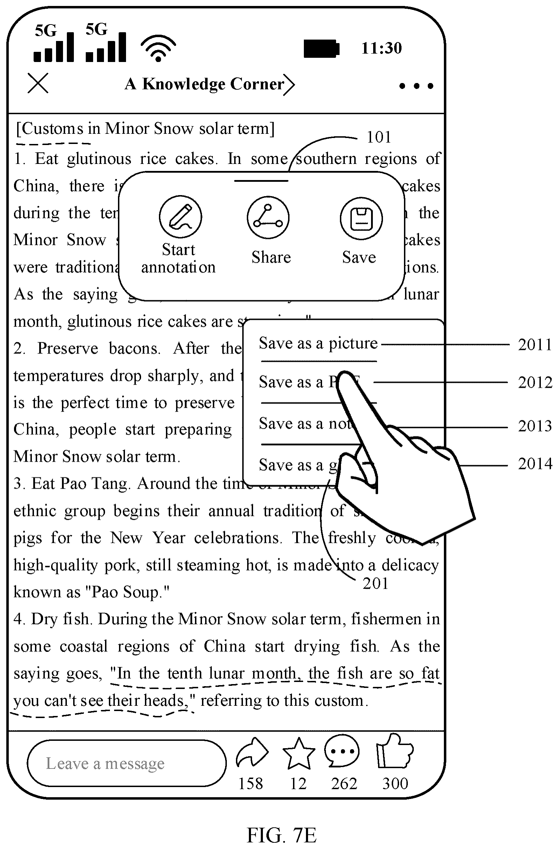

FIG. 7E is a schematic diagram of an interface on which an annotation is saved according to an embodiment of this application;

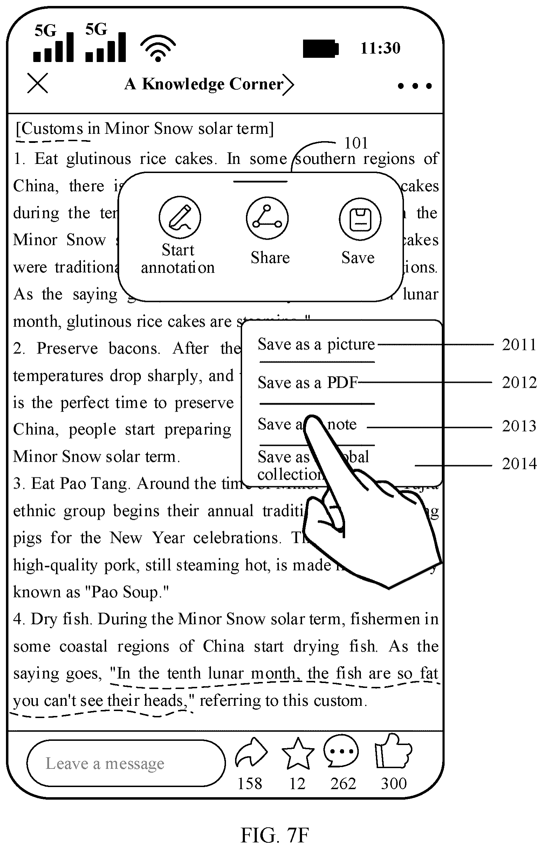

FIG. 7F is a schematic diagram of an interface on which an annotation is saved according to an embodiment of this application;

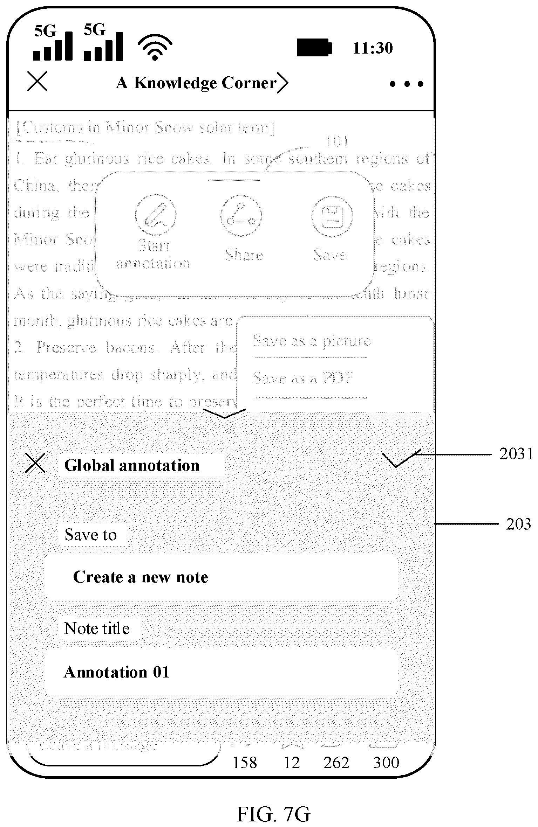

FIG. 7G is a schematic diagram of an interface on which an annotation is saved according to an embodiment of this application;

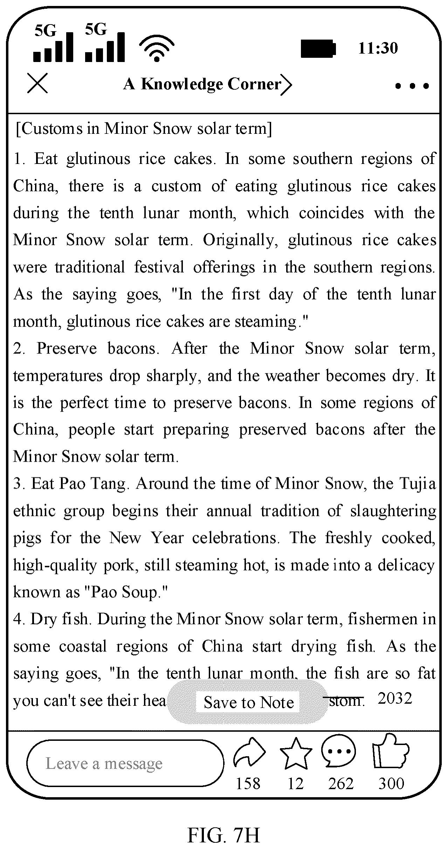

FIG. 7H is a schematic diagram of an interface on which an annotation is saved according to an embodiment of this application;

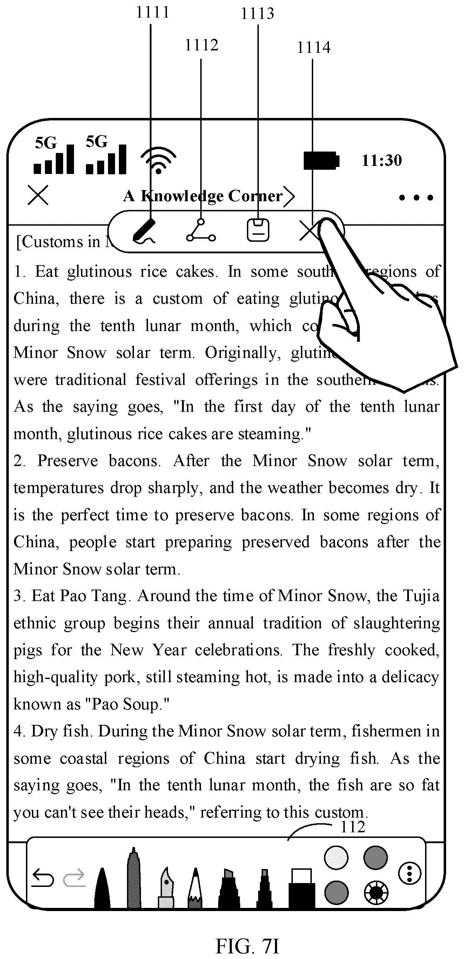

FIG. 7I is a schematic diagram of an interface on which an annotation is saved according to an embodiment of this application;

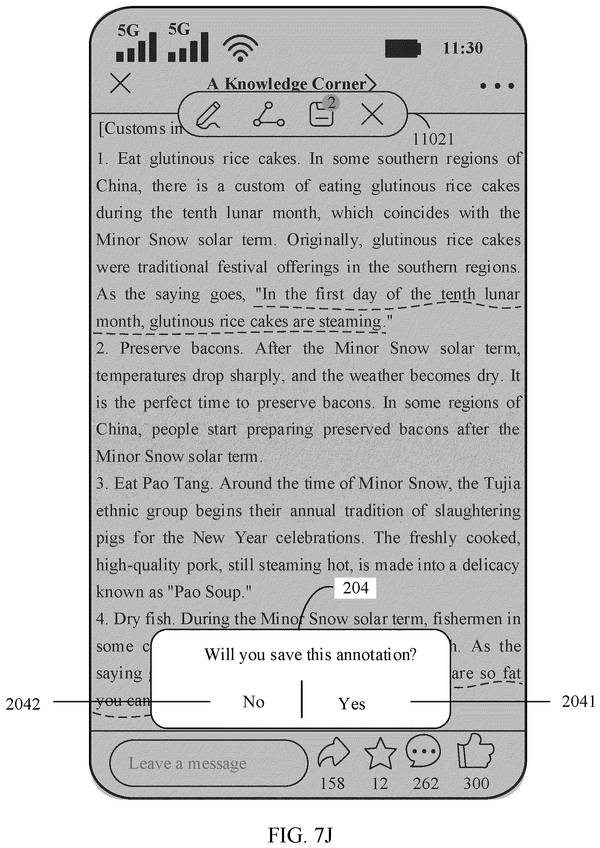

FIG. 7J is a schematic diagram of an interface on which an annotation is saved according to an embodiment of this application;

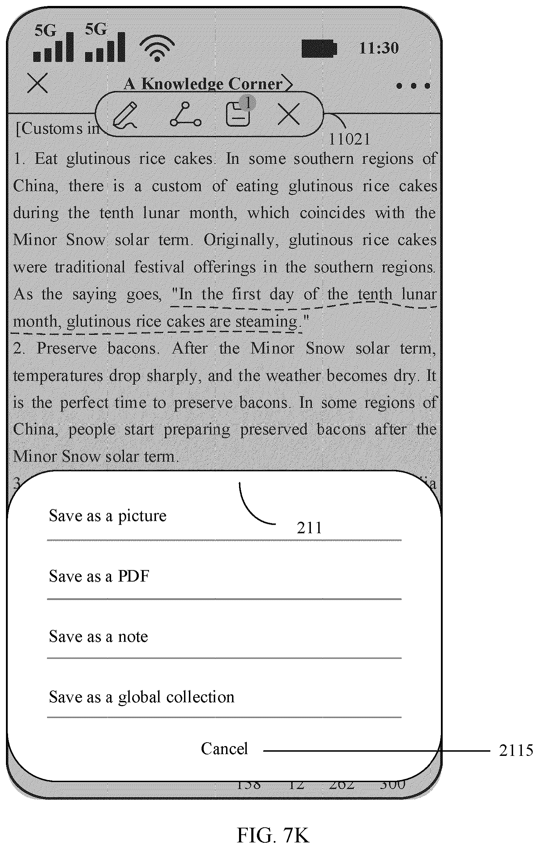

FIG. 7K is a schematic diagram of an interface on which an annotation is saved according to an embodiment of this application;

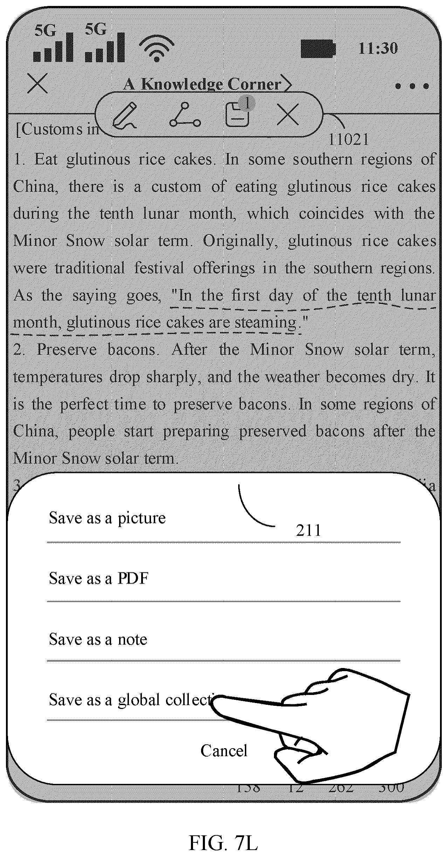

FIG. 7L is a schematic diagram of an interface on which an annotation is saved according to an embodiment of this application;

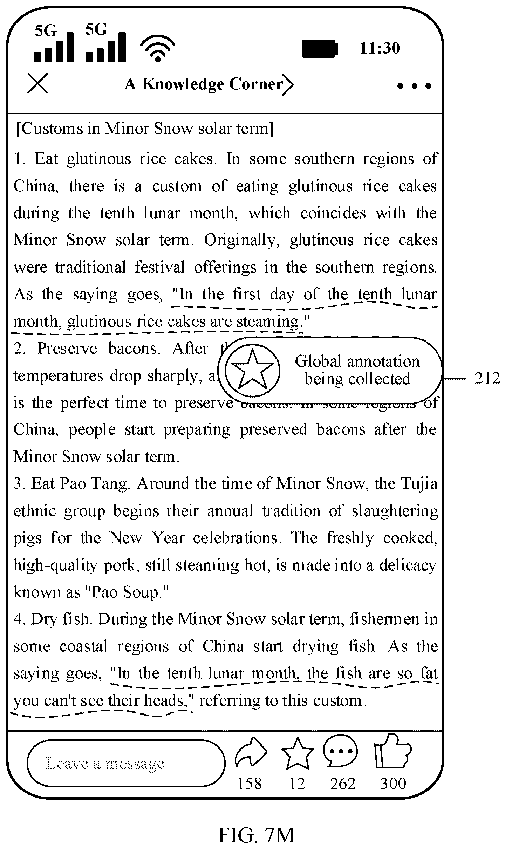

FIG. 7M is a schematic diagram of an interface on which an annotation is saved according to an embodiment of this application;

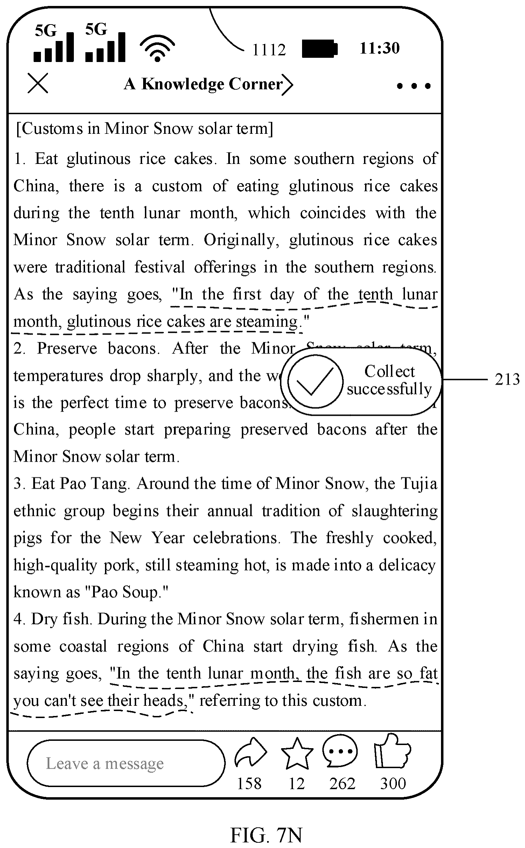

FIG. 7N is a schematic diagram of an interface on which an annotation is saved according to an embodiment of this application;

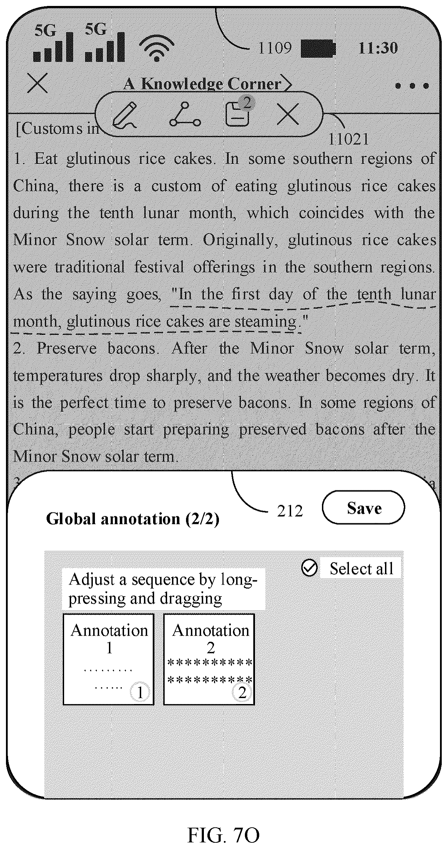

FIG. 7O is a schematic diagram of an interface on which an annotation is saved according to an embodiment of this application;

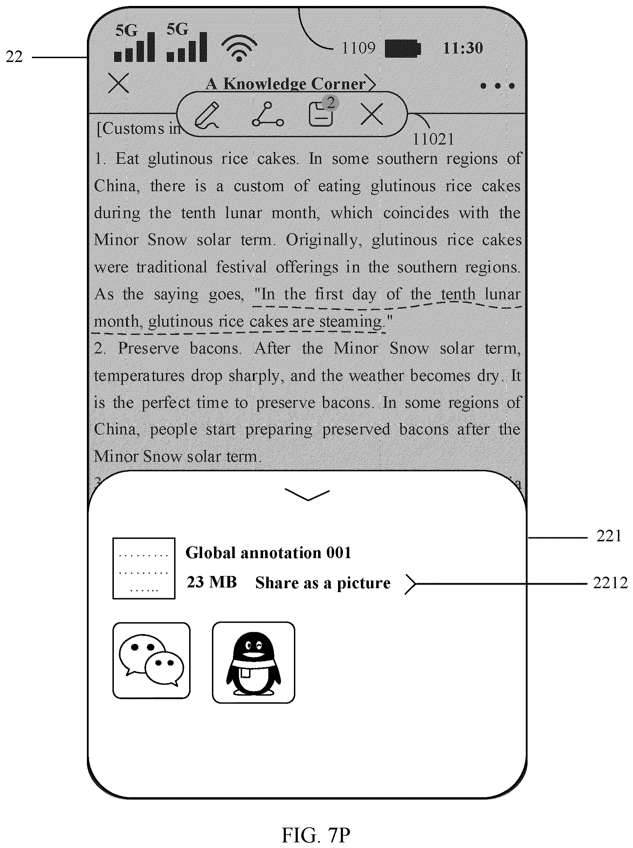

FIG. 7P is a schematic diagram of an interface on which an annotation is saved according to an embodiment of this application;

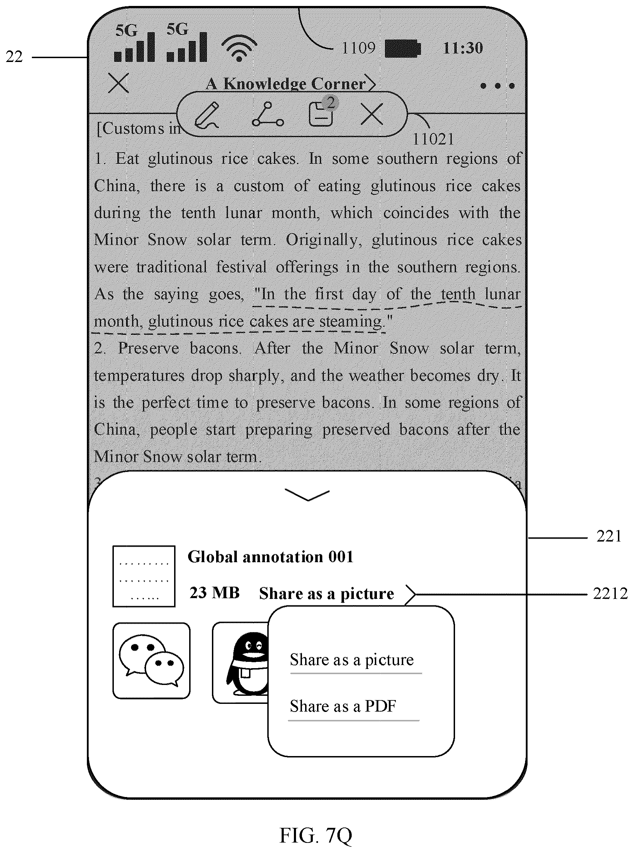

FIG. 7Q is a schematic diagram of an interface on which an annotation is saved according to an embodiment of this application;

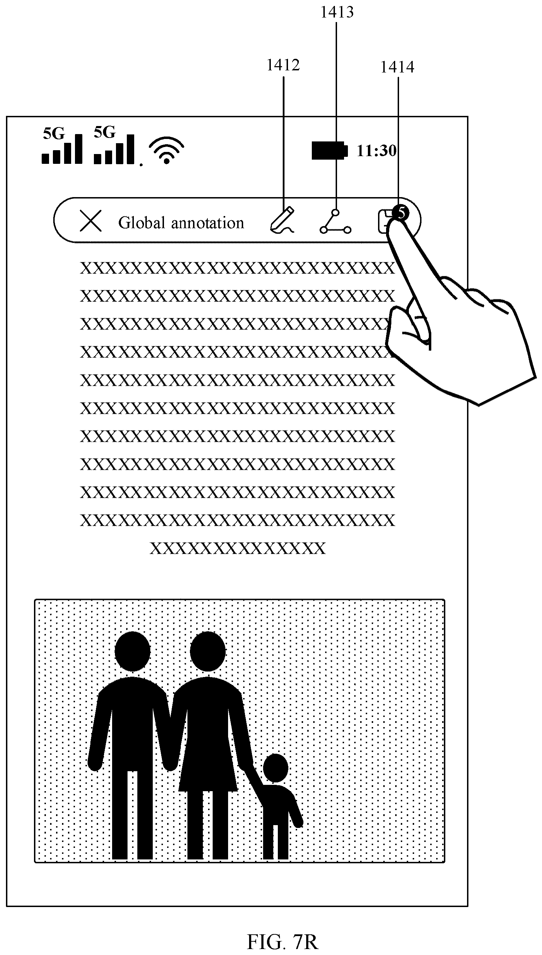

FIG. 7R is a schematic diagram of an interface on which an annotation is saved according to an embodiment of this application;

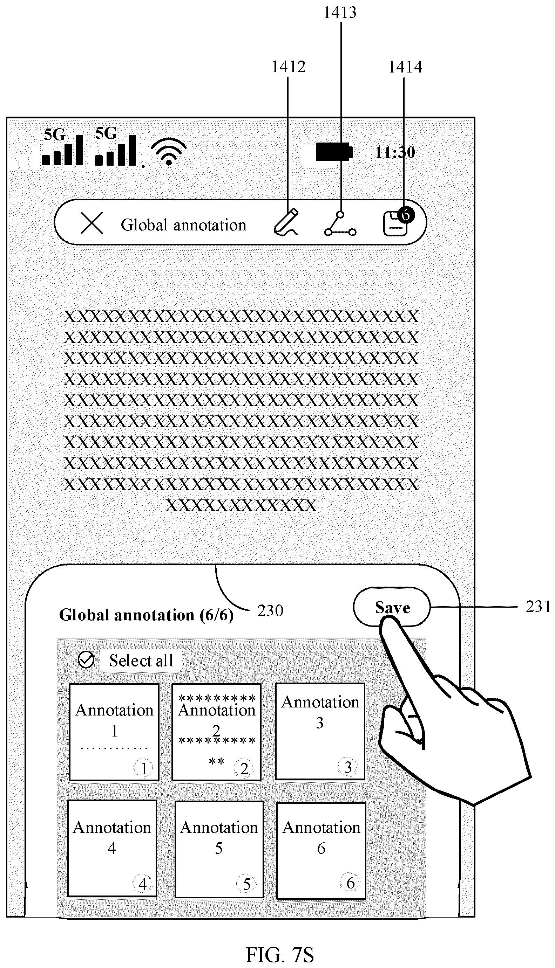

FIG. 7S is a schematic diagram of an interface on which an annotation is saved according to an embodiment of this application;

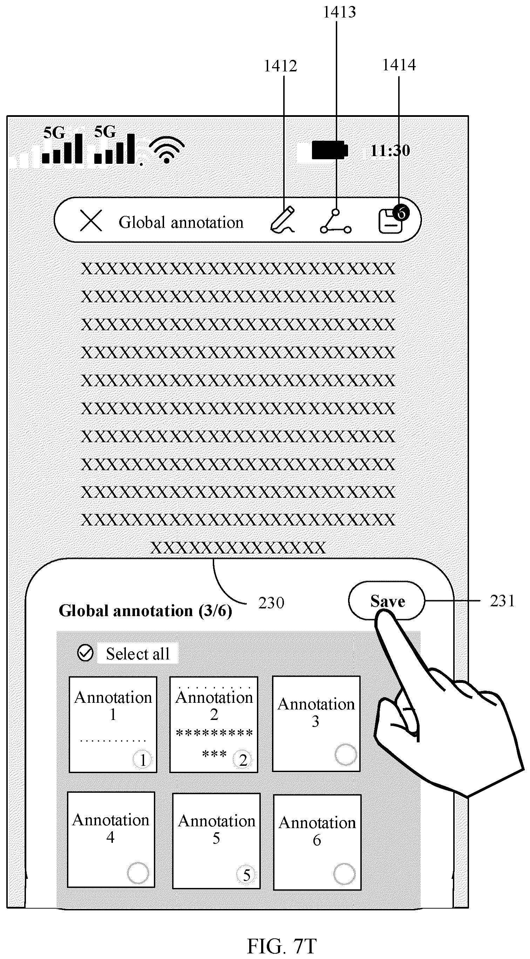

FIG. 7T is a schematic diagram of an interface on which an annotation is saved according to an embodiment of this application;

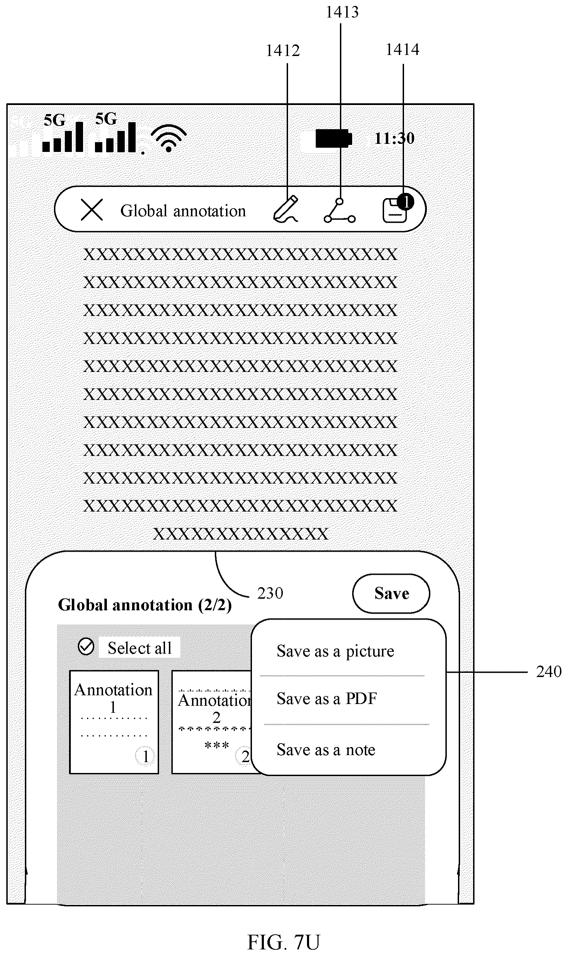

FIG. 7U is a schematic diagram of an interface on which an annotation is saved according to an embodiment of this application;

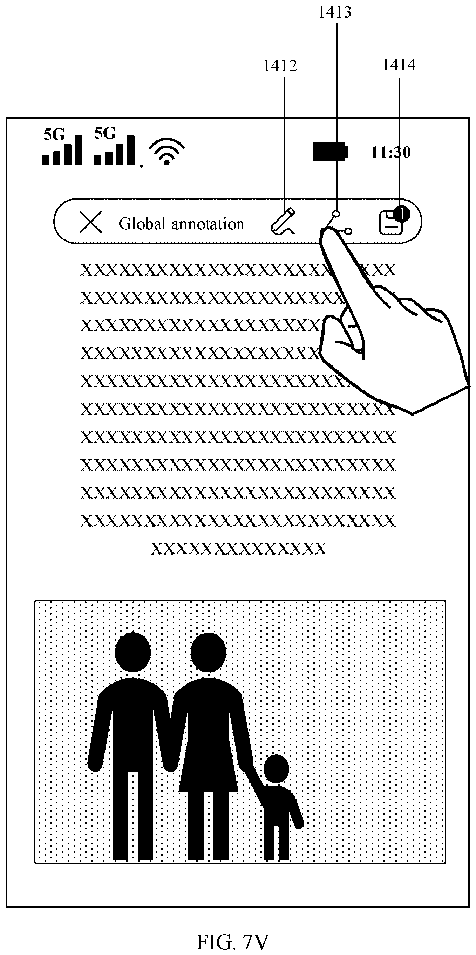

FIG. 7V is a schematic diagram of an interface on which an annotation is saved according to an embodiment of this application;

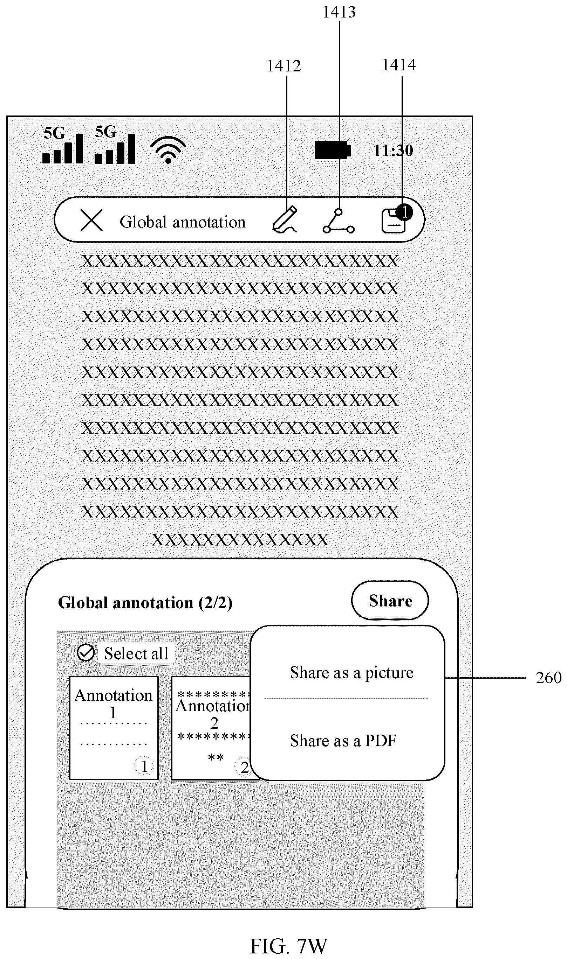

FIG. 7W is a schematic diagram of an interface on which an annotation is saved according to an embodiment of this application;

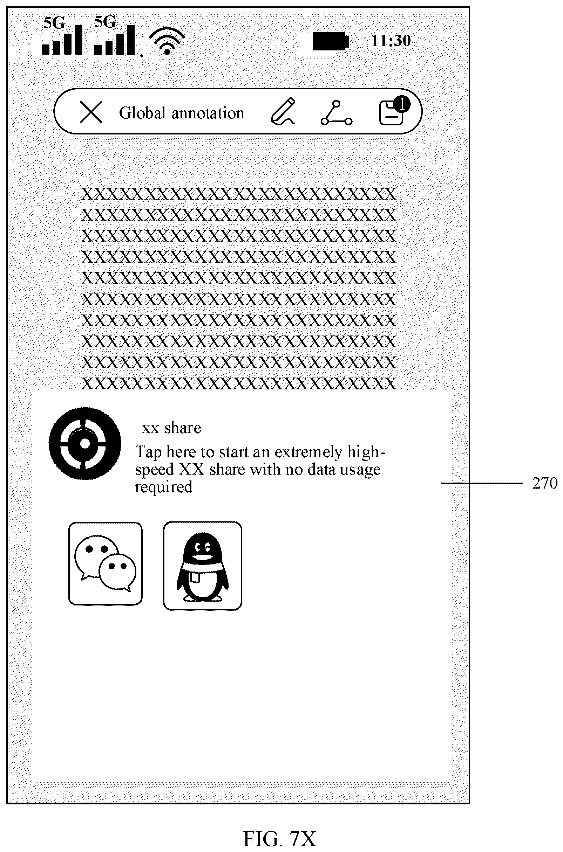

FIG. 7X is a schematic diagram of an interface on which an annotation is saved according to an embodiment of this application;

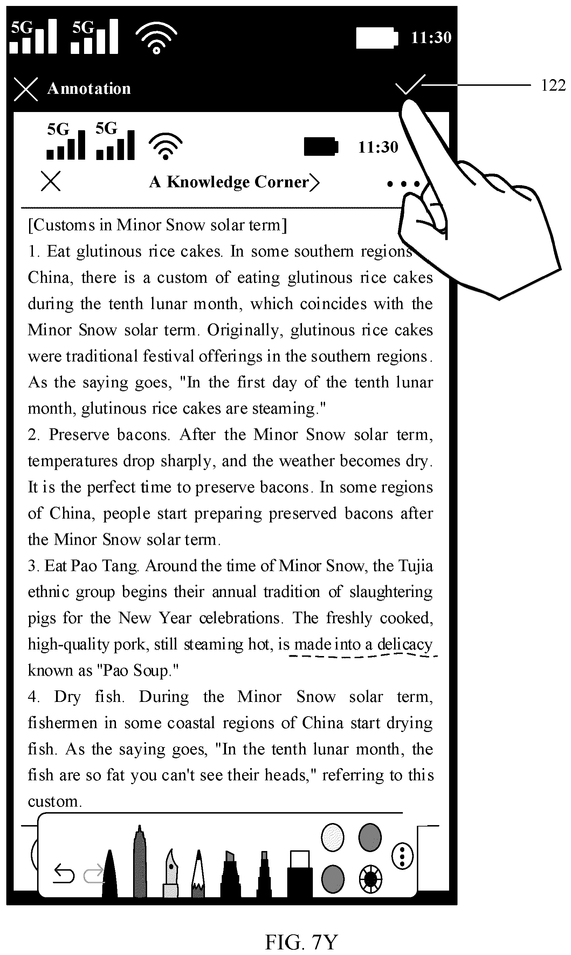

FIG. 7Y is a schematic diagram of an interface on which an annotation is saved according to an embodiment of this application;

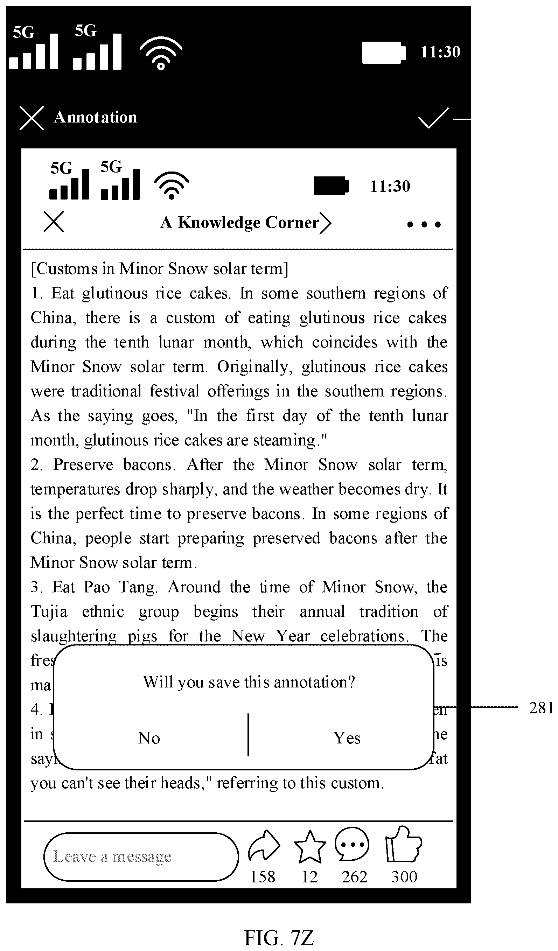

FIG. 7Z is a schematic diagram of an interface on which an annotation is saved according to an embodiment of this application;

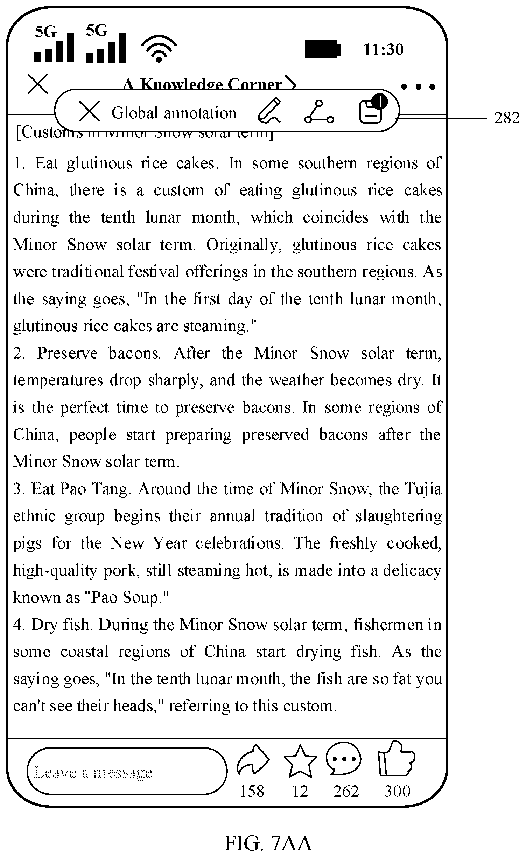

FIG. 7AA is a schematic diagram of an interface on which an annotation is saved according to an embodiment of this application;

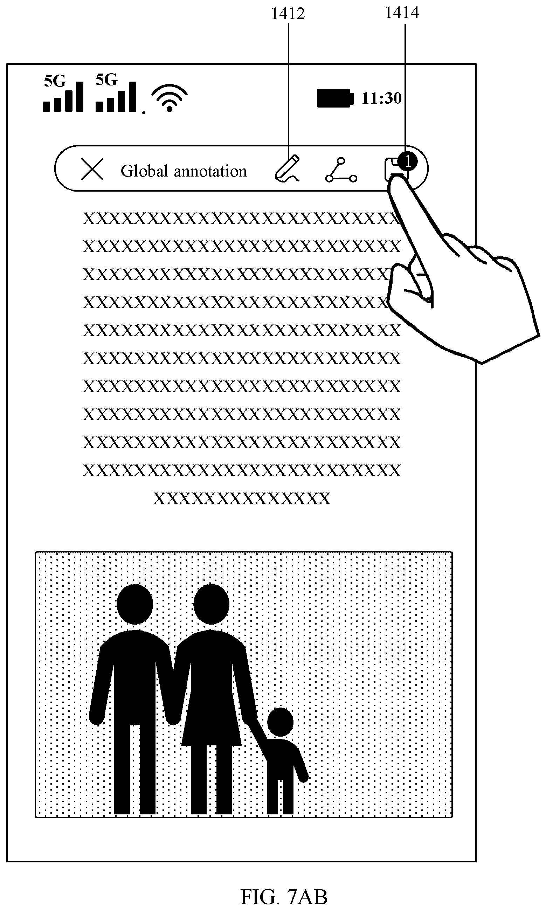

FIG. 7AB is a schematic diagram of an interface on which an annotation is saved according to an embodiment of this application;

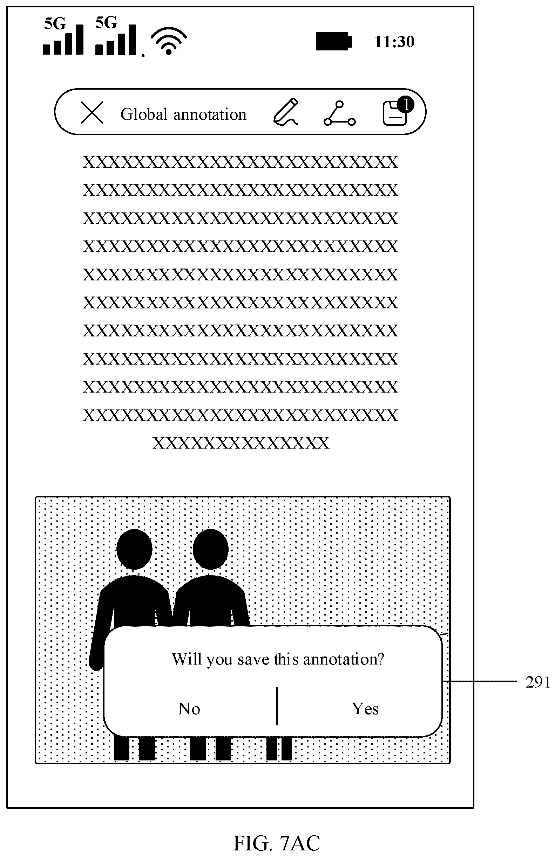

FIG. 7AC is a schematic diagram of an interface on which an annotation is saved according to an embodiment of this application;

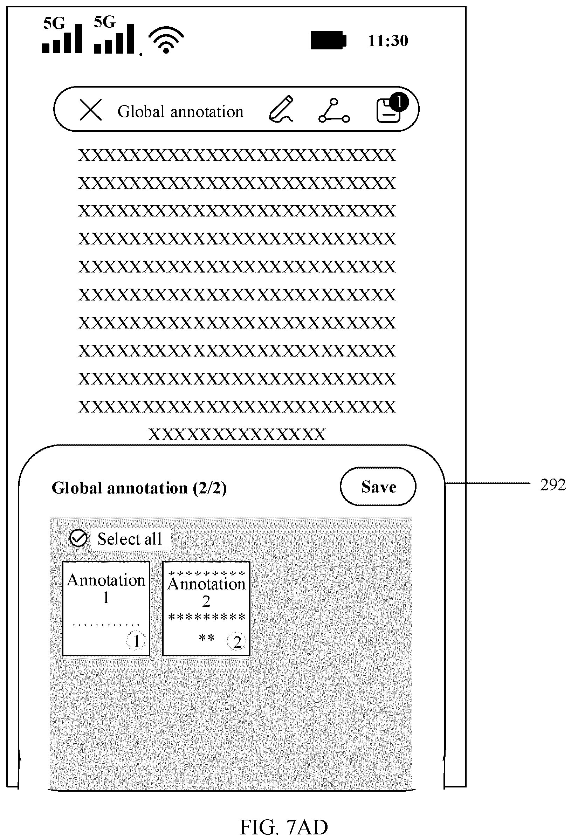

FIG. 7AD is a schematic diagram of an interface on which an annotation is saved according to an embodiment of this application;

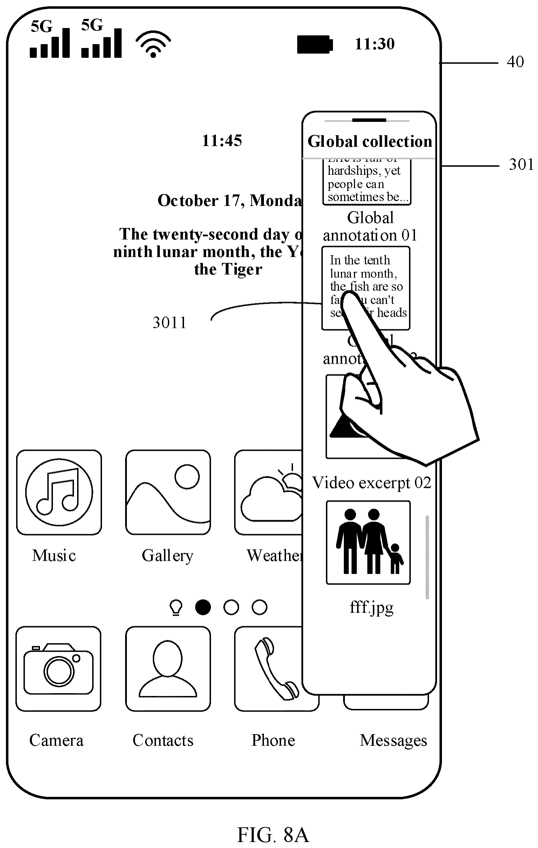

FIG. 8A is a schematic diagram of an interface on which an annotation is added according to an embodiment of this application;

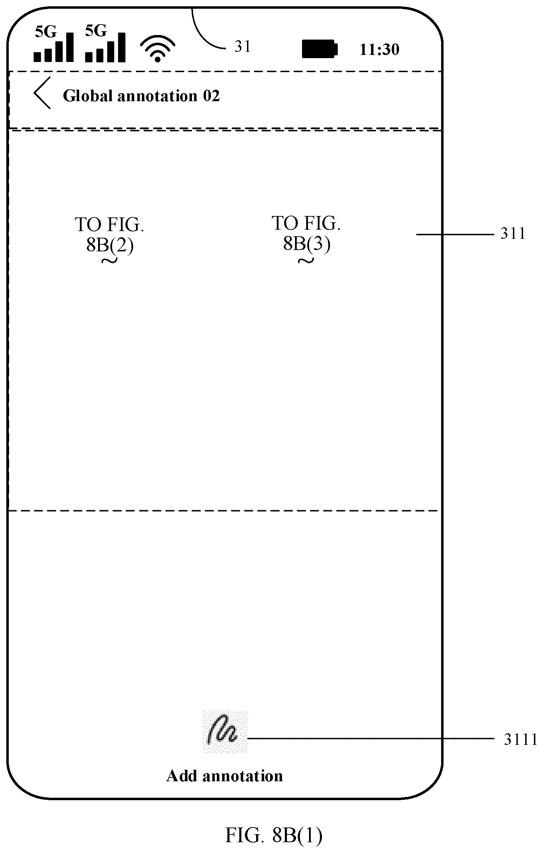

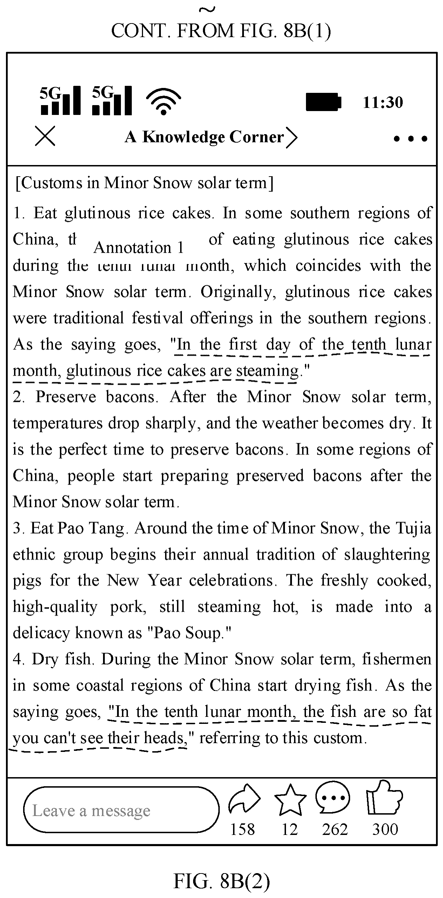

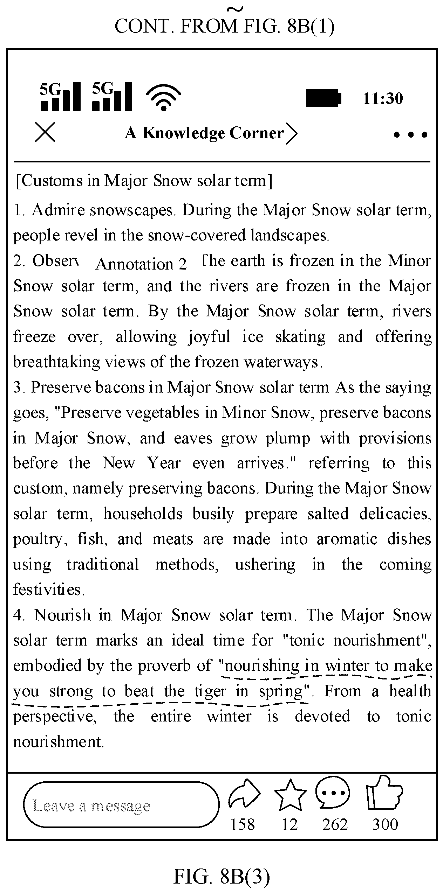

FIG. 8B(1), FIG. 8B(2), and FIG. 8B(3) are a schematic diagram of an interface on which an annotation is added according to an embodiment of this application;

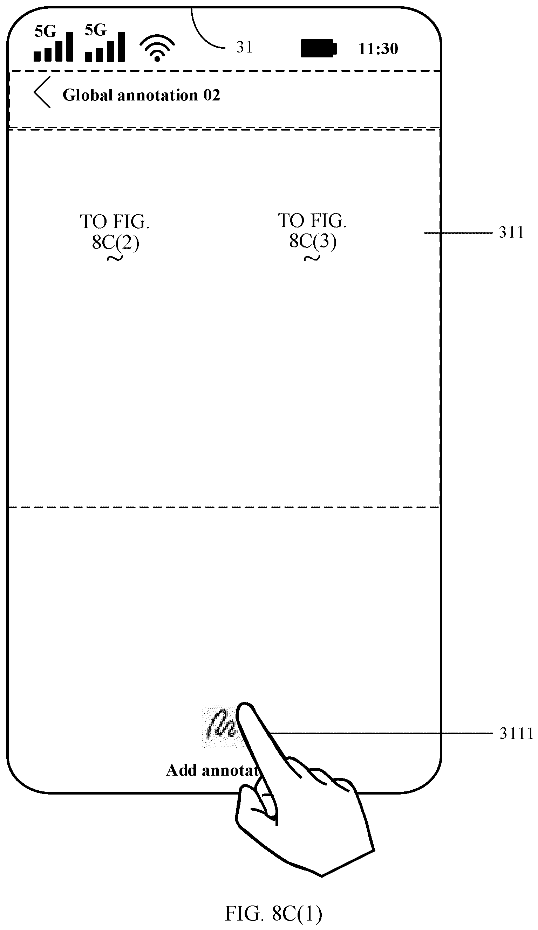

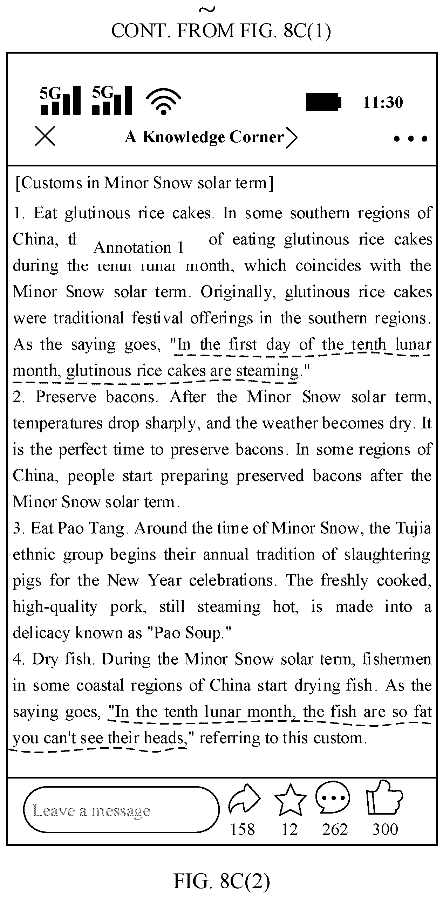

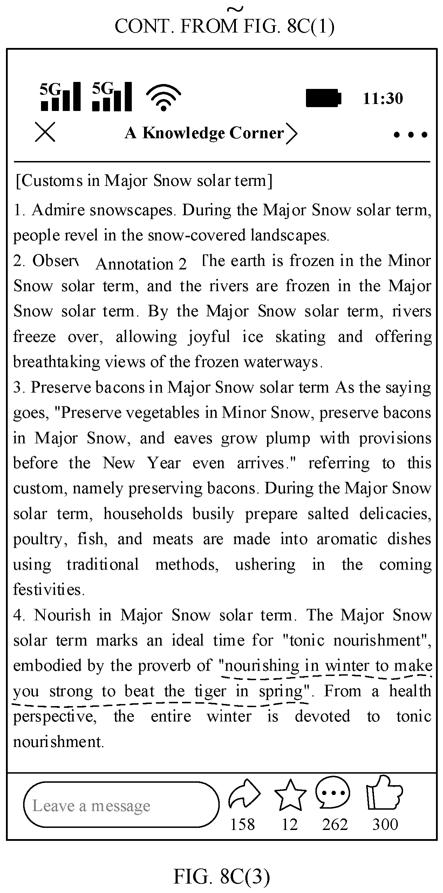

FIG. 8C(1), FIG. 8C(2), and FIG. 8C(3) are a schematic diagram of an interface on which an annotation is added according to an embodiment of this application;

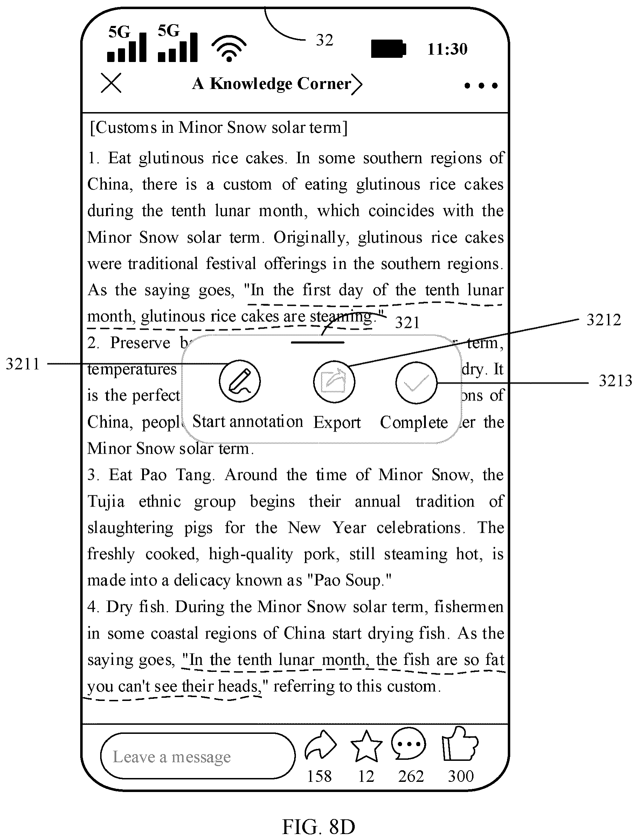

FIG. 8D is a schematic diagram of an interface on which an annotation is added according to an embodiment of this application;

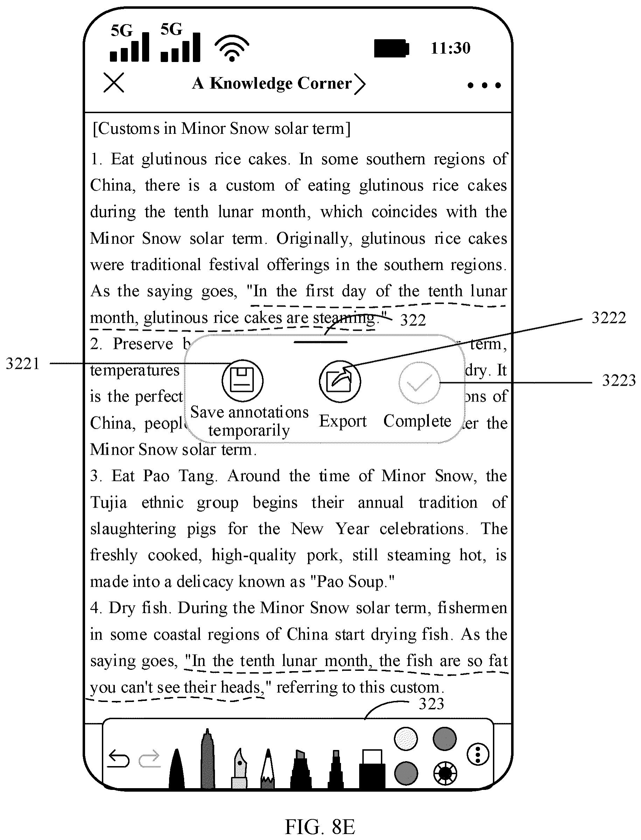

FIG. 8E is a schematic diagram of an interface on which an annotation is added according to an embodiment of this application;

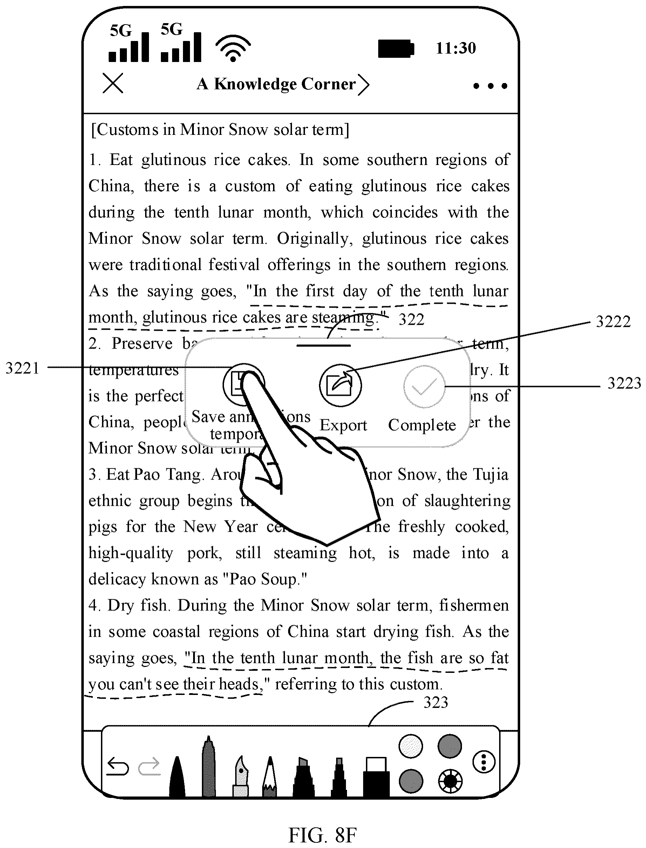

FIG. 8F is a schematic diagram of an interface on which an annotation is added according to an embodiment of this application;

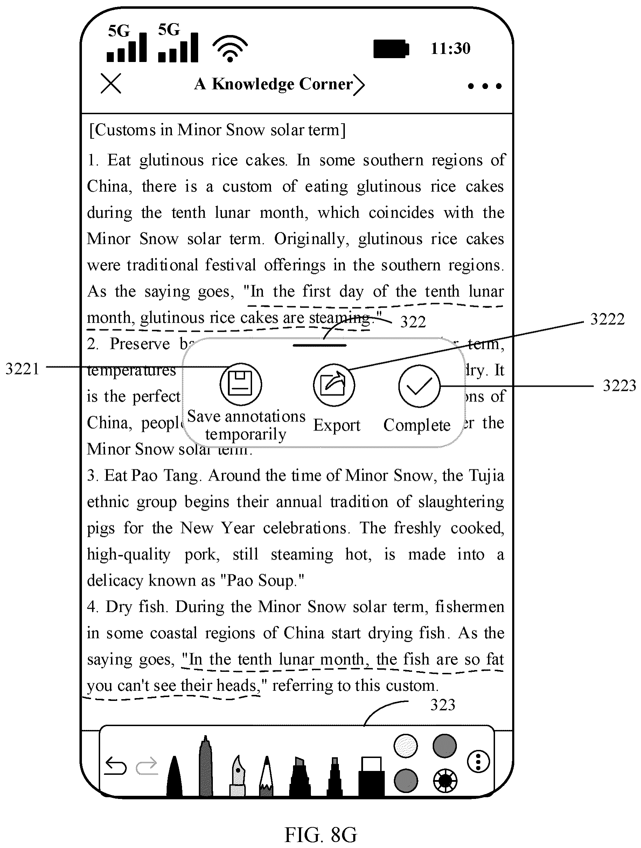

FIG. 8G is a schematic diagram of an interface on which an annotation is added according to an embodiment of this application;

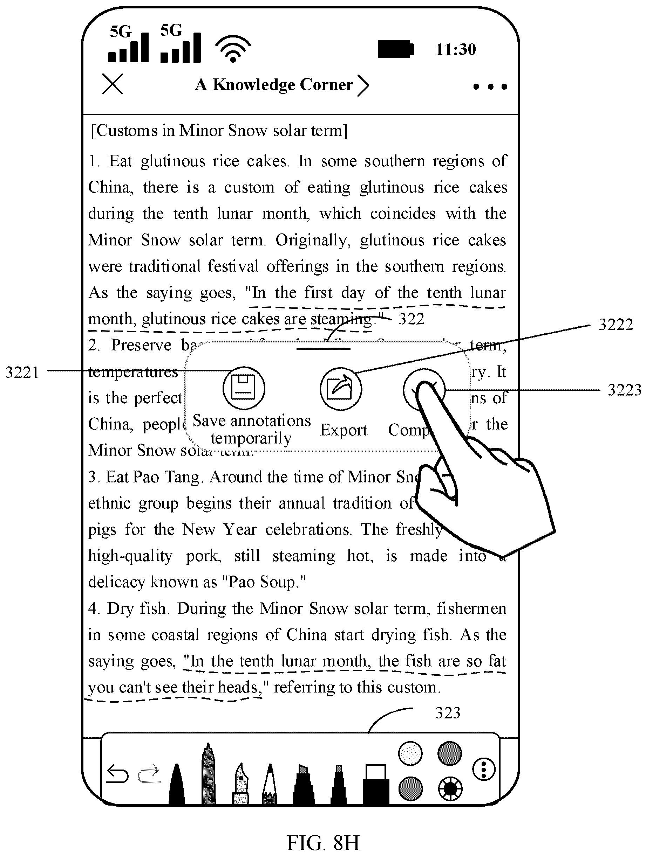

FIG. 8H is a schematic diagram of an interface on which an annotation is added according to an embodiment of this application;

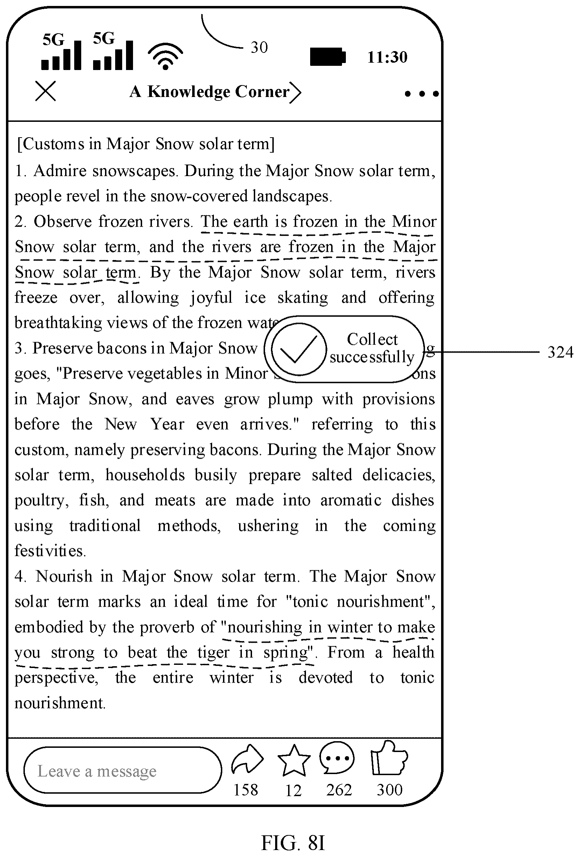

FIG. 8I is a schematic diagram of an interface on which an annotation is added according to an embodiment of this application;

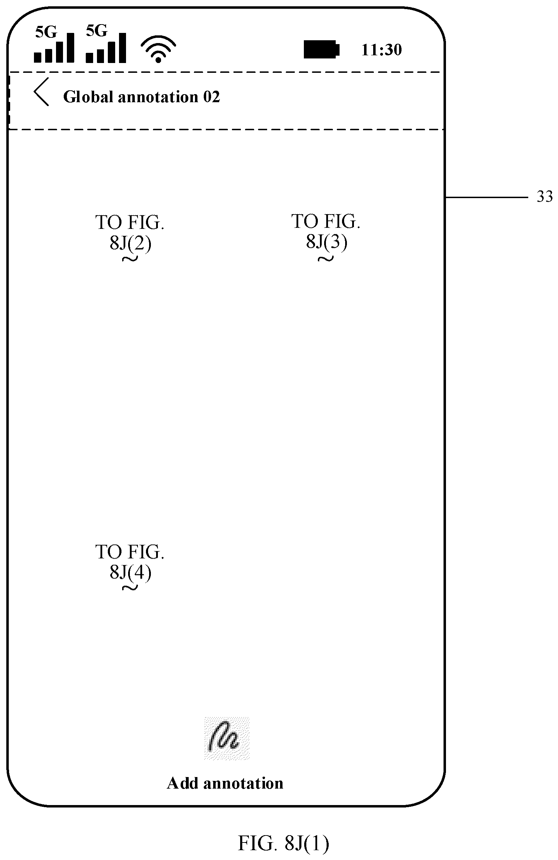

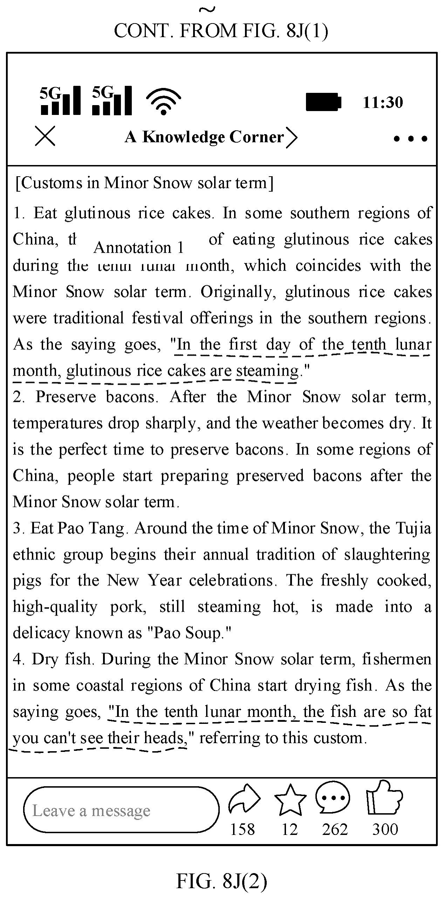

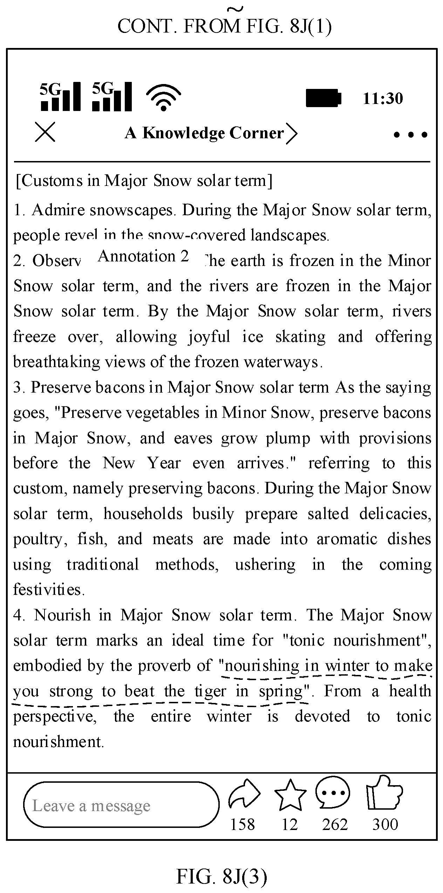

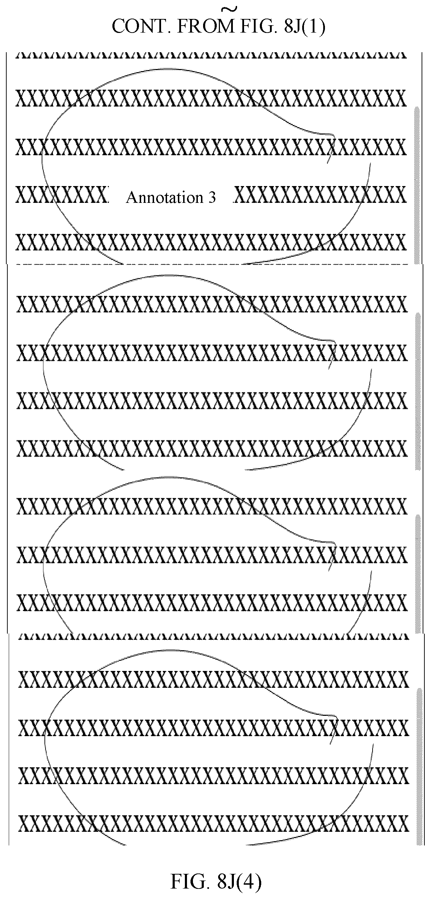

FIG. 8J(1), FIG. 8J(2), FIG. 8J(3), and FIG. 8J(4) are a schematic diagram of an interface on which an annotation is added according to an embodiment of this application;

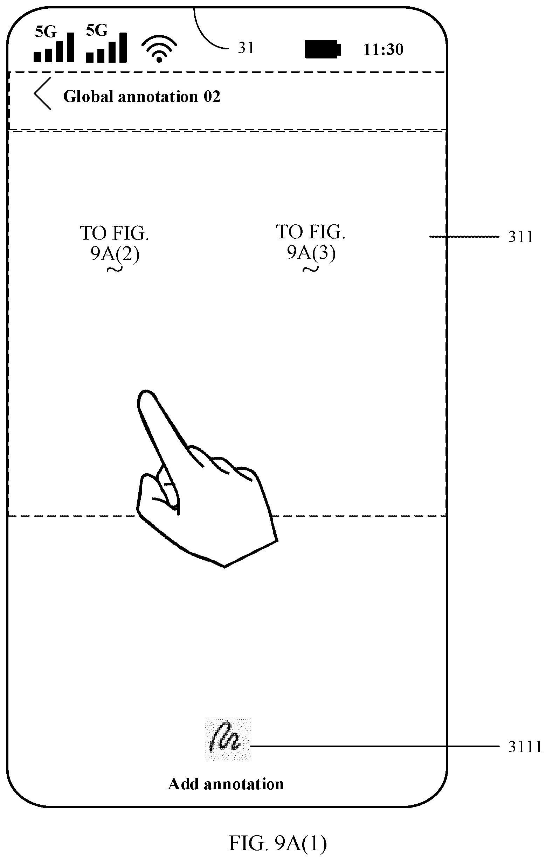

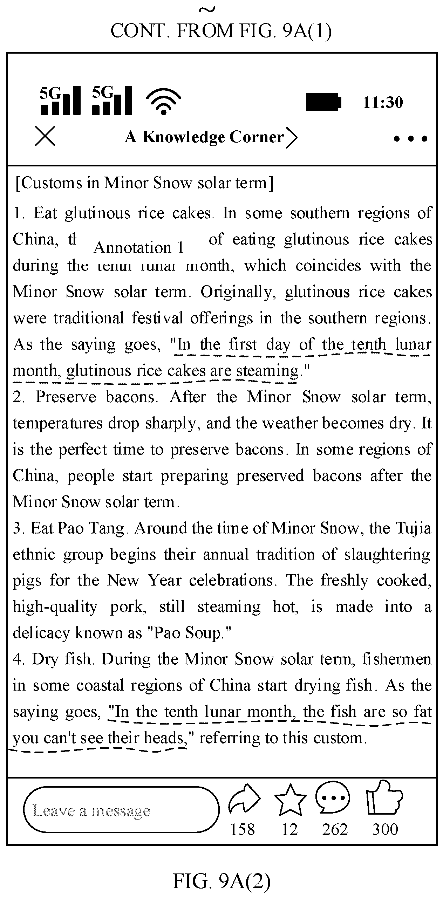

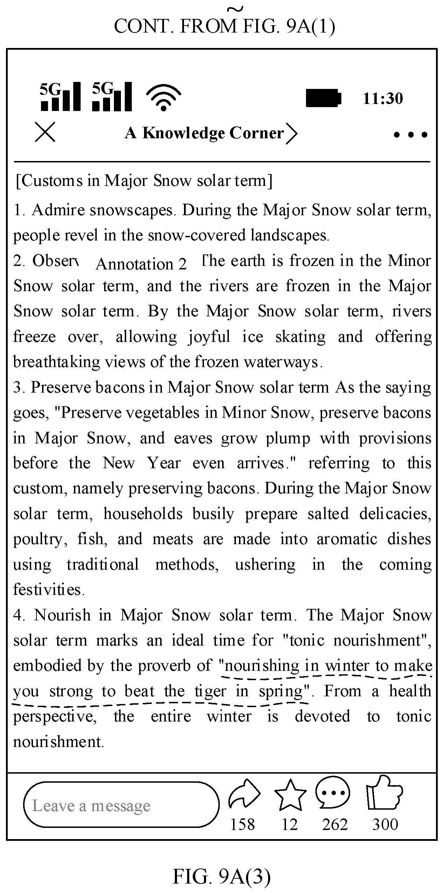

FIG. 9A(1), FIG. 9A(2), and FIG. 9A(3) are a schematic diagram of an interface on which an annotation is secondarily edited according to an embodiment of this application;

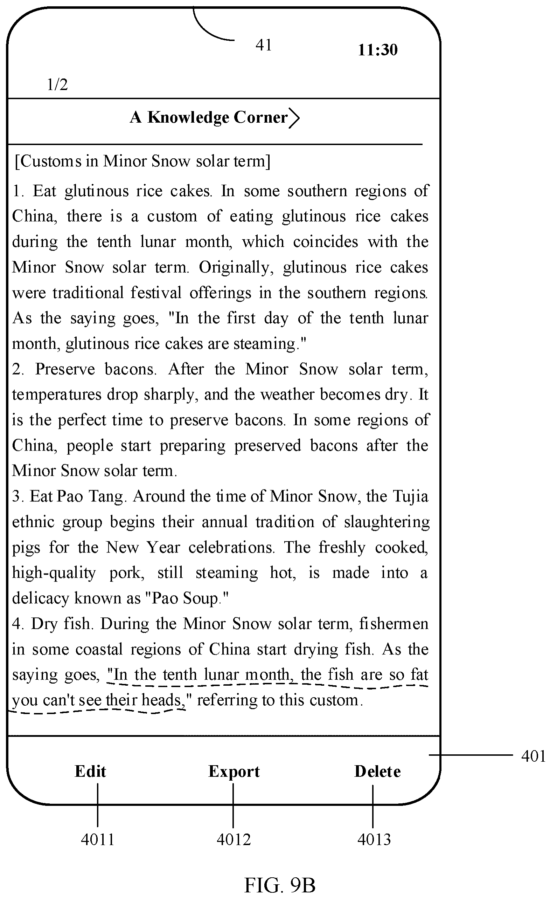

FIG. 9B is a schematic diagram of an interface on which an annotation is secondarily edited according to an embodiment of this application;

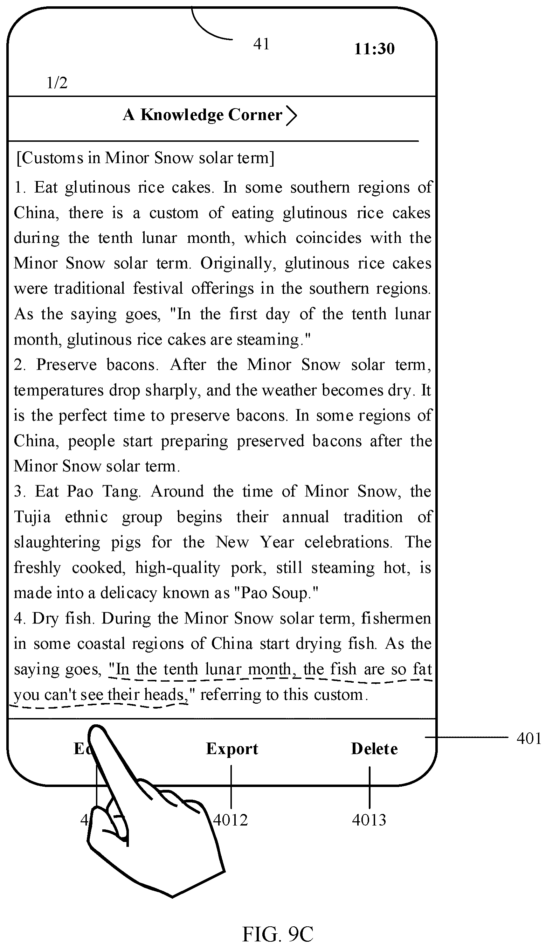

FIG. 9C is a schematic diagram of an interface on which an annotation is secondarily edited according to an embodiment of this application;

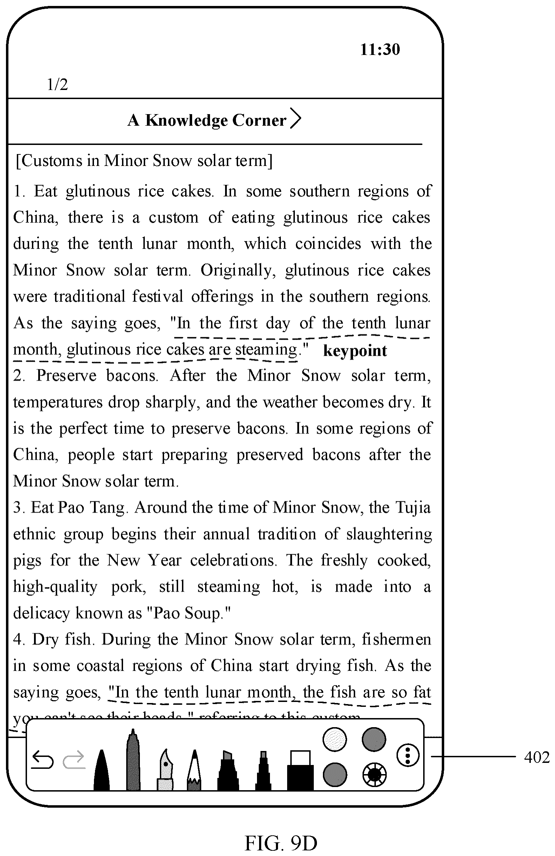

FIG. 9D is a schematic diagram of an interface on which an annotation is secondarily edited according to an embodiment of this application;

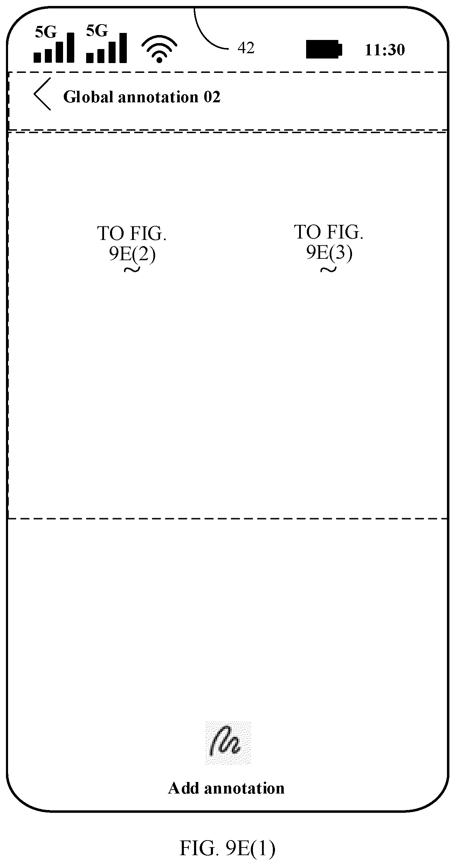

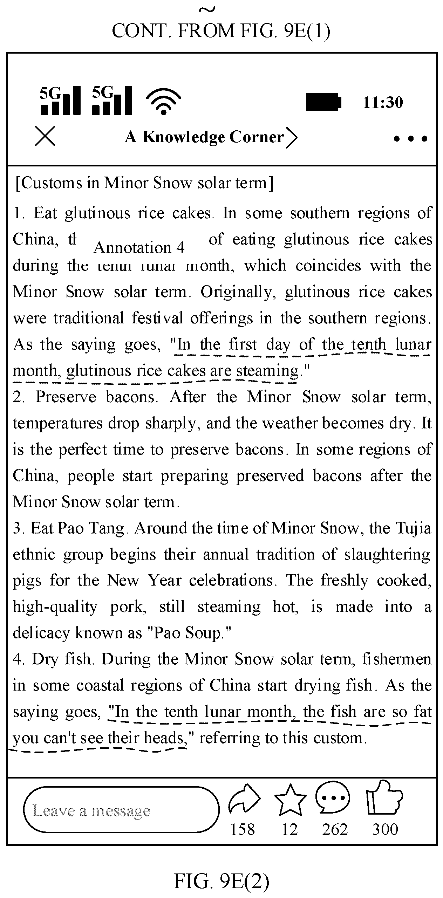

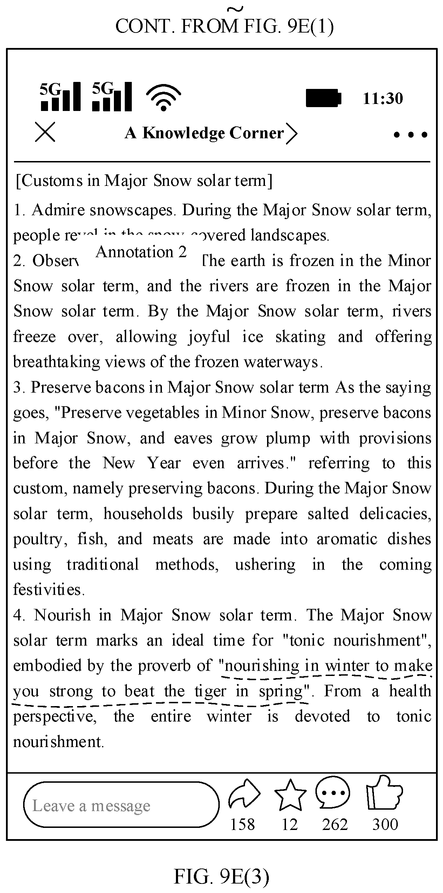

FIG. 9E(1), FIG. 9E(2), and FIG. 9E(3) are a schematic diagram of an interface on which an annotation is secondarily edited according to an embodiment of this application;

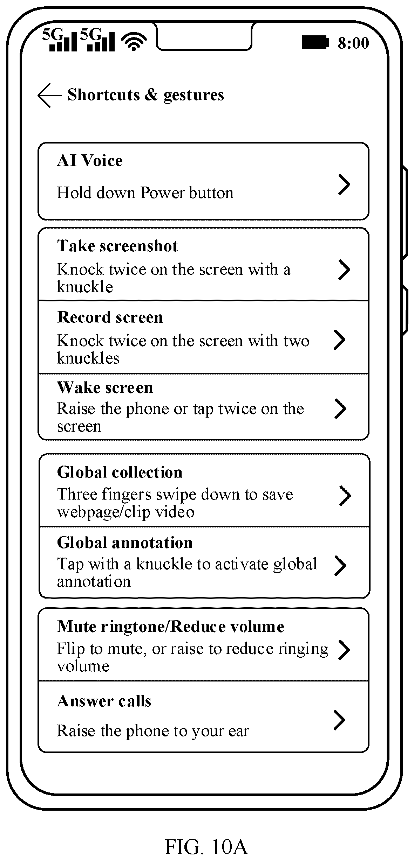

FIG. 10A is a schematic diagram of an interface on which a global annotation wakeup is set according to an embodiment of this application;

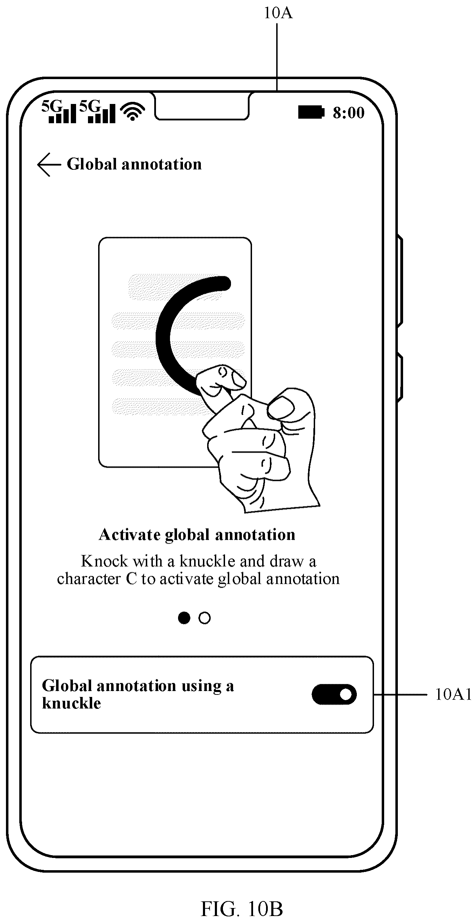

FIG. 10B is a schematic diagram of an interface on which a global annotation wakeup is set according to an embodiment of this application;

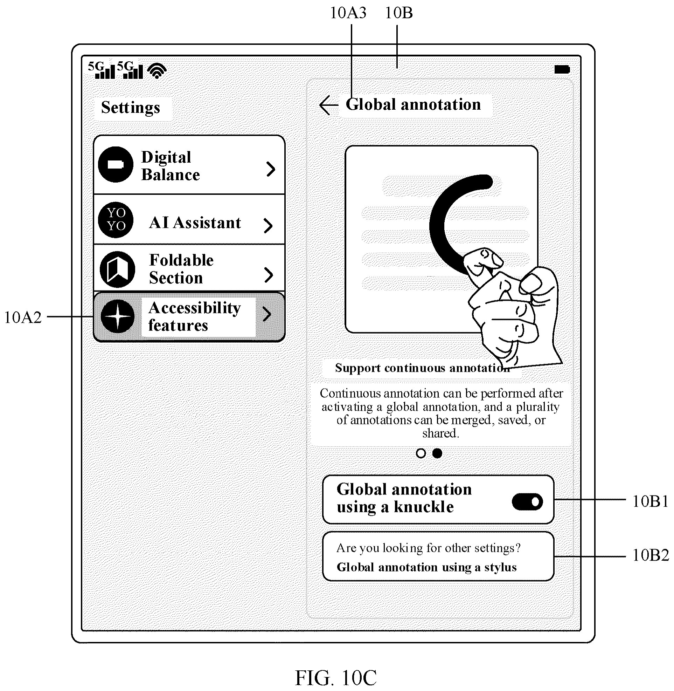

FIG. 10C is a schematic diagram of an interface on which a global annotation wakeup is set according to an embodiment of this application;

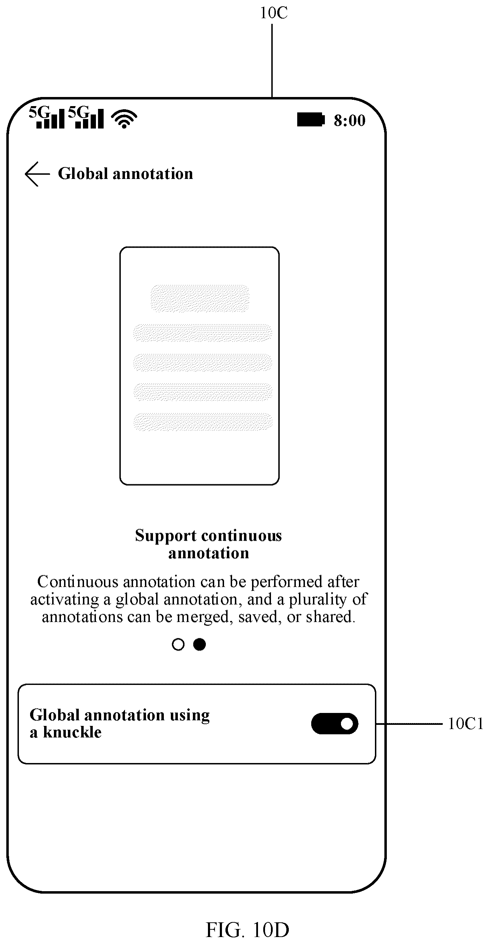

FIG. 10D is a schematic diagram of an interface on which a global annotation wakeup is set according to an embodiment of this application;

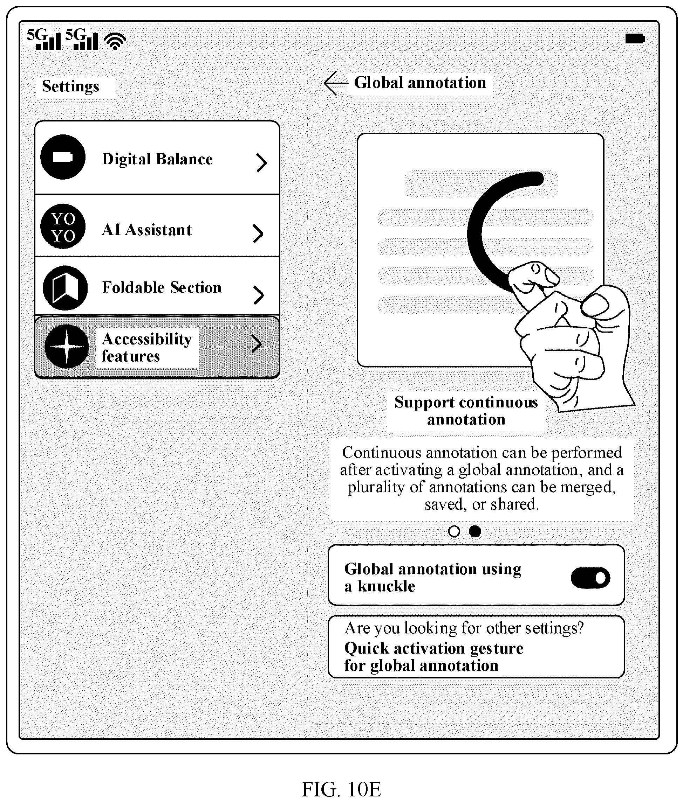

FIG. 10E is a schematic diagram of an interface on which a global annotation wakeup is set according to an embodiment of this application;

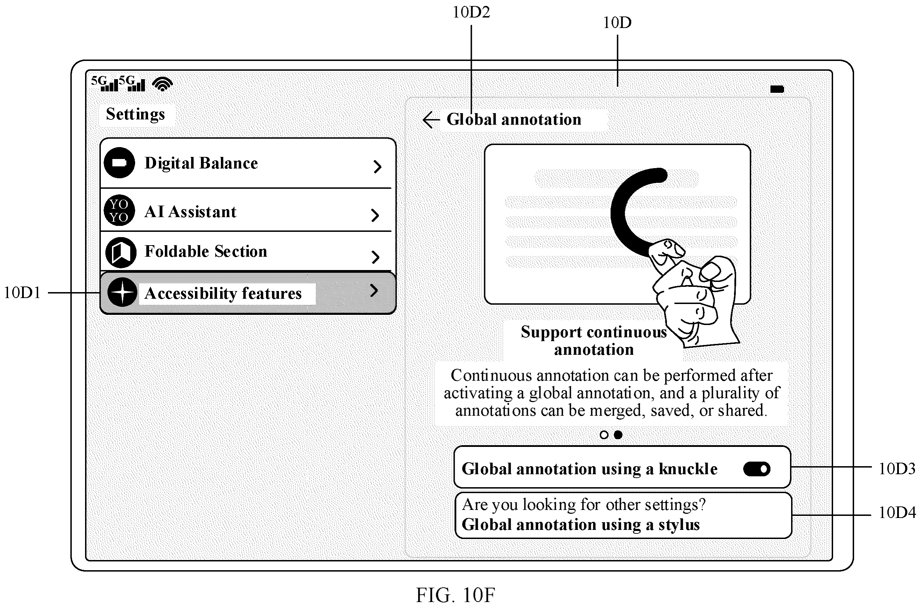

FIG. 10F is a schematic diagram of an interface on which a global annotation wakeup is set according to an embodiment of this application;

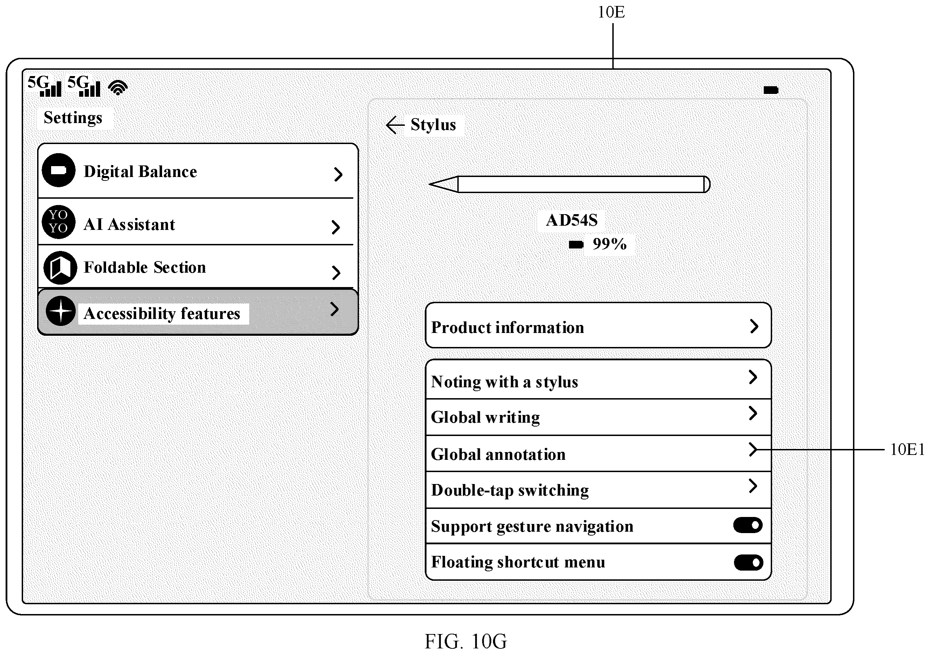

FIG. 10G is a schematic diagram of an interface on which a global annotation wakeup is set according to an embodiment of this application;

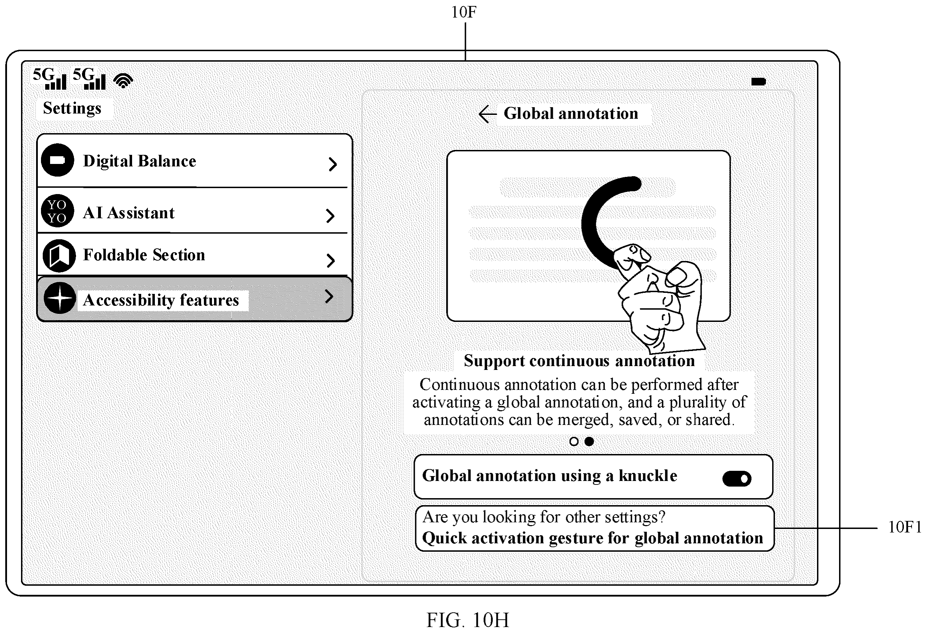

FIG. 10H is a schematic diagram of an interface on which a global annotation wakeup is set according to an embodiment of this application;

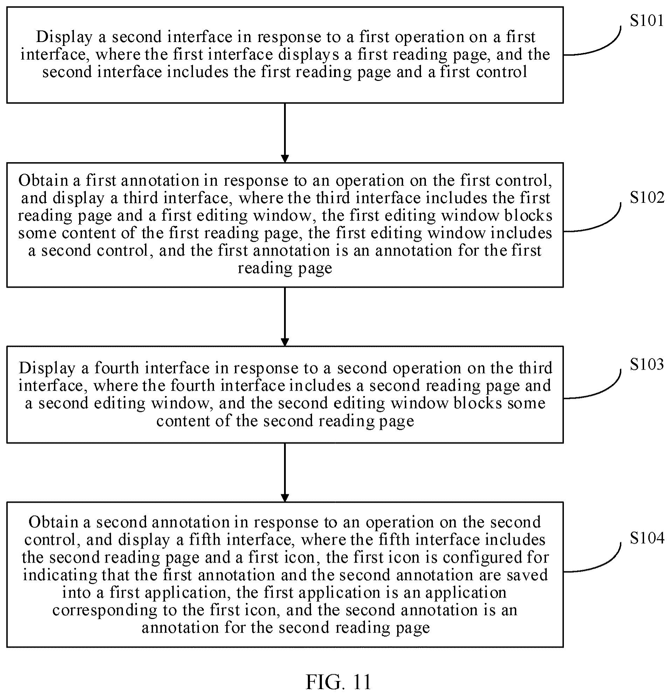

FIG. 11 is a schematic flowchart of an annotation method according to an embodiment of this application; and

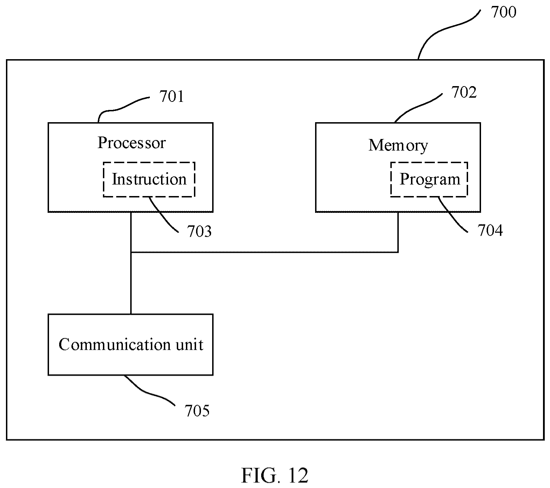

FIG. 12 is a schematic diagram of an electronic device for performing an annotation method according to an embodiment of this application.

### DESCRIPTION OF EMBODIMENTS

The following describes technical solutions in embodiments of this application with reference to the accompanying drawings in the embodiments of this application. In the descriptions of the embodiments of this application, "/" means "or" unless otherwise specified. For example, A/B may represent A or B. In this specification, "and/or" describes only an association relationship for describing associated objects and indicates that three relationships may exist. For example, A and/or B may represent the following three cases: A exists alone, A and B exist at the same time, and B exists alone. In addition, in the descriptions of the embodiments of this application, "a plurality of" means two or more.

Hereinafter, the terms "first", "second", and "third" are for descriptive purposes only and are not to be construed as indicating or implying their relative importance or implicitly specifying the number of indicated technical features. Therefore, a feature limited by "first", "second", or "third" may explicitly or implicitly include one or more of the features.

At present, a user usually performs reading by using an electronic device. In a reading process, the user usually annotates reading text, and saves the annotations. In a possible case, the reading text is long, and needs to be displayed by using a plurality of pages. After annotating a current display interface, the user needs to first save the annotations on the current page, and then turn to another page to continue reading. When text to be annotated is viewed again, the interface displayed for the second time needs to be annotated, the second annotation is saved, and page turning for reading is continued. To be specific, when annotations are performed by using the annotation method in the existing technology, a plurality of annotations corresponding to a same reading text cannot be saved together. Consequently, when the user browses the annotations, the user cannot completely view all the annotations of a reading text at once, thereby reducing user experience.

In view of this, an embodiment of this application provides an annotation method, applied to an electronic device. The method includes: displaying a second interface in response to a first operation on a first interface, where the first interface displays a first reading page, and the second interface includes the first reading page and a first control; obtaining a first annotation in response to an operation on the first control, and displaying a third interface, where the third interface includes the first reading page and a first editing window, the first editing window blocks some content of the first reading page, the first editing window includes a second control, and the first annotation is an annotation for the first reading page; displaying a fourth interface in response to a second operation on the third interface, where the fourth interface includes a second reading page and a second editing window, and the second editing window blocks some content of the second reading page; and obtaining a second annotation in response to an operation on the second control, and displaying a fifth interface, where the fifth interface includes the second reading page and a first icon, the first icon is configured for indicating that the first annotation and the second annotation are saved into a first application, the first application is an application corresponding to the first icon, and the second annotation is an annotation for the second reading page. Because the first annotation and the second annotation are different annotations, it is equivalent to continuously annotating a reading material, thereby improving user experience.

The annotation method provided in this embodiment of this application may be applied to an electronic device. The electronic device includes a terminal device. The terminal device may alternatively be referred to as a terminal (terminal), a user equipment (user equipment, UE), a mobile station (mobile station, MS), a mobile terminal (mobile terminal, MT), or the like. The terminal device may be a mobile phone (mobile phone), a smart TV, a wearable device, a pad (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in this embodiment of this application.

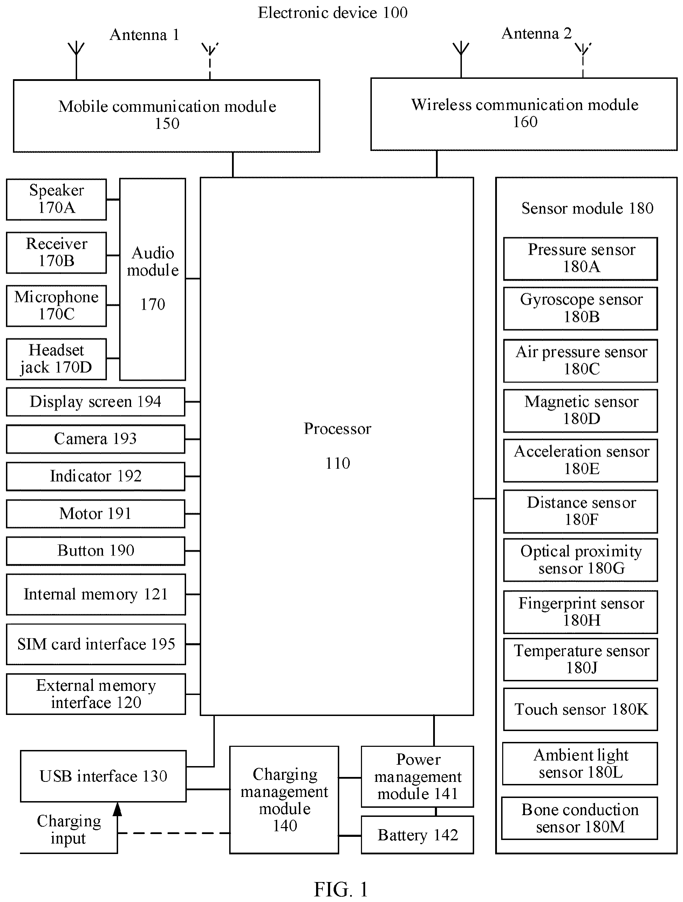

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated to one or more processors.

The controller may be a nerve center and a command center of the electronic device 100. The controller may generate an operation control signal based on an instruction operation code and a sequence signal, and control obtaining and executing of instructions.

A memory may be further disposed in the processor 110, to store instructions and data. In some embodiments, the memory in the processor 110 is a cache. The memory may store instructions or data that has just been used or is cyclically used by the processor 110. If the processor 110 needs to use the instructions or the data again, the processor may directly invoke the instructions or the data from the memory. Repeated access is avoided, and waiting time of the processor 110 is reduced, thereby improving the system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of 12C buses. The processor 110 may be separately coupled to the touch sensor 180K, a charger, a flash, the camera 193, and the like via different I2C bus interfaces. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 via the I2S bus to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may alternatively be configured to perform audio communication, and samples, quantizes, and encodes an analog signal. In some embodiments, the audio module 170 may be coupled to the wireless communication module 160 through the PCM bus interface. In some embodiments, the audio module 170 may alternatively transmit an audio signal to the wireless communication module 160 via the PCM interface to implement the function of answering a call via a Bluetooth headset. The I2S interface and the PCM interface both may be configured to perform audio communication.

The UART interface is a universal serial data bus for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 by using a DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to the USB standard specification, and may be specifically a Mini USB interface, a Micro USB interface, a USB Type C interface, or the like. The USB interface 130 may be configured to connect to the charger to charge the electronic device 100, or may be used for data transmission between the electronic device 100 and a peripheral device. The USB interface may alternatively be configured to connect to a headset to play audio through the headset. The interface may be further configured to connect to another electronic device such as an AR device.

It may be understood that an interface connection relationship between the modules that is shown in this embodiment of this application is merely an example for description, and does not constitute a limitation on the structure of the electronic device 100. In some other embodiments of this application, the electronic device 100 may use an interface connection manner different from that in the foregoing embodiments, or use combinations of a plurality of interface connection manners.

A wireless communication function of the electronic device 100 may be implemented via the antenna 1, the antenna 2, the mobile communication module 150, the wireless communication module 160, the modem processor, the baseband processor, and the like.

The electronic device 100 may implement a display function by using the GPU, the display screen 194, the application processor, and the like. The GPU is an image processing microprocessor, and is connected to the display screen 194 and the application processor. The GPU is configured to perform mathematical and geometric computing for graphics rendering. The processor 110 may include one or more GPUs that execute a program instruction to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), and the like. In some embodiments, the electronic device 100 may include 1 or N display screens 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during shooting, a shutter is enabled. Light is transmitted to a photosensitive element of the camera through a lens, and an optical signal is converted into an electrical signal. The photosensitive element of the camera transmits the electrical signal to the ISP for processing and converted into an image visible to a naked eye. The ISP may further perform algorithm optimization on noise, luminance, and complexion of the image. The ISP may further optimize parameters such as exposure and color temperature of a shooting scene. In some embodiments, the ISP may be disposed in the camera 193.

The camera 193 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard RGB or YUV format. In some embodiments, the electronic device 100 may include 1 or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, a moving picture experts group (moving picture experts group, MPEG) 1, MPEG2, MPEG3, and MPEG4.

The NPU is a neural-network (neural-network, NN) computing processor. The NPU quickly processes input information with reference to a structure of a biological neural network, for example, a transfer mode between human brain neurons, and may further continuously perform self-learning. The NPU may be used to implement an application such as intelligent cognition of the electronic device 100, for example, image recognition, facial recognition, voice recognition, and text understanding.

The electronic device 100 may use the audio module 170, the speaker 170A, the receiver 170B, the microphone 170C, the headset jack 170D, the application processor, and the like, to implement an audio function. For example, music playback or audio recording is implemented.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates made of conductive materials. When force is exerted on the pressure sensor 180A, capacitance between electrodes is changed. The electronic device 100 determines strength of the pressure based on the change of the capacitance. When a touch operation is performed on the display screen 194, the electronic device 100 detects strength of the touch operation according to the pressure sensor 180A. The electronic device 100 may further calculate a touch position based on a detection signal of the pressure sensor 180A. In some embodiments, touch operations that are performed in a same touch position but have different touch operation intensity may correspond to different operation instructions. For example, when a touch operation having a touch operation strength less than a first pressure threshold is performed on a short message application icon, an instruction of viewing a short message is executed. When a touch operation having a touch operation strength greater than or equal to the first pressure threshold is performed on the short message application icon, an instruction of creating a new short message is executed.

The touch sensor 180K is alternatively referred to as a "touch panel". The touch sensor 180K may be disposed on the display screen 194. The touch sensor 180K and the display screen 194 form a touchscreen, which is alternatively referred to as a "touch screen". The touch sensor 180K is configured to detect a touch operation performed on or near the touch sensor. The touch sensor may transmit the detected touch operation to the application processor, to determine a touch event type. Visual output related to the touch operation may be provided by using the display screen 194. In some other embodiments, the touch sensor 180K may alternatively be disposed on a surface of the electronic device 100 in a position different from that of the display screen 194.

The motor 191 may generate a vibration prompt. The motor 191 may be configured for an incoming call vibration prompt, or may be configured for touch vibration feedback. For example, touch operations performed on different applications (for example, photo taking and audio playing) may correspond to different vibration feedback effects. The motor 191 may correspond to different vibration feedback effects for touch operations performed on different regions of the display screen 194. Different application scenarios (for example, a time reminder, information receiving, an alarm clock, and a game) may correspond to different vibration feedback effects. Customization of a touch vibration feedback effect may alternatively be supported.

The indicator 192 may be an indicator, and may be configured to indicate a charging state and a power change, or may be configured to indicate a message, a missed call, a notification, and the like.

It should be noted that any electronic device mentioned in this embodiment of this application may include more or fewer modules in the electronic device 100.

A software system of the electronic device 100 may use a layered architecture, an event-driven architecture, a microkernel architecture, a microservice architecture, or a cloud architecture. In this embodiment of this application, an Android system with a layered architecture is used as an example to describe a software structure of the electronic device 100.

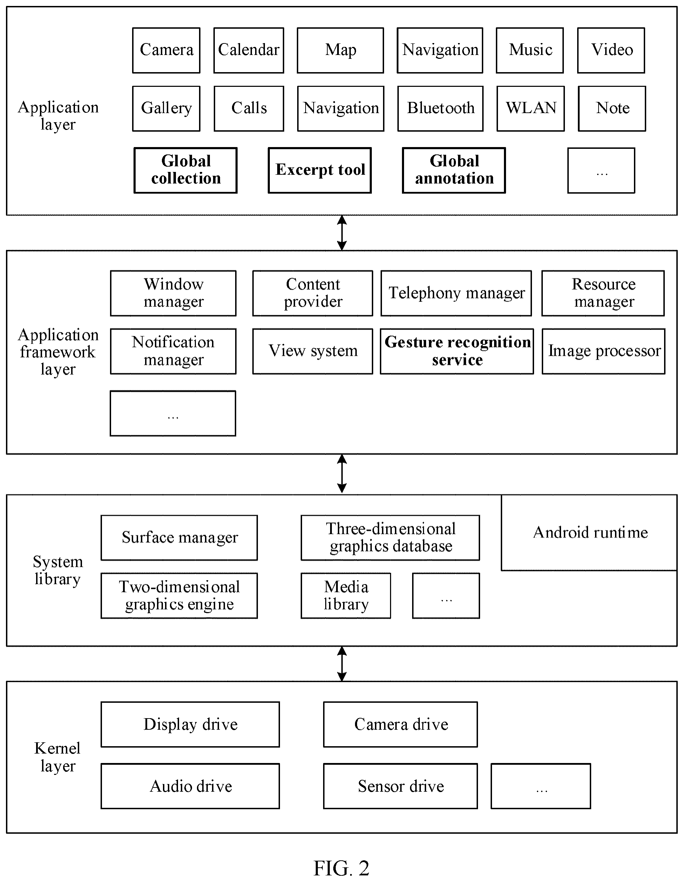

FIG. 2 is a block diagram of a software structure of an electronic device 100 according to an embodiment of this application.

In the layered architecture, software is divided into several layers, and each layer has a clear role and task. The layers communicate with each other through a software interface. In some embodiments, an Android system is divided into four layers: an application layer, an application framework layer, Android runtime (Android runtime), and a system library from top to bottom.

The application layer may include a series of application packages.

As shown in FIG. 2, the application package may include applications such as Camera, Gallery, Calendar, Phone, Map, Navigation, WLAN, Bluetooth, Music, Video, Note, Messages, Reading, Global collection, and Global annotation.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, a gesture recognition service, and an image processor.

The window manager is configured to manage a window application. The window manager may obtain a size of a display screen, determine whether a status bar exits, lock a screen, record a screen, take a screenshot, and wake up a note window in response to an operation of noting in a video.

The content provider is configured to store and obtain data, and enable the data to be accessible to an application. The data may include video, an image, audio, calls that are made and answered, a browsing history and a bookmark, a phonebook, and the like.

The view system includes visual controls such as a text display control and a picture display control. The view system may be configured to create an application. The display interface may include one or more views. For example, a display interface including a short message notification icon may include a view for displaying text and a view for displaying a picture.

The phone manager is configured to provide a communication function of the electronic device 100, for example, call state (including a put-through state, a hang-up state, etc.) management.

The resource manager provides various resources for an application, such as a localized string, an icon, a picture, a layout file, and a video file.

The notification manager enables an application to display notification information in a status bar, may be configured to convey a notification-type message, and may automatically disappear after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted on a status bar, a prompt tone is made, the electronic device vibrates, or an indicator light flashes.

The gesture recognition service may recognize a corresponding gesture by detecting a touch operation on the touch screen.

The Android Runtime includes a kernel library and a virtual machine. The Android runtime is responsible for scheduling and managing the android system.

The kernel library includes two parts: a performance function that needs to be invoked by a java language and a core library of Android.

The application layer and the application framework layer are run in the virtual machine. The virtual machine executes java files at the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem, and provide fusion of two-dimensional and three-dimensional layers for a plurality of applications.

The media library supports playing and recording of a plurality of commonly used audio and video formats, static image files, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering, synthesis, layer processing, and the like.

The two-dimensional graphics engine is a drawing engine for two-dimensional drawing.

The kernel layer is a layer between hardware and software. The kernel layer includes at least a display drive, a camera drive, an audio drive, and a sensor drive.

The following describes a specific process of how to activate an annotation function and save an annotation.

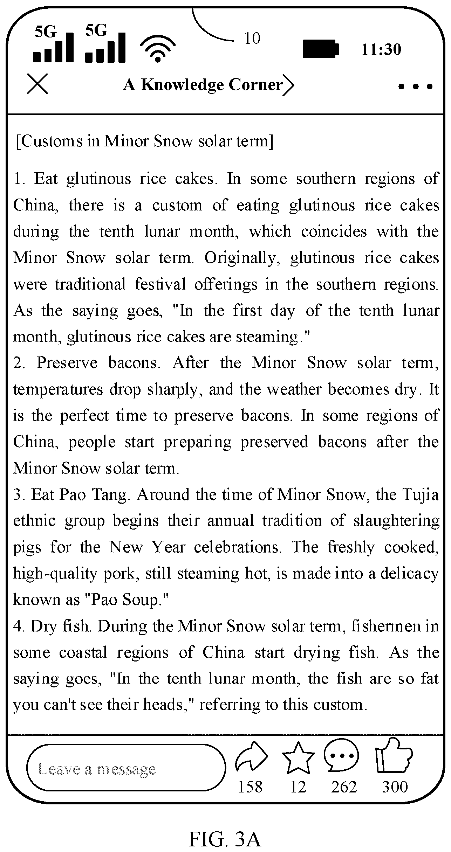

After a user opens a reading application, as shown in FIG. 3A, a current display interface 10 of a mobile phone displays a reading text. The user may wake up an annotation function by means of a wakeup operation. The wakeup operation may be a preset operation performed by the user on a reading interface (i.e. the display interface 10). For example, as shown in FIG. 3B, a preset operation gesture may be an operation of swiping to draw a character C with a knuckle. It may be understood that the wakeup operation may alternatively be another gesture action. In some embodiments, the user may perform user-defined settings in related setting options of the annotation function.

In a possible case, the user performs the operation of swiping to draw a character C with a knuckle on the display interface 10 to wake up the annotation function. A gesture recognition service of an application framework layer invokes an annotation tool according to the action of swiping to draw a character C with a knuckle. To be specific, an editing tool bar 101 and an annotation tool bar 102 on a reading interface are displayed, as shown in FIG. 3C. The editing tool bar 101 includes a pause control 1011, an export control 1012, and a save control 1013. The pause control 1011 may be configured to stop annotating on the current interface, so that the user performs a page turning operation to enter a next page. The export control 1012 may be configured to convert the content of an annotation into different formats. For example, the annotation may be converted into an image, a file in a PDF format, or a file format saved in a global collection. The save control 1013 may be configured to save the annotation content. The annotation tool bar 102 may be configured to change the annotation tool, to present different annotation effects. The annotation tool bar 102 may include various pens, an eraser, a palette, a back control, a next control, and the like. Tools included in the annotation tool bar 102 may be adjusted and arranged according to a personal requirement. A size and a position of the annotation tool bar 102 may be changed based on a dragging operation of the user. This is not limited in this embodiment of this application.

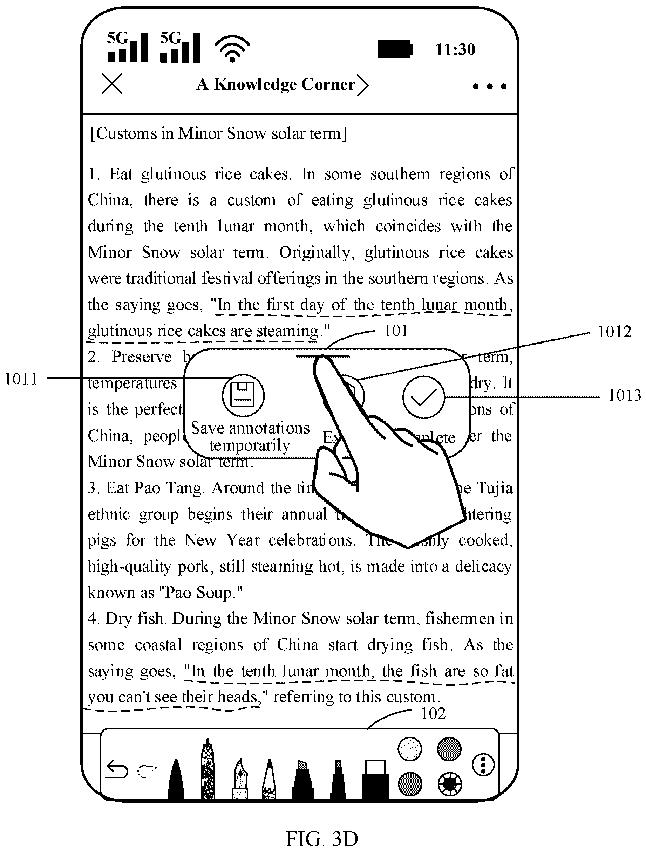

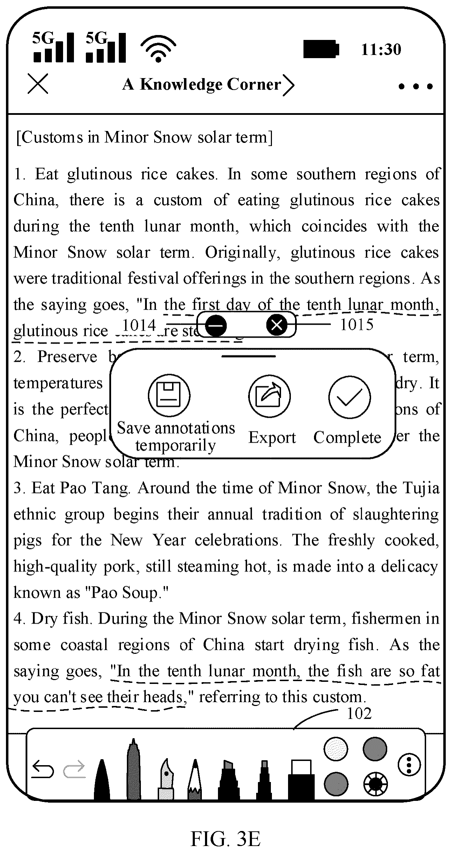

Optionally, the editing tool bar 101 may further include a minimize control 1014 and a close control 1015. When the annotation tool is invoked to display the editing tool bar 101 and the annotation tool bar 102, the minimize control 1014 and the close control 1015 are in a hidden state. The user may wake up the minimize control 1014 and the close control 1015 by means of a preset operation, to display the minimize control 1014 and the close control 1015. For example, the user may tap an upper region of the editing tool bar 101, as shown in FIG. 3D. In response to the user operation of tapping the upper region of the editing tool bar 101, the minimize control 1014 and the close control 1015 are displayed, as shown in FIG. 3E.

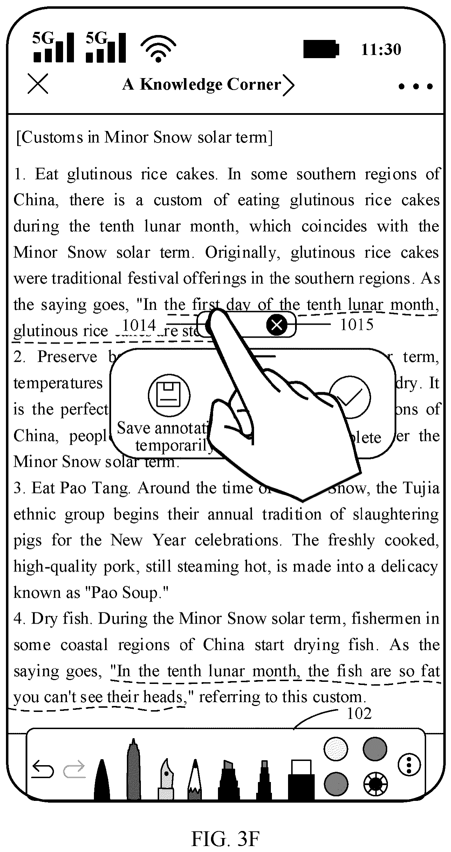

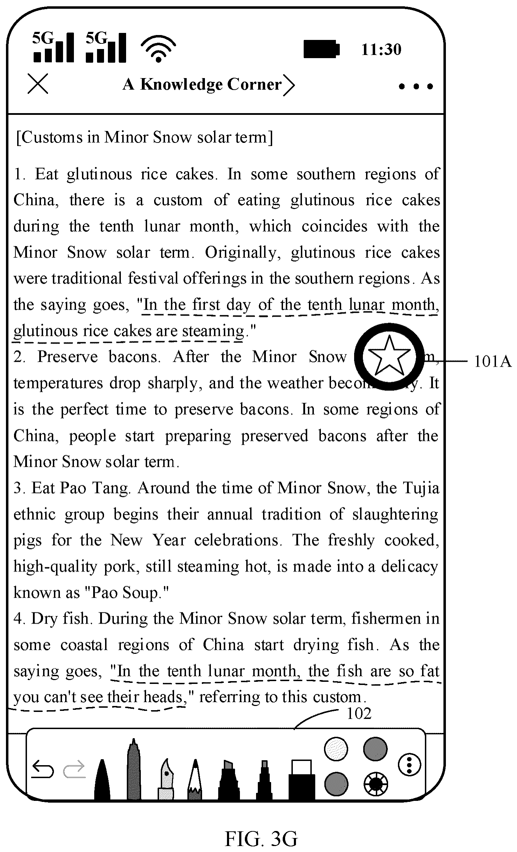

The user may hide the editing tool bar 101 by using the minimize control 1014, to avoid blocking of the reading interface by the editing tool bar 101 during annotation, thereby improving experience when the user annotates the reading interface. For example, the user taps the minimize control 1014, as shown in FIG. 3F. In response to the user operation of tapping the minimize control 1014, the editing tool bar 101 is switched to an editing tool bar 101A in a hidden state, as shown in FIG. 3G.

It should be understood that the user may also switch the editing tool bar 101A in the hidden state back to the editing tool bar 101 in an expanded state. For example, the user may tap the editing tool bar 101A in the hidden state, to switch the editing tool bar 101A in the hidden state back to the editing tool bar 101 in the expanded state, as shown in FIG. 3D.

It should be understood that an annotation (or referred to as graffiti) in this application is content drawn on a display screen by the user using a stylus tip or a fingertip. Information included in the annotation content may include a start position, an end position, and the like during the annotation. The start position is a position at which the stylus is pressed down when the user annotates on the display screen. The end position is a position at which the stylus is raised after the user annotates on the display screen.

When the annotation tool is invoked, the user may start an annotation operation on the current display interface 11. When the user selects the pen in the annotation tool bar 102, a graffiti picture may be formed along a moving track of the finger of the user on the display interface, and the formed graffiti picture may be used for marking key content in a reading material. For example, the graffiti picture formed based on the moving track of the finger of the user on the display interface 11 is a wavy line, and the wavy line may mark key content in the reading material. Alternatively, an ellipse is formed based on the moving track of the finger of the user on the display interface 11. Similarly, the ellipse may alternatively be used for marking key content in the reading material.

After completing annotating on the current display interface 11, the user may tap a temporary save control 1011 to temporarily save the annotation at a current moment. In response to the user operation of tapping the temporary save control 1011, the electronic device may temporarily save the annotation at the current moment, close the editing tool bar 101 and the annotation tool bar 102, and display the editing tool bar 103, so that the user may perform a page turning operation. Different from the editing tool bar 101, an annotation preview region 1031 is added to the editing tool bar 103, as shown in FIG. 3H. In addition, the temporary save control 1011 is replaced with an annotation control 1032. The annotation preview region 1031 displays a thumbnail in which the annotation is temporarily saved, and the annotation control 1032 may be configured to start annotating again.

In a possible case, the user performs the operation of swiping to draw a character C with a knuckle on the display interface 10 to wake up the annotation function. A gesture recognition service of an application framework layer invokes an annotation tool according to the action of swiping to draw a character C with a knuckle. To be specific, an editing tool bar 111 and an annotation tool bar 112 on a reading interface are displayed, as shown in FIG. 3I. The editing tool bar 111 includes a write control 1111, a share control 1112, a temporary save control 1113, and a close control 1114. The write control 1111 starts annotating on a current display interface. The share control 1112 may be configured to share the annotation content to another application or another device. The temporary save control 1113 may be configured to stop annotating on the current interface, so that the user performs a page turning operation to enter a next page. The close control 11114 may be configured to save the annotation content. The annotation tool bar 112 may be configured to change the annotation tool, to present different annotation effects. The annotation tool bar 112 may include various pens, an eraser, a palette, a back control, a next control, and the like. Tools included in the annotation tool bar 112 may be adjusted and arranged according to a personal requirement. A size and a position of the annotation tool bar 112 may be changed based on a dragging operation of the user. This is not limited in this embodiment of this application.

Optionally, the display interface 12 may further display a card 113 below the editing tool bar. The card 113 carries text "Tap to pause and save annotations temporarily", for prompting the user that the annotation may be paused by tapping the annotation control currently and the annotation content is temporarily saved. Optionally, the card 113 may further include another close control, configured to trigger to hide the card 113.

Optionally, the display interface 12 may further display a card 114 at a position close to the bottom, and text "Global annotation mode activated" may be displayed on the card 114, for prompting the user that a current electronic device enters a global annotation mode, and an operation related to annotation may be performed. Subsequently, the card 114 may disappear after staying for a preset duration or in response to an operation for a control on the editing tool bar 111. Only the editing tool bar 111 and the annotation tool bar 112 are kept on the screen.

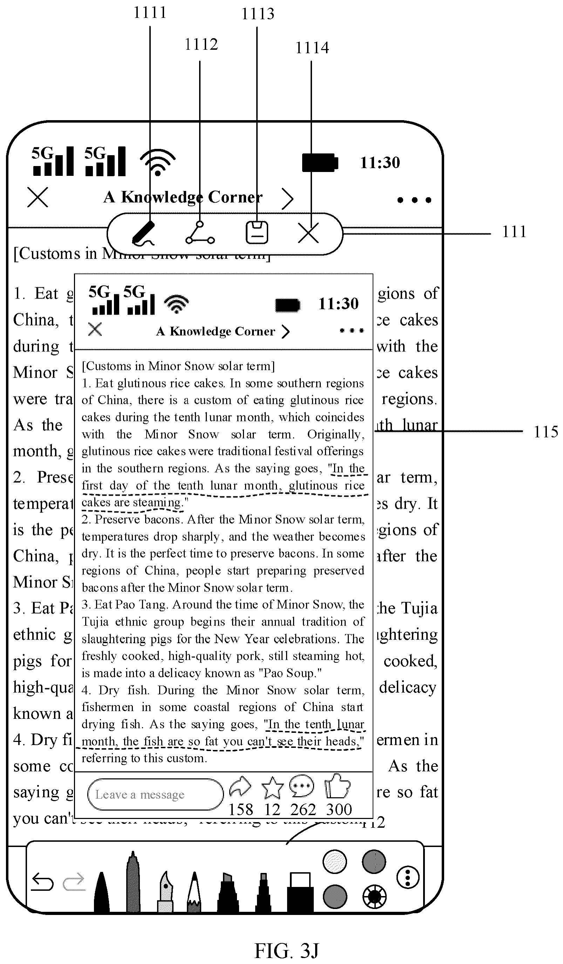

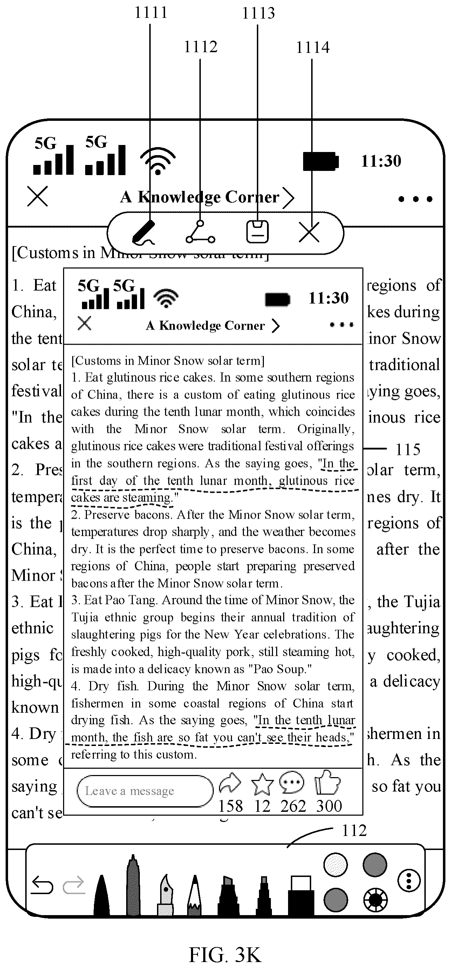

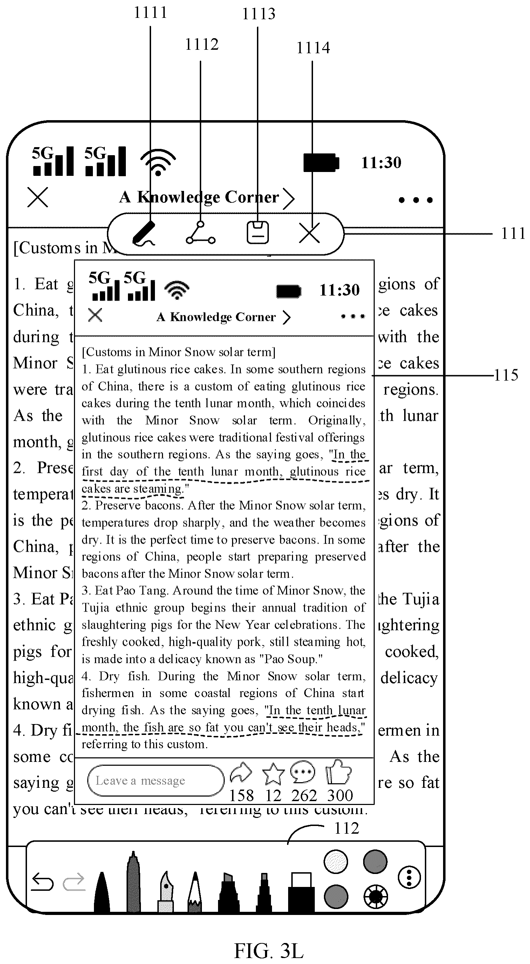

The user starts to annotate by tapping the write control 1111. After completing annotating on the current display interface 12, the user may tap the write control 1111 again, to exit a write annotation function for the reading material. In this case, the annotation on the current page may be saved in the pause control 1113 by using a preset dynamic effect. For example, the preset dynamic effect may be that an image in which the annotation of the current page is displayed becomes smaller, and gradually flies into the pause control 1113. For example, as shown in FIG. 3J, in response to the operation of tapping the write control 1111 again, an image 115 of an annotation of a current page is displayed on the display interface 10. In this case, the size of the image 115 is slightly smaller than the size of the current display interface. After a first time period (for example, 1 ms), the size of the image 115 is reduced, and a distance between the image 115 and the pause control 1113 keeps unchanged, as shown in FIG. 3K and FIG. 3L. As time increases, the size of the image 115 is gradually reduced to 0, as shown in FIG. 3M. Because the size of the image 115 is gradually reduced and the distance between the image 115 and the pause control 1113 keeps unchanged, a dynamic effect that the image 115 is taken into the pause control 1113 is formed. When the size of the image 115 changes to 0, a numeral "1" is added to the pause control 1113, indicating that an annotation is temporarily saved.

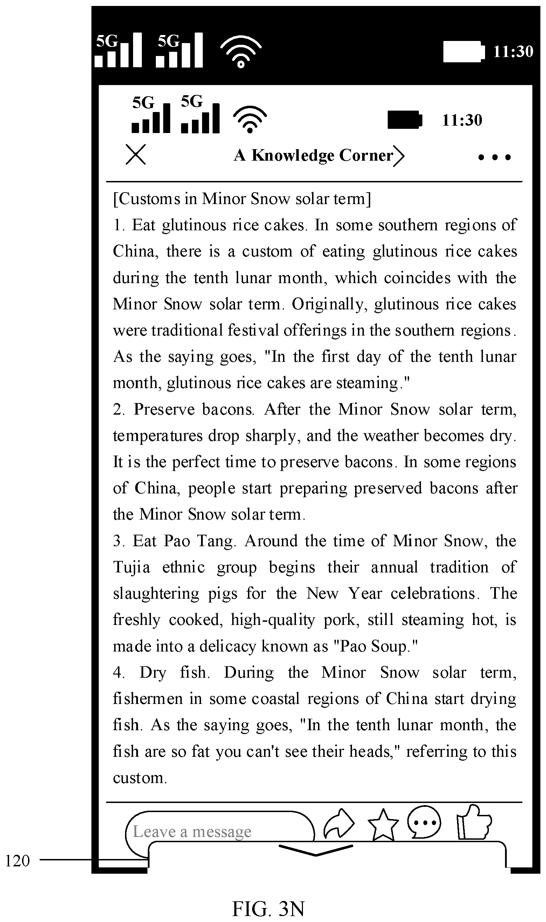

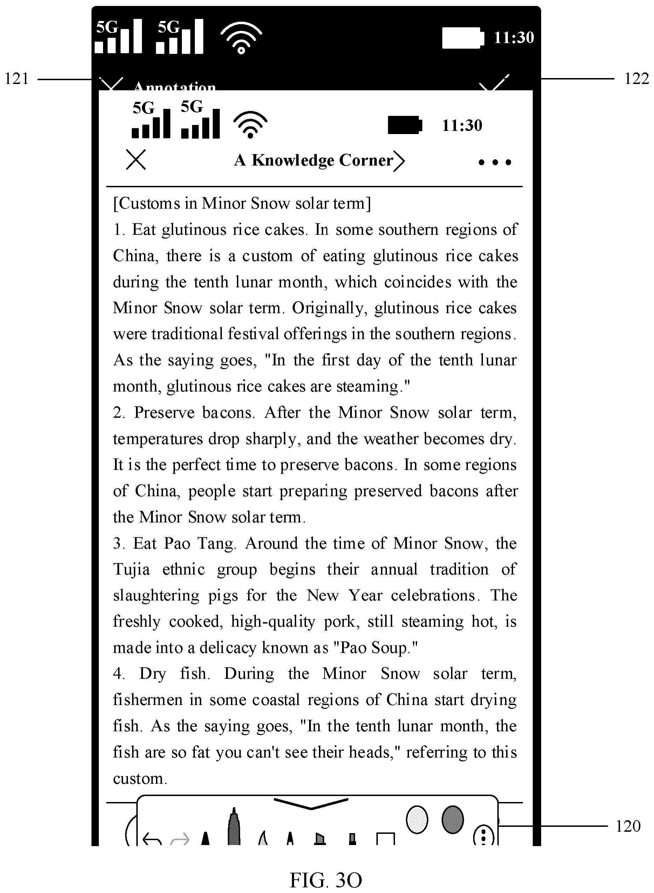

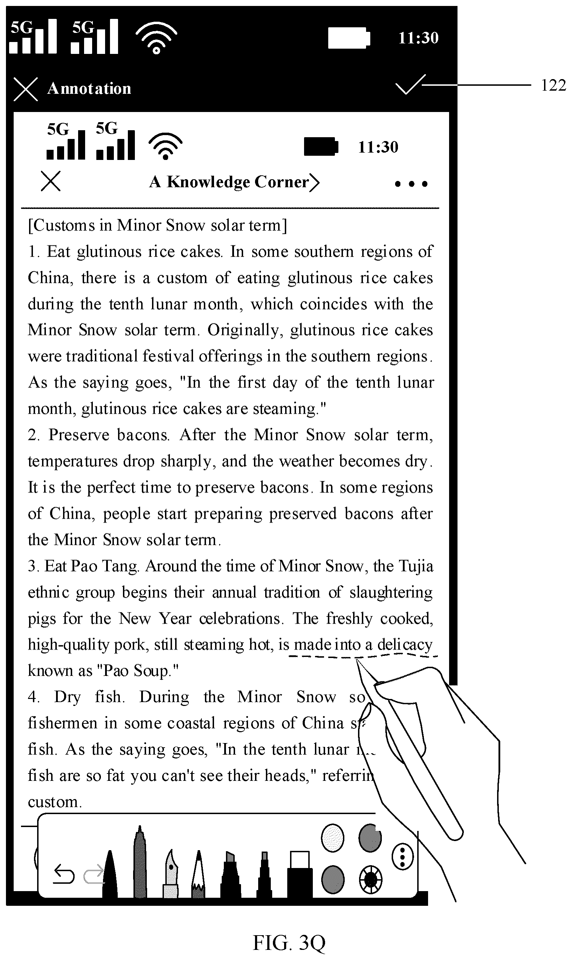

In a possible case, the user performs the operation of swiping to draw a character C with a knuckle on the display interface 10 to wake up the annotation function. A gesture recognition service of an application framework layer invokes an annotation tool according to the action of swiping to draw a character C with a knuckle. In a process of invoking the annotation tool, the annotation tool bar may be invoked by using a preset dynamic effect. For example, as shown in FIG. 3N to FIG. 3P, when the action of swiping to draw a character C with a knuckle is detected, the annotation tool bar 120 starts to appear at the bottom of the display interface. Meanwhile, the reading interface is converted from a reading state into an editing state, as shown in FIG. 3N. It should be understood that when the reading interface is in a reading state, the user may turn pages of the reading material to read related content. When the reading interface is in an editing state, the user may make graffiti on the current display interface, to complete annotating the currently displayed reading content. When the reading interface is converted into the editing state, the reading interface may be in a picture format. As time goes by, the annotation tool bar 120 starts to move up, and a close control 121 and a complete control 122 start to appear on the upper part of the display interface, as shown in FIG. 3O, until the annotation tool bar 102, the close control 121, and the complete control 122 are completely displayed, as shown in FIG. 3P. The user may annotate the picture in the display interface shown in FIG. 3P, as shown in FIG. 3Q.

Optionally, when the annotation tool bar 120, the close control 121, and the complete control 122 are fully displayed, a card 123 is displayed on the display interface. Prompt information, for example, text "Global annotation mode activated" shown in FIG. 3P, for the user to perform annotation is displayed on the card 123.

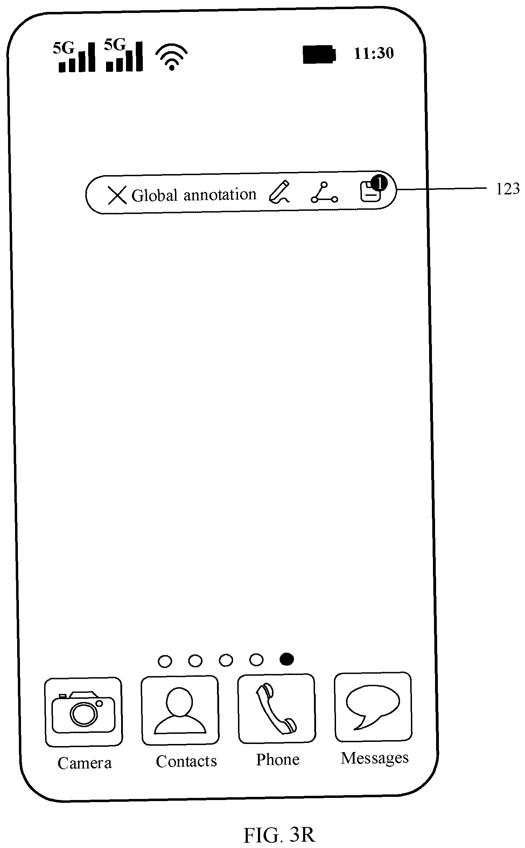

If the user switches to a desktop of the electronic device by means of a gesture operation when the reading interface is in an editing state, the annotation on the current page may be temporarily saved first. For example, on the interface shown in FIG. 3P, the user swipes right, and the display interface is switched to the desktop, as shown in FIG. 3R. In this case, the desktop further displays an editing tool bar 123, and an annotation is temporarily saved, namely an annotation made on the interface shown in FIG. 3P.

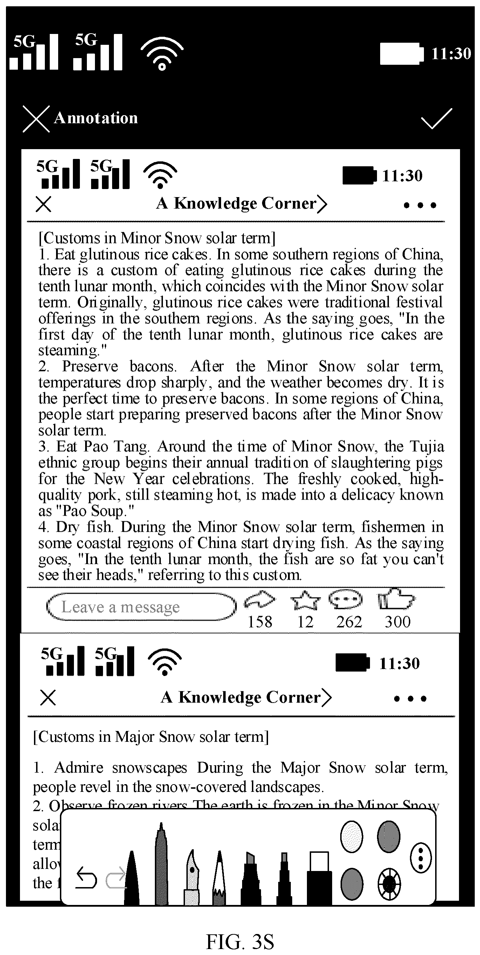

Optionally, the reading interface in an editing state may alternatively be an interface of a long screenshot. For example, as shown in FIG. 3S, a reading material on the display interface may extend down.

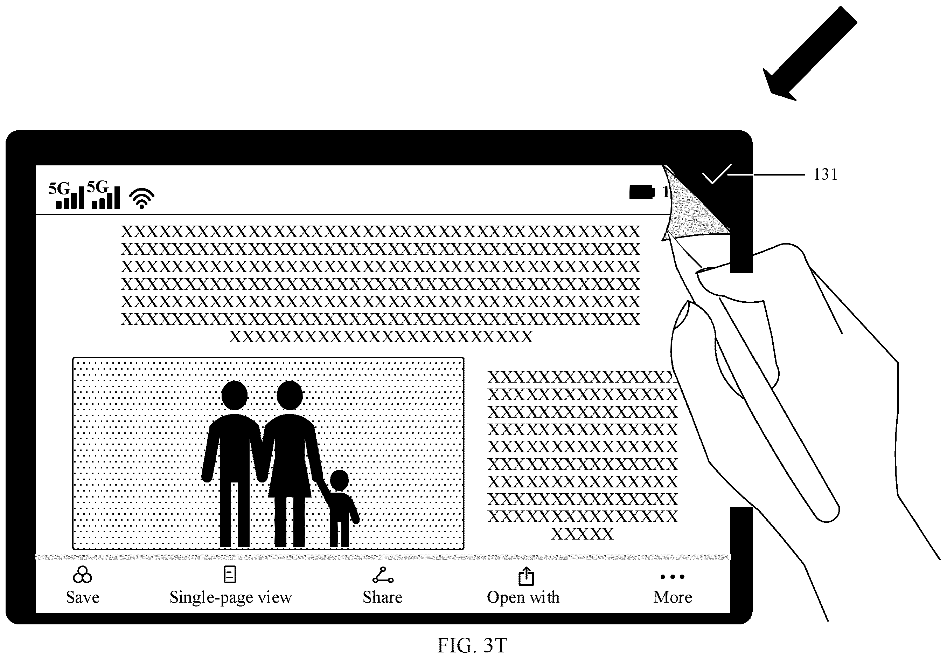

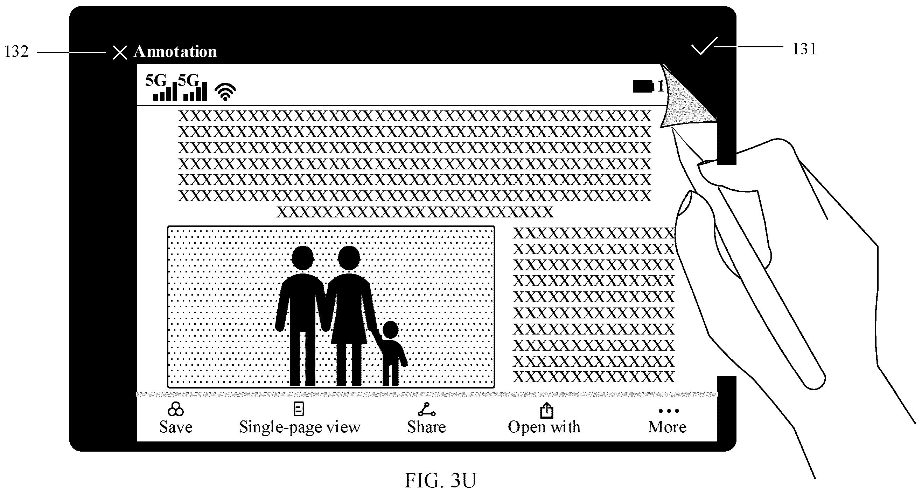

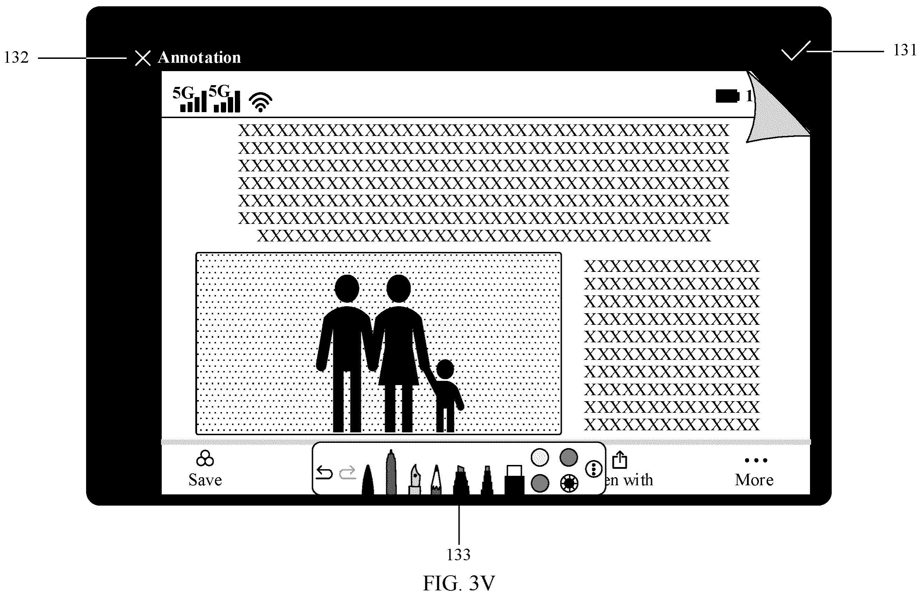

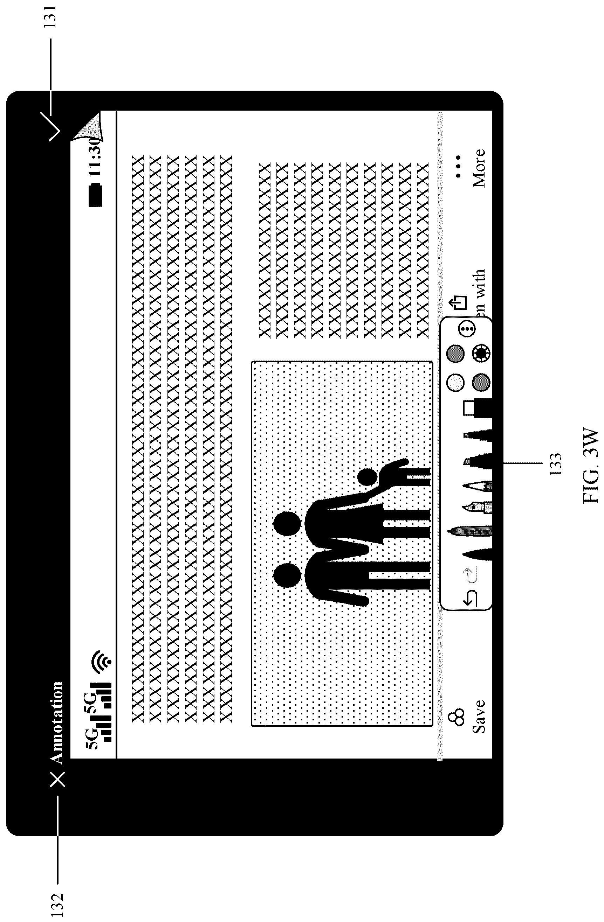

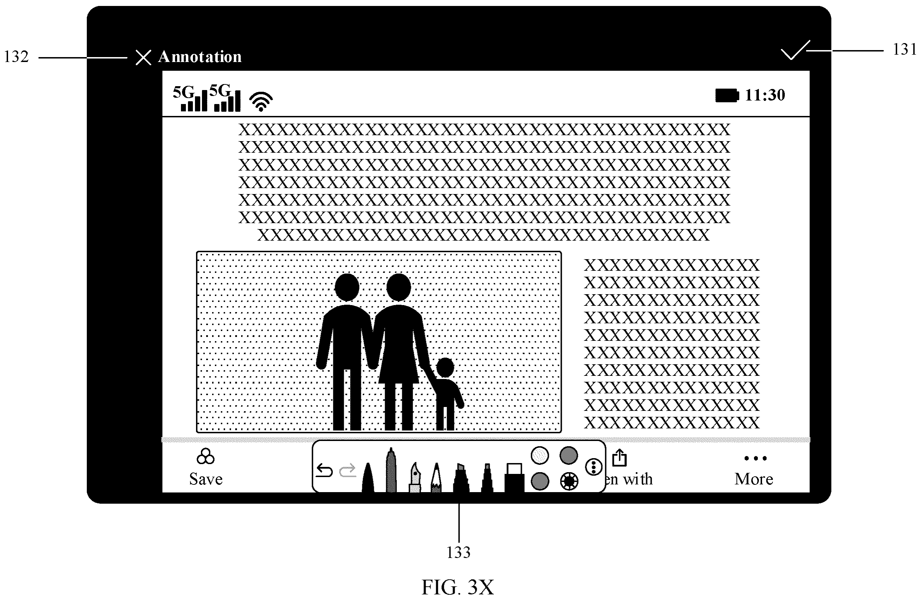

In a possible case, a wakeup operation may be an operation of moving a stylus from the outside to the inside. For example, an operation of moving a stylus from an upper right corner of a display interface of a Pad to the center may wake up an annotation function. During the operation of moving a stylus from an upper right corner of a display interface to the center, a current reading interface is converted from a reading state into an editing state. To be specific, the reading material is displayed in a picture format. In this case, the upper right corner of the reading material displays an effect of folding and rolling a page as the stylus moves, as shown in FIG. 3T. Meanwhile, a complete control 131 is exposed from the upper right corner of the display interface. The reading material displayed in the picture format is zoomed out as the stylus moves to the center, until a close control 132 and the complete control 131 are exposed, as shown in FIG. 3U. In this case, if the stylus is loosened, an annotation tool bar 133 is displayed on the display interface, as shown in FIG. 3V. Meanwhile, the page folded and rolled at the upper right corner starts to be unfolded out, as shown in FIG. 3W, until the effect of folding and rolling a page disappears, as shown in FIG. 3X.

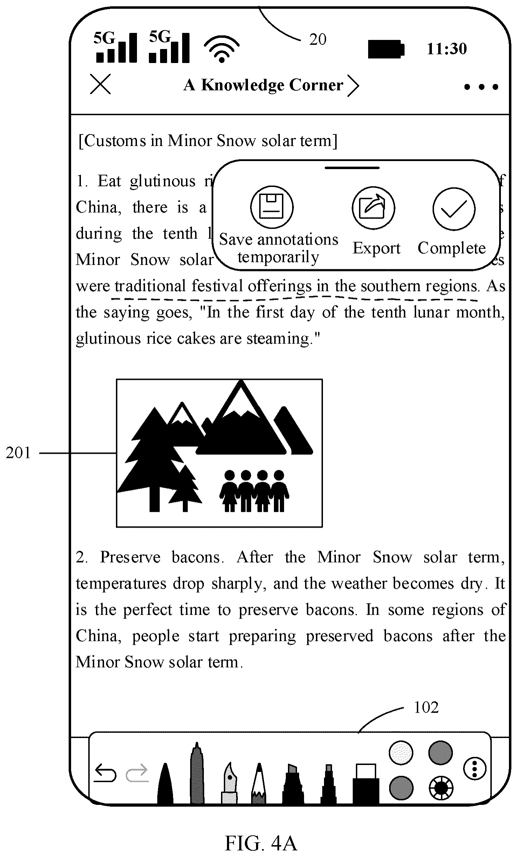

In a possible case, a picture exists in the currently displayed reading material. If a size of the picture is small, the user cannot clearly view content of the picture during the annotation. Therefore, according to the annotation method provided in this embodiment of this application, the size of the picture may further be increased, so that the user can more clearly view the picture to complete annotating. Descriptions are provided below by using FIG. 4A to FIG. 4D.

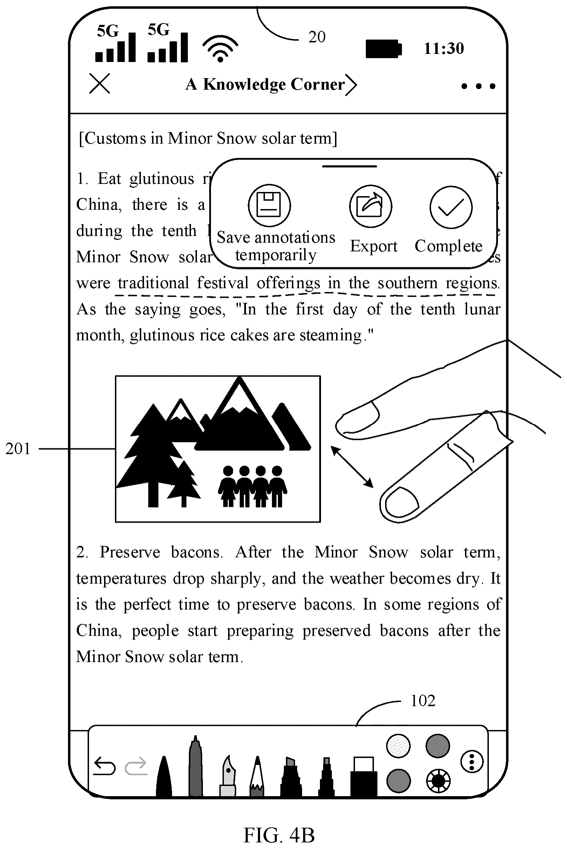

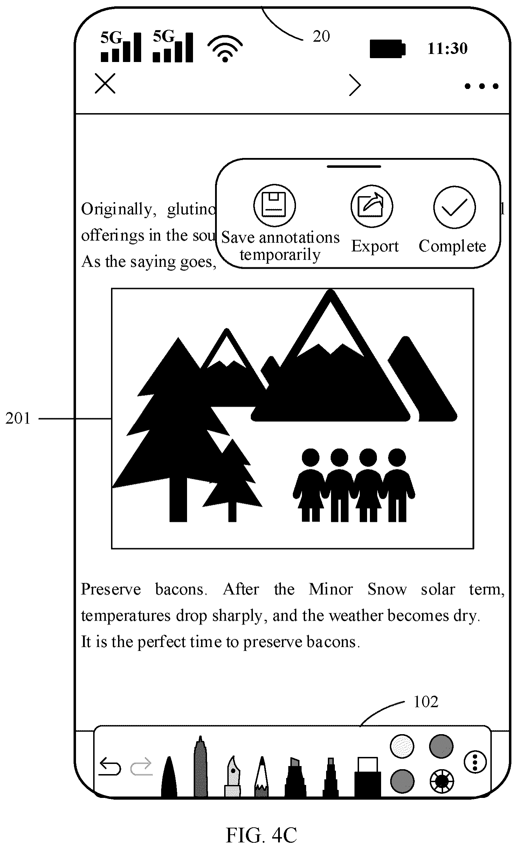

A picture in a reading material is displayed on a display interface of an electronic device, as shown in FIG. 4A. A picture 201 is displayed on a display interface 20, and a size of the picture 201 is small. Consequently, a user cannot annotate details of the picture. In this case, the user may perform an operation of zooming in the picture on the display interface 20, so that the size of the picture 201 is increased. For example, the operation of zooming in the picture may be an operation in which two fingers respectively swipe out in opposite directions, as shown in FIG. 4B. In response to the operation of zooming in the picture, the size of the picture 201 is increased accordingly, as shown in FIG. 4C. It should be understood that text in the reading material is also enlarged as the size of the picture 201 is increased. Consequently, the display interface of the electronic device cannot display all text in an original display interface.

Optionally, because the size of the picture 201 is increased, there is a case in which not all content of the picture 201 can be displayed on the display interface 20. In this case, the display interface 20 can only display a part of content of the picture 201, and the displayed part of content is obtained based on the fact that two fingers swipe out when the user zooms in the picture.

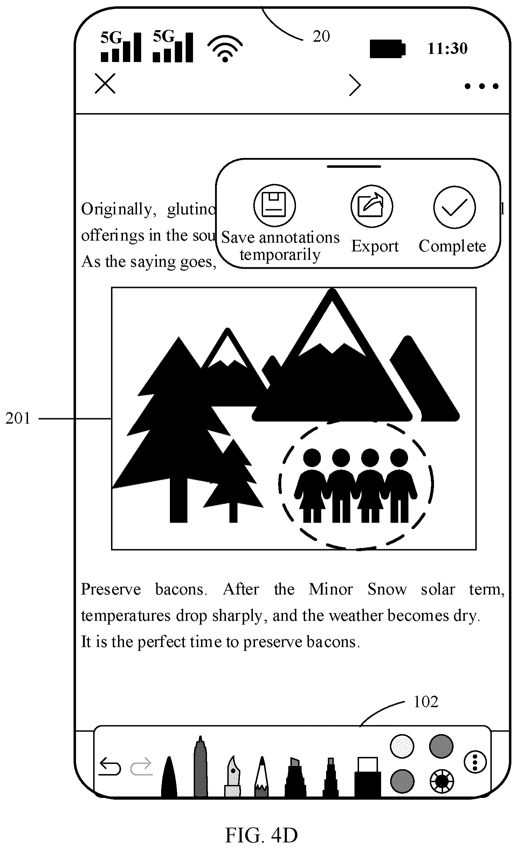

After the picture 201 is zoomed in, the user may annotate details of the picture 201. For example, as shown in FIG. 4D, the user may draw circles on the picture 201, to identify key content in the picture 201.

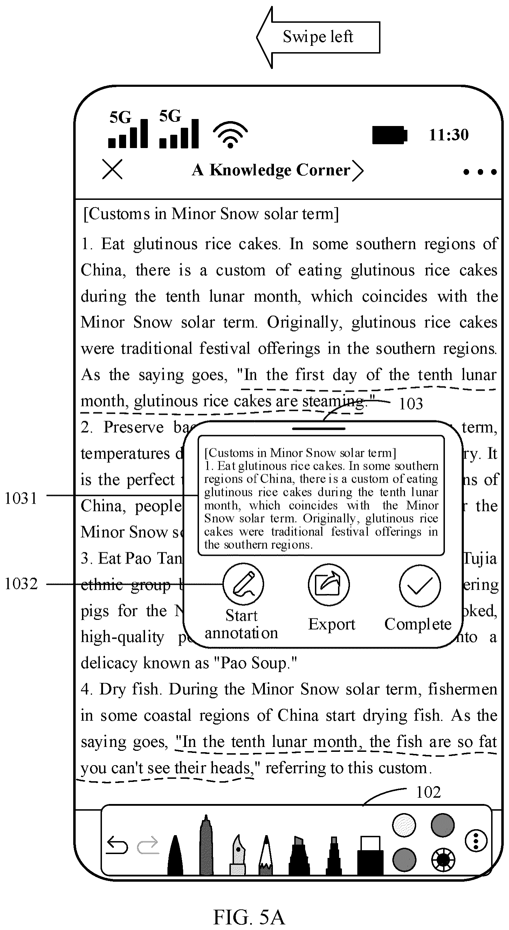

It should be understood that according to the annotation method provided in this embodiment of this application, during annotation, a same material may be continuously annotated. This is described in detail below by using FIG. 5A to FIG. 5AH.

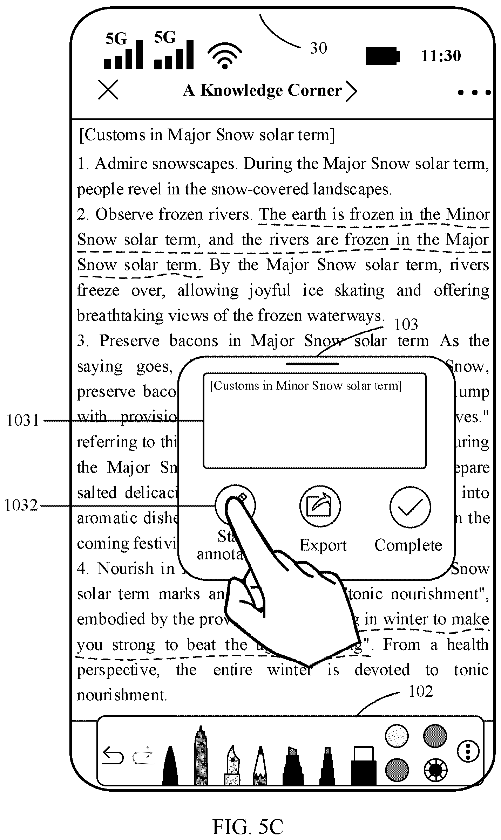

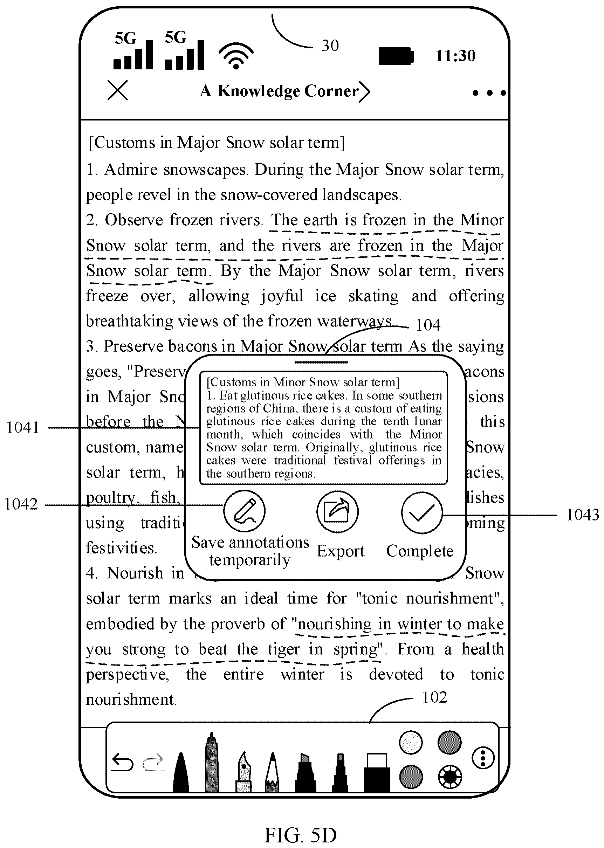

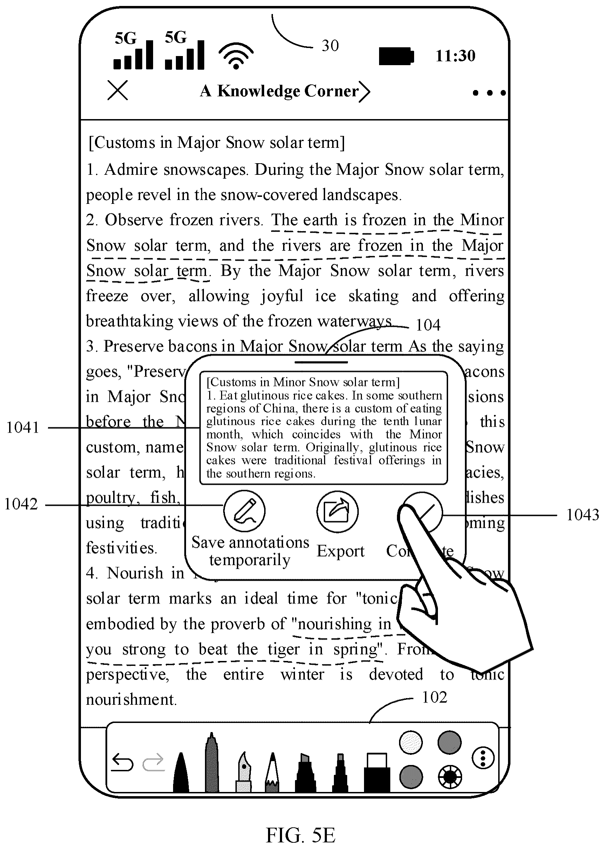

In a possible case, the user performs an operation of swiping to draw a character C with a knuckle on the display interface 10 to wake up the annotation function. The invoked display interface is as shown in FIG. 3C. After completing annotating on the current display interface 10, the user may tap a temporary save control 1011 to temporarily save the annotation at a current moment. In response to the user operation of tapping the temporary save control 1011, the editing tool bar 101 and the annotation tool bar 102 are closed, and the editing tool bar 103 is displayed, so that the user may perform a page turning operation, as shown in FIG. 3H. The user starts to perform the page turning operation to continue reading the reading material. For example, the user performs a swiping operation from right to left, as shown in FIG. 5A. In response to the user operation of swiping from right to left, the display interface of the electronic device is switched to a display interface 30, as shown in FIG. 5B. Display content in the display interface 30 includes specific content of the reading material and the editing tool bar 103. The display content of the reading material changes, but the editing tool bar 103 does not change. When the user needs to perform annotation again, the user may tap an annotation start control 1032, as shown in FIG. 5C. In response to the user operation of tapping the annotation start control 1032, the electronic device invokes an editing tool bar 104 and the annotation tool bar 102, as shown in FIG. 5D. The editing tool bar 104 includes an annotation preview region 1041, and the annotation start control 1032 is switched to a temporary annotation saving control 1042. In this case, the user may perform annotation again. After the user completes the annotation operation on the reading material, the user may tap a complete control 1043 in the editing tool bar 104, as shown in FIG. 5E, to end the annotation operation on the reading material. It should be understood that the annotation for the reading material may be saved in a global collection App, or the annotation for the reading material may be saved in a note App, or the annotation for the reading material may be saved in another application. This is not limited in this embodiment of this application. The user may set an application for saving the annotation for the reading material. An example in which the annotation for the reading material is saved in the global collection App is used for description. In response to the user operation of tapping the complete control 1013, the electronic device ends the annotation of the reading material, saves the reading material in the global collection App, and closes the editing tool bar 104 and the annotation tool bar 102. An icon 105 of the global collection App is displayed on the display interface, as shown in FIG. 5F.

It should be understood that, before tapping the complete control 1043, the electronic device already temporarily saves the annotation for the display interface 10. When the user taps the complete control 1043 to save the annotation for the display interface 30, a quantity of annotations saved in the global collection App is 2. To be specific, the annotations saved in the global collection App include the annotation for the display interface 10 and the annotation for the display interface 30.

It should be understood that the plurality of annotations saved in the global collection App by using the foregoing method are usually saved in a same annotation file group in the global collection App. In this way, it is equivalent to that a plurality of annotations obtained by annotating a same reading material may be saved in a same annotation file set in the global collection App. It is equivalent to that a plurality of annotations of a same reading material are merged and saved, thereby avoiding separately saving a plurality of annotations of a same reading material, and improving efficiency of viewing annotations of a same reading material.

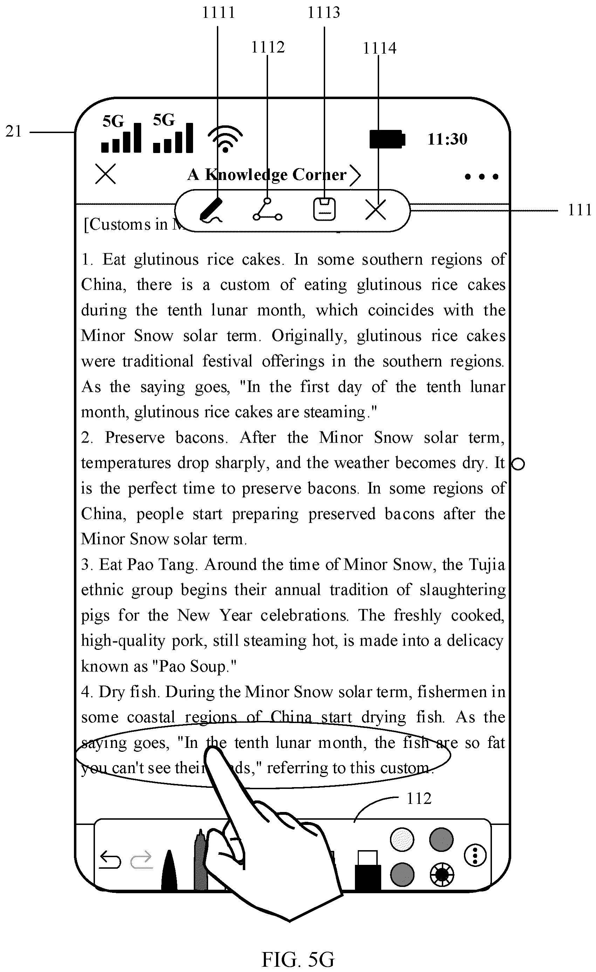

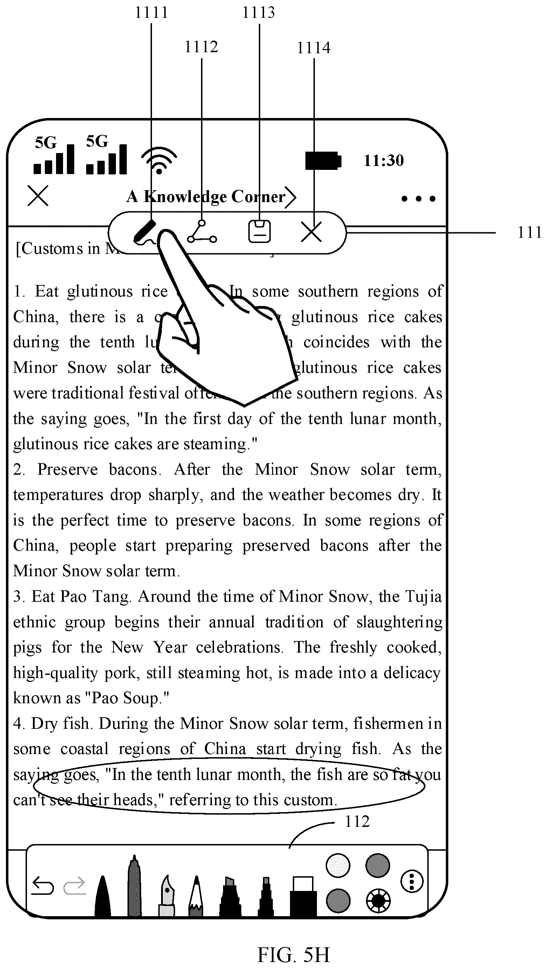

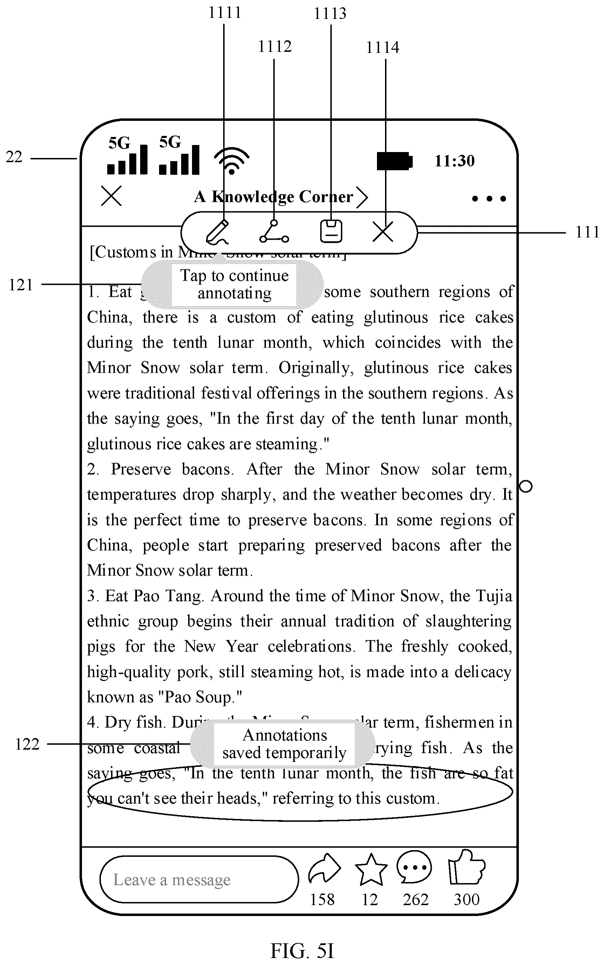

In a possible case, the user performs an operation of swiping to draw a character C with a knuckle on the display interface 10 to wake up the annotation function. The invoked display interface is as shown in FIG. 3I. The user starts to annotate after tapping the write control 1111. For example, as shown in FIG. 5G, the user may perform annotation in a display interface 21. After completing the annotation on the display interface 21, the user may tap the write control 1111 to temporarily save the annotation for the display interface 21, as shown in FIG. 5H. For example, in response to the user operation of tapping the write control 1111, the annotation for the display interface 21 is temporarily saved, and the display interface is switched to a display interface 22, as shown in FIG. 5I. In this case, the electronic device can no longer annotate the display interface 11. To be specific, the write control 1111 is in an unavailable state. To present a use state of the write control 1111 to the user, when the display interface 21 is switched to the display interface 22, the color of the write control 1111 also changes accordingly. For example, in the display interface 21, the write control 1111 is in an available state, and the color is blue. In the display interface 22, the write control 1111 is in an unavailable state, and the color is black.

Optionally, the display interface 22 further displays a card 121, for prompting that the user may start annotating again by tapping the write control 1111 again. For example, text "Tap to continue annotating" is displayed on the card 121.

Optionally, the display interface 22 further displays a card 122. The card 122 is configured for prompting the user that the annotation for the display interface 11 has been saved. For example, text "Annotations saved temporarily" is displayed on the card 122. Subsequently, the card 122 may disappear after staying for a preset duration or in response to an operation for a control on the editing tool bar 111. Only the editing tool bar 111 and the annotation tool bar 112 are kept on the screen.

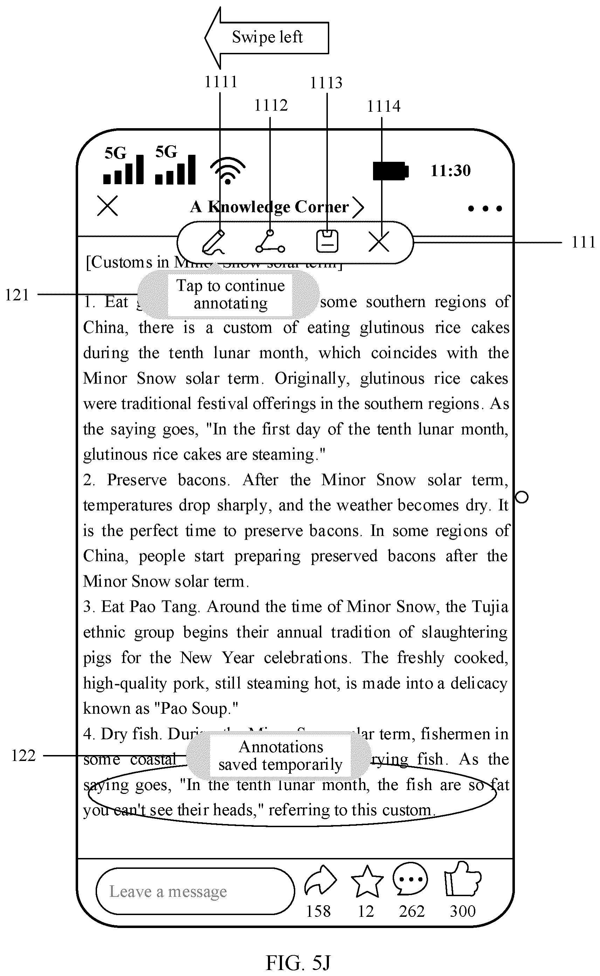

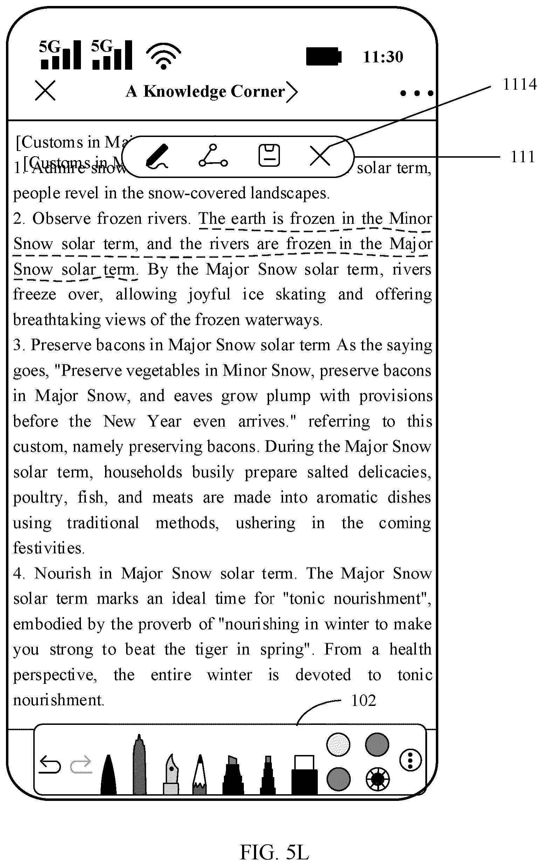

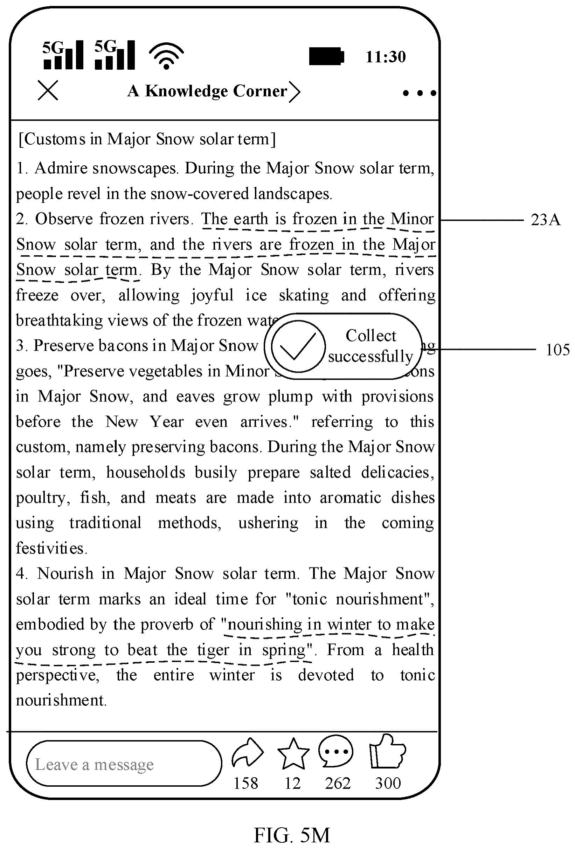

Because the state of the write control 1111 is an unavailable state in the display interface 22, the user may perform a page turning operation and read content of another page. For example, as shown in FIG. 5J, the user swipes left to turn a page. In response to the user operation of swiping left, the display interface 12 is switched to a display interface 23, as shown in FIG. 5K. After tapping the write control 1111 again, the user starts to annotate a display interface 13, as shown in FIG. 5L. After completing annotating the display interface 23, the user may tap the complete control 1114 to save the annotation for the display interface 21 and the annotation for the display interface 23 into a same file group in the global collection App. In this case, the editing tool bar 111 and the annotation tool bar 102 are closed. The icon 105 of the global collection App is displayed on the display interface, as shown in FIG. 5M.

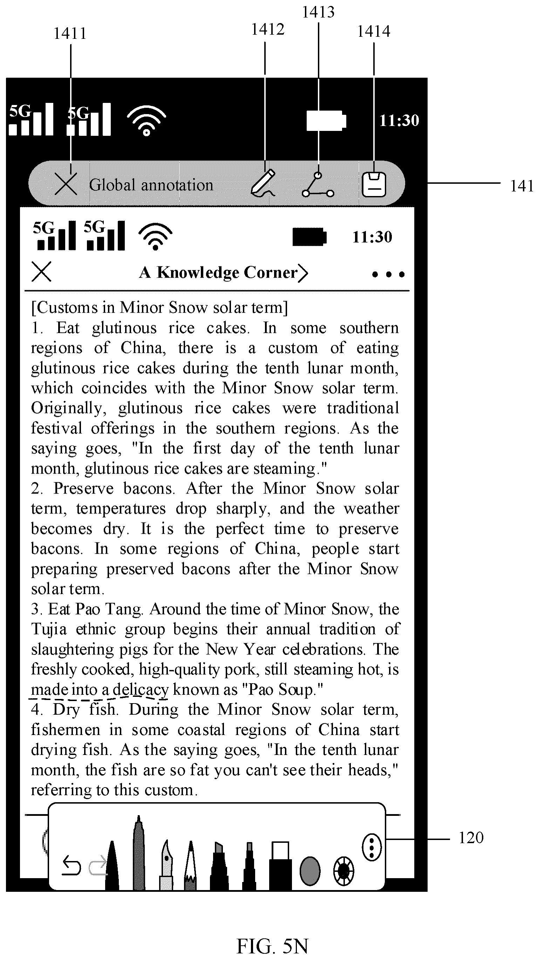

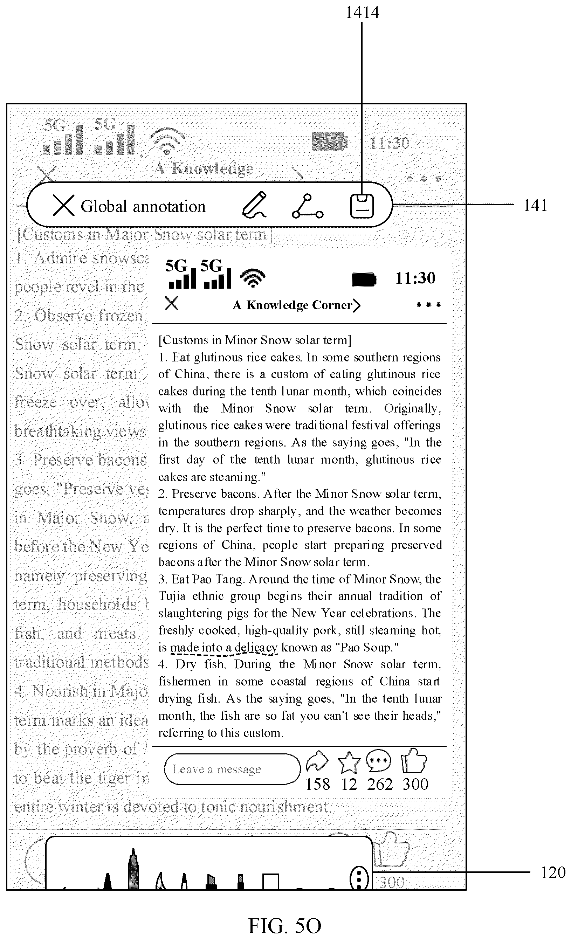

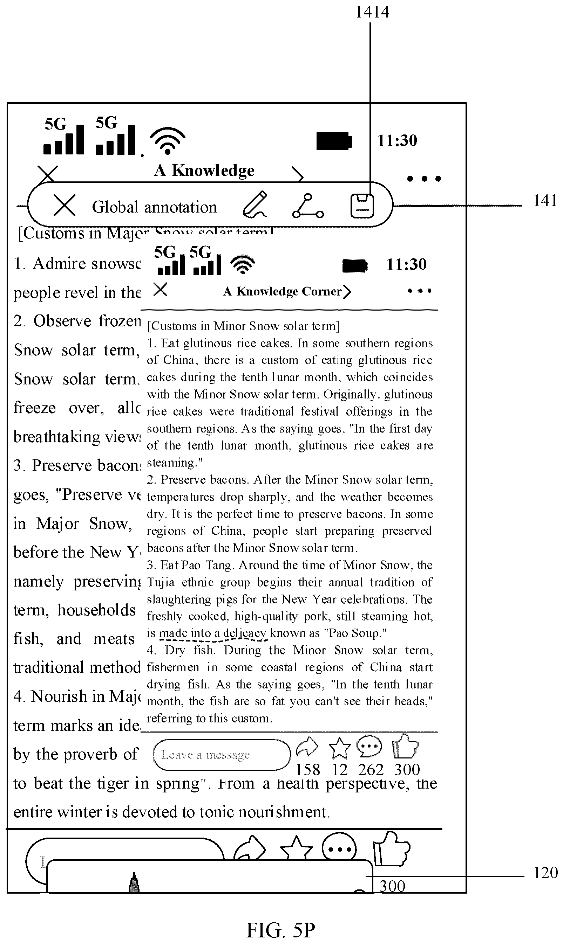

In a possible case, the user taps the complete control 122 on the interface shown in FIG. 3Q. In response to the user operation of tapping the complete control 122, an editing tool bar 141 is displayed on the display interface. The editing tool bar includes a complete control 1411, an annotation control 1412, a share control 1413, and a temporary save control 1414, as shown in FIG. 5N. Meanwhile, an annotation page obtained through the annotation is converted into a thumbnail, and the thumbnail converted from the annotation page approaches the temporary save control 1414, as shown in FIG. 5O. In this process, a grayscale of a reading interface is gradually reduced, so that the reading interface can be clearly presented to the user. The annotation tool bar 120 also gradually moves down. When the thumbnail converted from the annotation page is minimized and the annotation tool bar 122 moves to the lowest part of the display interface, the grayscale of the reading page is the lowest, as shown in FIG. 5P. In this way, it is equivalent to using the thumbnail converted from the annotation page to fly to the temporary save control 1414, and the annotation is saved temporarily by using a dynamic effect that the annotation tool bar 120 is hidden down. After the annotation is saved temporarily, an indication icon indicating that one annotation is already saved is displayed at the upper right of the temporary save control 1414, as shown in FIG. 5Q.

Optionally, a card 142 may further be displayed below the editing tool bar 141. The card 142 is configured for displaying prompt information that continuous annotation may be performed, for example, text information "Support continuous annotation, and after switching to a page to be annotated, tap here to trigger annotation again" shown in FIG. 5Q.

Optionally, a card 143 may be further displayed below the reading page. The card 143 is configured for displaying prompt information indicating that an annotation has been saved temporarily, for example, text information "Annotations saved temporarily" shown in FIG. 5Q.

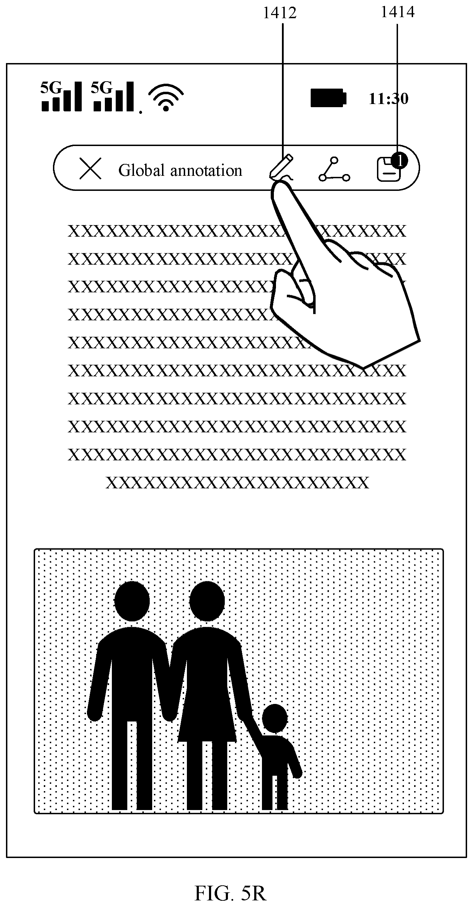

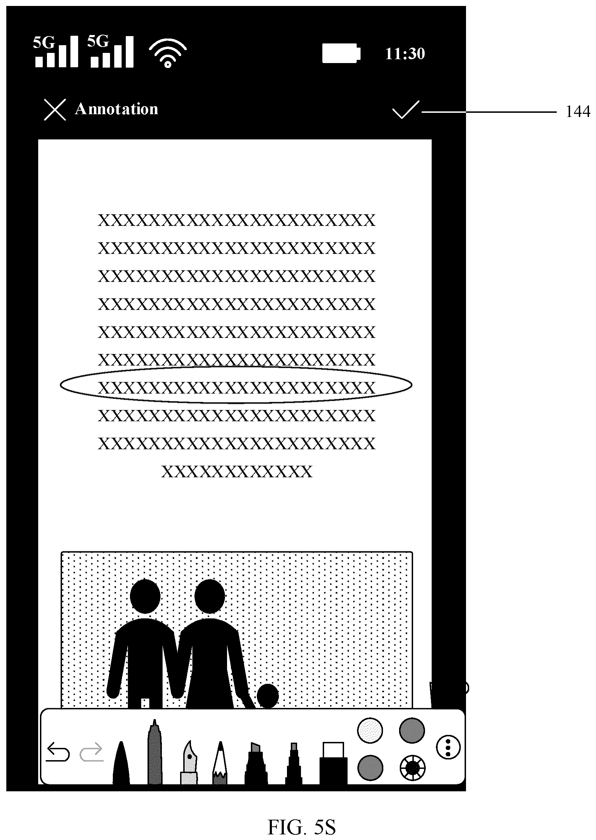

When the user switches to another reading page after a first annotation is saved temporarily, the user may tap the annotation control 1412 to perform annotation again, as shown in FIG. 5R. In response to the user operation of tapping the annotation control 1412, the reading interface is converted from a reading state into an editing state. As shown in FIG. 5S, the user may perform a graffiti annotation on the reading interface in an editing state. The reading interface in an editing state includes a complete control 144. In this case, one annotation has been saved temporarily. Therefore, when the complete control 144 is tapped again and a current annotation is saved in the temporary save control 1414, a card 145 is further displayed. "Tap here to save all annotations" is displayed on the card 145, as a display interface 24 shown in FIG. 5T. An icon at the upper right corner of the temporary save control 1414 is updated to a numeral "2", indicating that there are already two annotations saved temporarily. In this case, the temporary save control 1414 may be tapped to save all the annotations to a global collection, and a display interface 24A shown in FIG. 5AH is displayed. The display interface 24A includes the icon 105. Prompt information "Collect successfully" is displayed on the icon 105.

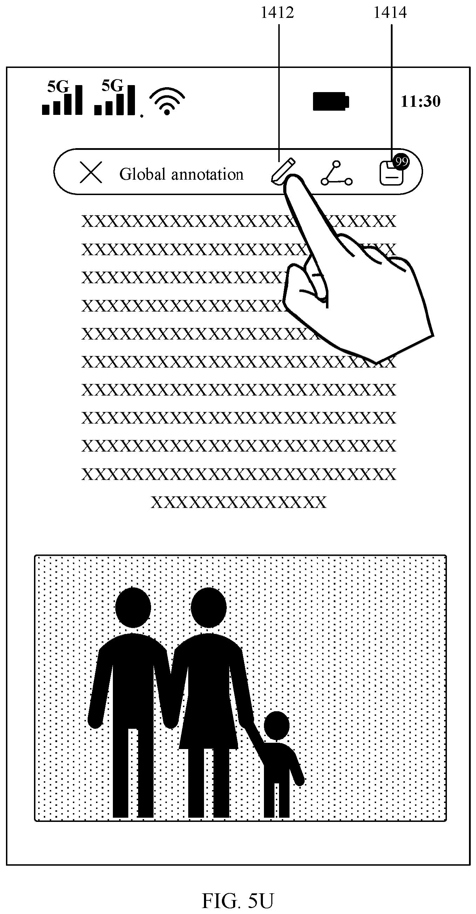

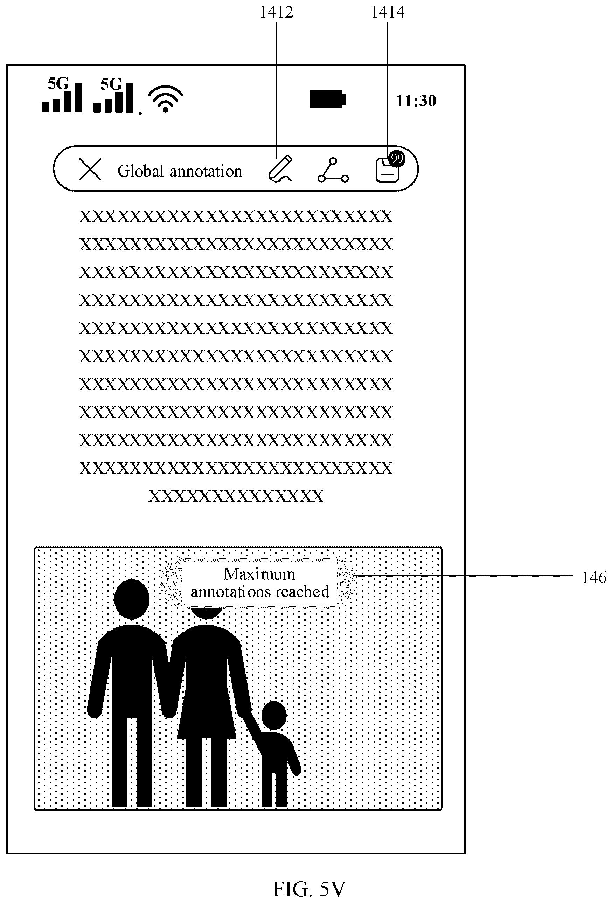

Optionally, when a quantity of the annotations saved temporarily reaches an upper quantity limit, the upper quantity limit of the annotations saved temporarily is, for example, 99. If 99 annotations have been saved temporarily, the user taps the annotation control 1412 to perform annotation again, as shown in FIG. 5U. In this case, the reading interface cannot be converted from the reading state into the editing state. A card 146 is displayed on the display interface. Text information "Maximum annotations reached" is displayed on the card 146, to prompt the user that continuous annotation cannot be performed, as shown in FIG. 5V.

Optionally, when the user wakes up an annotation function by using a stylus on a Pad, the annotation function is woken up by using a dynamic effect of folding and rolling a page, as shown in FIG. 3S to FIG. 3W. In this case, if the user needs to perform continuous annotation, the user may not perform continuous annotation by using the dynamic effect of folding and rolling a page.

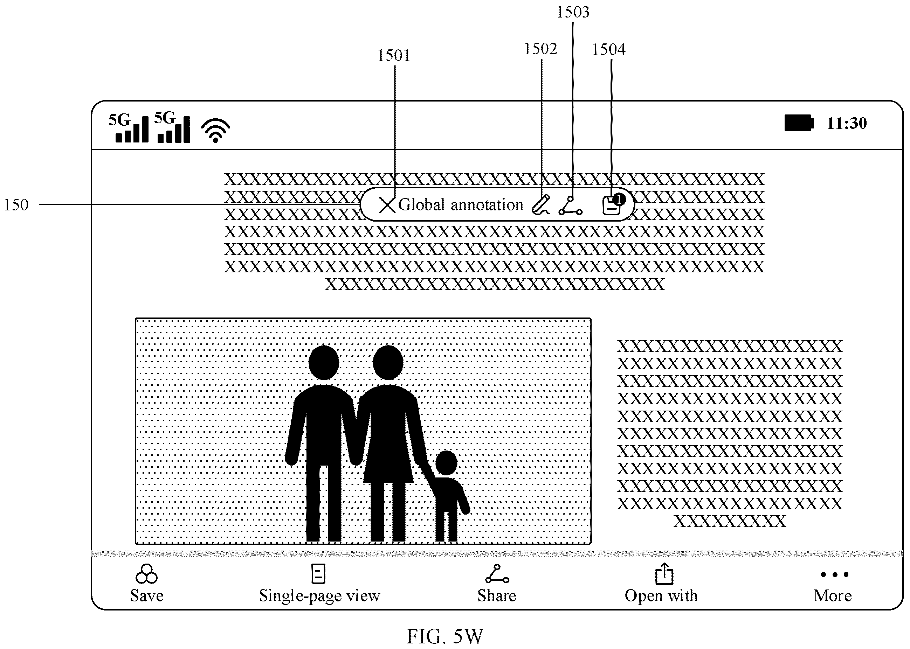

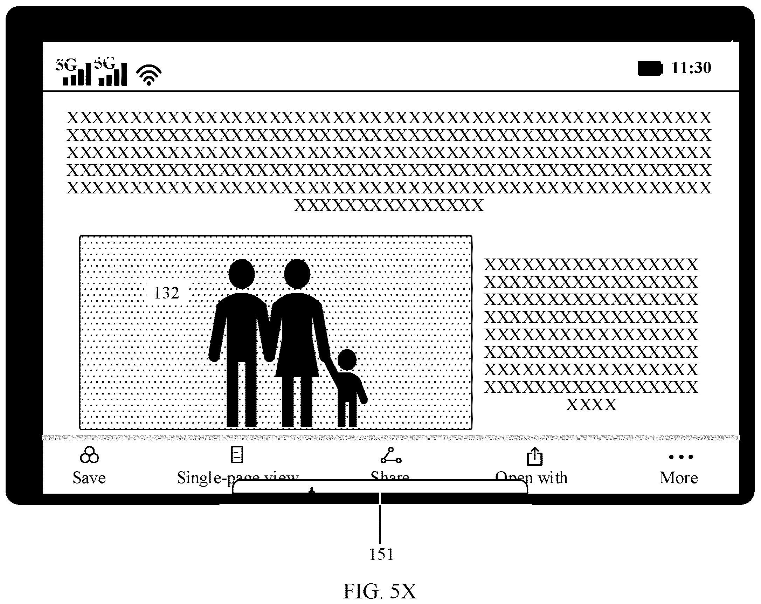

For example, when continuous annotation is performed on the Pad, an editing tool bar 150 is displayed on a reading interface. The editing tool bar includes a complete control 1501, an annotation control 1502, a share control 1503, and a temporary save control 1504. The user taps the annotation control 1502, as shown in FIG. 5W. In response to the user operation of tapping the annotation control 1502, the reading interface is gradually converted from a reading state to an editing state, and the annotation tool bar 151 is gradually moved up from the lowest part until being fully displayed, referring to a dynamic effect in FIG. 5X to FIG. 5Z. It should be understood that in this process, the dynamic effect of folding and rolling a page shown in FIG. 3S to FIG. 3W is not used.

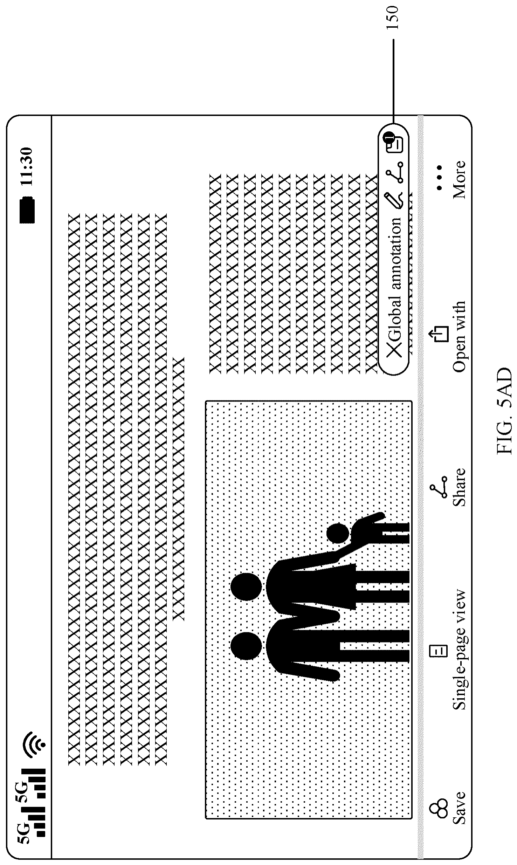

It should be understood that the editing tool bar 150 may be located at an upper left side of a display interface of the Pad, as shown in FIG. 5AB. The editing tool bar 150 may be located at an upper side of the display interface of the Pad, as shown in FIG. 5AB. The editing tool bar 150 may be located at an upper right side of the display interface of the Pad, as shown in FIG. 5AC. The editing tool bar 150 may be located at a lower right side of the display interface of the Pad, as shown in FIG. 5AD. The editing tool bar 150 may be located at a lower side of the display interface of the Pad, as shown in FIG. 5AE. The editing tool bar 150 may be located at a lower left side of the display interface of the Pad, as shown in FIG. 5AF. This is not limited in this embodiment of this application.

Optionally, when duration in which the reading interface is in a reading state is long, the user may further be prompted to save the annotation at the current moment, for example, as shown in FIG. SAG. When the duration in which the reading interface is in a reading state exceeds 10 minutes, a card 160 is displayed on the display interface. Text information "Tap to save this annotation" is displayed on the card 160.

After annotating the reading material for multiple times to obtain a plurality of annotations, the user may further perform an editing operation on the plurality of annotations, to manage the plurality of annotations. The editing operation may include a deletion operation, a preview operation, and a sorting operation. Detailed descriptions are provided below by using FIG. 6A to FIG. 6H.

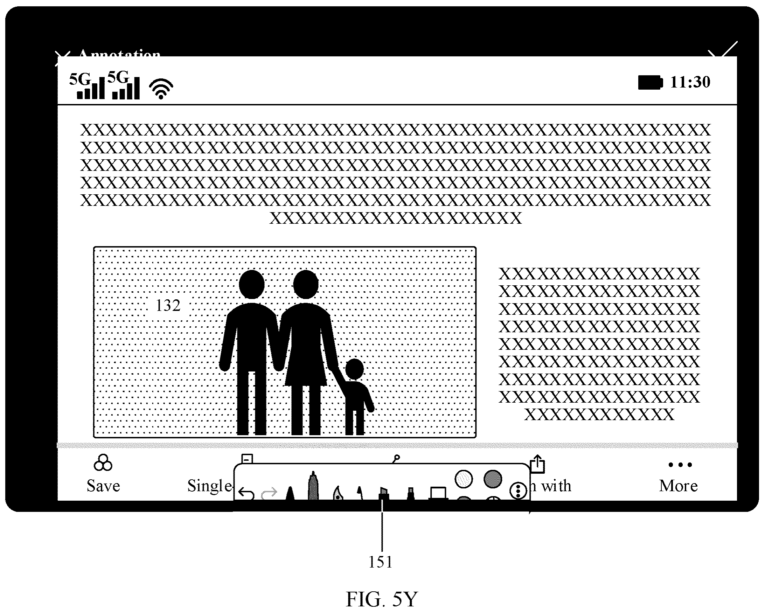

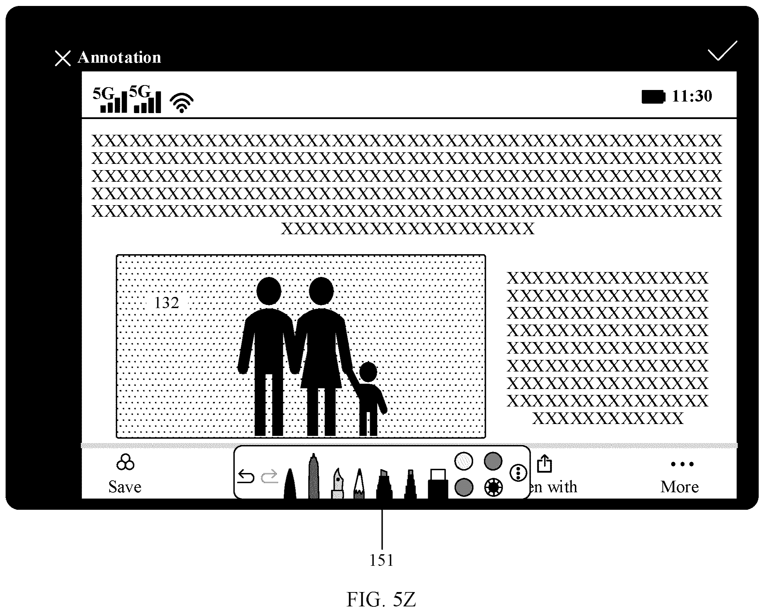

Based on the embodiment shown in FIG. 5, after the user annotates the reading material for multiple times to obtain a plurality of annotations, the plurality of annotations are displayed in an annotation preview region 1041 in the editing tool bar 104. For example, as shown in FIG. 6A, because the size of the annotation preview region 1041 is small, only one annotation can be displayed. In this case, the user may first increase the length of the annotation preview region 104, so that a plurality of annotations may be displayed in the annotation preview region 104, and then the plurality of annotations may be edited.

For example, as shown in FIG. 6B, the user may drag a lower edge of the editing tool bar 104 down, to increase the length of the annotation preview region 104, and two annotations are displayed.

Optionally, the user may resort the plurality of annotations, so that the plurality of finally generated annotations may be displayed in a sequence expected by the user. For example, as shown in FIG. 6B, the length of the annotation preview region 104 is increased, and two annotations are displayed. The user may long-press one annotation, and the electronic device sends prompt information indicating that the annotation is selected. For example, when the user long-presses an annotation 2, the electronic device vibrates, and prompts the user that the annotation 2 is selected, as shown in FIG. 6C. Then, the user drags the annotation 2 up until positions of the annotation 2 and an annotation 1 are exchanged. To be specific, the annotation 2 is located above the annotation 1, as shown in FIG. 6D.

According to the annotation method provided in this embodiment of this application, before an annotation file is saved, the sequence of the plurality of annotations may be adjusted, so that the saved annotation file can better meet expectations of the user.

Optionally, the user may delete one or more annotations among the plurality of annotations. For example, as shown in FIG. 6B, a delete control 10411 is disposed at an upper right side of each annotation. The user taps the delete control 10411 of the annotation 1, as shown in FIG. 6E. In response to the user operation of tapping the delete control 10411, the annotation is deleted, as shown in FIG. 6F.

According to the annotation method provided in this embodiment of this application, the annotation may be deleted by using the delete control before the annotation file is saved, so that the finally saved annotation file does not include redundant annotations, and the saved annotation file may be optimized before the annotation file is saved.

Optionally, the electronic device may display a preview picture of an annotation, so that the user determines whether to export the annotation according to an annotation sequence indicated by the preview picture. For example, the user may invoke the preview picture of the annotation by means of a wakeup operation. The wakeup operation may be a swiping operation of the user on a display interface (i.e. a display interface shown in FIG. 6B) for editing the annotation. For example, the user swipes right on the interface shown in FIG. 6B, as shown in FIG. 6G. In response to the user operation of swiping right, the electronic device displays a preview picture shown in FIG. 6H. The user may determine, by viewing the preview picture, whether a plurality of annotations are arranged in a sequence expected by the user. If the plurality of annotations are arranged in the sequence expected by the user, the plurality of annotations may be merged into one file. If the plurality of annotations are not arranged in the sequence expected by the user, an arrangement sequence of the annotations may be adjusted by long-pressing the annotations. Alternatively, the user may delete one of the annotations.

According to the annotation method provided in this embodiment of this application, a preview picture of all annotations made by a user for a reading material can be invoked by using a wakeup operation, so that the user can edit all the annotations again according to requirements of the user, thereby improving intuitiveness and convenience for the user to edit the annotations.

After completing annotating the reading material, the user may combine the obtained annotations into one file for export, to facilitate the user to view the annotations. The user may merge all the annotations for the reading material into one file for export, or may perform detailed description below by using FIG. 7A to FIG. 7AD.

In a possible case, the user performs an operation of swiping to draw a character C with a knuckle on the display interface 10 to wake up the annotation function. The invoked display interface is as shown in FIG. 3C. After completing all the annotations for the reading material, the user may tap an export control 1012, as shown in FIG. 7A. In response to the user operation of tapping the export control 1012, the electronic device displays an option list 201, as shown in FIG. 7B. A first option 2011, a second option 2012, a third option 2013, and a fourth option 2014 are included. The first option 2011 is configured for exporting an annotation as a picture. Text "Export as a picture" is displayed on the first option 2011. The second option 2012 is configured for exporting an annotation as a PDF file. Text "Export as a PDF" is displayed on the second option 2012. The third option 2013 is configured for exporting an annotation as a file format that may be saved in a note. Text "Export as a note" is displayed on the third option 2013. The fourth option 2014 is configured for exporting an annotation as a file format that may be saved in a global collection. Text "Export as a global collection" is displayed on the fourth option 2012.

The user taps the first option 2011, as shown in FIG. 7C. In response to the user operation of tapping the first option 2011, the electronic device converts an annotation into a picture, and displays a share window 202, as shown in FIG. 7D. The user taps the second option 2012, as shown in FIG. 7E. In response to the user operation of tapping the second option 2012, the electronic device converts an annotation into a PDF file, and displays the share window 202, as shown in FIG. 7D. The user may select an application in the share window 202, and share the annotation to the application.

The user taps the third option 2013, as shown in FIG. 7F. In response to the user operation of tapping the third option 2013, the electronic device converts the annotation into a file format that may be saved in the note, and displays a note window 203, as shown in FIG. 7G. The note window 203 includes two options, namely, "Save path" and "Note title". The user may modify a save path and a title of the note in the two options. After the user sets the save path and the title of the note, the user may further tap a complete control 2031 on the note window 203 to close the note window 203. In response to the user tapping the complete control 2031, the electronic device closes the note window 203, and displays a display interface for the reading material, as shown in FIG. 7H.

Optionally, the electronic device may further display prompt information on the display interface for the reading material in a manner of a pop-up window. The prompt information is configured for indicating that the annotation has been saved to the note. For example, as shown in FIG. 7H, text "Save to Note" is displayed by using a pop-up window 2032 on the display interface for the reading material.

In a possible case, the user performs an operation of swiping to draw a character C with a knuckle on the display interface 10 to wake up the annotation function. The invoked display interface is as shown in FIG. 3I. The user may tap the close control 1114 to end the current annotation, as shown in FIG. 7I. In response to the user operation of tapping the close control 1114, the electronic device may save the annotation that has been completed. It should be understood that when saving the existing annotation, the electronic device may first output, to the user by using the pop-up window, indication information indicating whether to save the existing annotation. For example, as shown in FIG. 7J, in response to the user operation of tapping the close control 1114, a pop-up window 204 is displayed on the display interface for the reading material. The pop-up window 204 includes a save control 2041 and a not-save control 2042.

Optionally, before the user taps the close control 1114, the user performs the annotation only once. In this case, if the user selects the save control 2041, a selection window for selecting a saving type of the annotation is displayed. For example, as shown in FIG. 7K, the display interface of the electronic device is switched to a display interface 21, which includes a selection window 211 displaying a plurality of saving types. Options displayed on the selection window 211 include "Save as a picture", "Save as a PDF", "Save to Note", and "Save to Global collection". The user may select a corresponding saving manner based on a requirement.

For example, the user selects the option "Save to Global collection" on the selection window 211, as shown in FIG. 7L. In response to the user tapping the option "Save to Global collection", the electronic device saves the annotation into the global collection. In a process of saving the annotation to the global collection, a preset dynamic effect may be used. For example, when the user taps the option "Save to Global collection", the selection window 211 is closed, a global collection icon 212 is displayed on the interface for the reading material, and text information "Global annotation being collected" is displayed on the global collection icon 212, as shown in FIG. 7M. It should be understood that the process of saving the annotation to the global collection responds to a process of transmitting annotation data to a specified storage address of the global collection, where data transmission needs to be performed, and the data transmission usually takes a period of time. Therefore, after transmission of the annotation data to the specified storage address of the global collection ends, the global collection icon 212 is switched to a global collection icon 213. The global collection icon 213 displays text information "Collect successfully", as shown in FIG. 7N.

The selection window 211 further includes a cancel control 2115. If the user taps the cancel control 2115, saving of the annotation is canceled, and the display interface is switched to a display interface shown in FIG. 3G.

Optionally, before the user taps the close control 1114, the user annotates for multiple times. For example, the user annotates twice. In this case, if the user selects the save control 2041, the electronic device may first display an editing window 212. The editing window 212 includes a plurality of completed annotations. For example, as shown in FIG. 7O, the plurality of annotations include an annotation 1 and an annotation 2. The user may save all the annotations, or may select one or more annotations from the plurality of annotations to save. This is not limited in this embodiment of this application. As shown in FIG. 7O, the user may select the annotation 1 and the annotation 2, and then tap a save button to save the annotation 1 and the annotation 2. Alternatively, the user may only select the annotation 1, and then tap the save button to save the annotation 1. In a possible case, the user may further select the annotation 1 by long-pressing the annotation 1, drag the annotation 1 in the editing window 212, and adjust an arrangement sequence of the annotation 1 and the annotation 2.

After the user taps the save button, in response to the operation of tapping the save button, the electronic device displays a selection window for selecting a saving type of the annotation, as shown in FIG. 7K.

In addition to saving the annotation, the user may share the annotation by using another application. For example, on the display interface shown in FIG. 3I, the user taps the share control 1112.

Optionally, before the user taps the share control 1112, the user performs annotation only once. In this case, in response to the user operation of tapping the share control 1112, a share window 221 is displayed on the display interface 22 of the electronic device. The share window 221 includes a plurality of applications and a type option 2212, as shown in FIG. 7P. If the user taps the type option 2212, the type option 2212 is expanded into two options, which are respectively options "Share as a picture" and "Share as a PDF". As shown in FIG. 7Q, the user may select a sharing type based on a requirement. In addition, the user may select, from the plurality of applications, an application that shares the annotation.

In a possible case, after the user taps to save an annotation temporarily on the interface shown in FIG. 3Q, a display interface shown in FIG. 5R is displayed. The user taps a complete control 1414 on the display interface shown in FIG. 5R, as shown in FIG. 7R. In response to the user operation of tapping the complete control 1414, an editing window 230 is displayed, as shown in FIG. 7S. The editing window 230 includes a plurality of completed annotations. For example, as shown in FIG. 7S, the plurality of annotations include an annotation 1, an annotation 2, an annotation 3, an annotation 4, an annotation 5, and an annotation 6. The user may save all the annotations, or may select one or more annotations from the plurality of annotations to save. This is not limited in this embodiment of this application. As shown in FIG. 7S, the user may select all the annotations, and then tap a save button 231 to save the annotation 1 to the annotation 6. As shown in FIG. 7T, the user may alternatively select only the annotation 1, the annotation 2, and the annotation 5, and then tap the save button 231 to save the annotation 1, the annotation 2, and the annotation 5. In a possible case, the user may further select the annotation 1 by long-pressing the annotation 1, drag the annotation 1 in the editing window 212, and adjust an arrangement sequence of the annotation 1 and the annotation 2.

Optionally, the user may further display a selection window 240 after the user taps the save button 231. A plurality of options are included in the selection window 240 to indicate types of the saved annotations. For example, as shown in FIG. 7U, the selection window 240 includes an option of "Save as a picture", an option of "Save as a PDF", and an option of "Save as a note". The user may select a corresponding option based on a requirement, and save the annotation according to the selected type.

The user taps the share control 1413 on the display interface shown in FIG. 5R, as shown in FIG. 7V. In response to the user operation of tapping the share control 1413, a selection window 260 is displayed, as shown in FIG. 7W. The selection window 260 includes an option of "Share as a picture" and an option of "Share as a PDF". The user may select a corresponding option based on a requirement, and share the annotation according to the selected type. After the user selects a sharing type, a sharing window 270 is displayed on the display interface, as shown in FIG. 7X. The sharing window 270 includes different types of applications. The user may select a corresponding application based on a requirement, and share the annotation by using the selected application.

When the interface shown in FIG. 3Q is displayed in response to a wakeup operation of the user, the reading interface generally includes two states, namely a reading state and an editing state. A display interface in the editing state may be shown in FIG. 3Q, and a display interface in the reading state may be shown in FIG. SR. How to save an annotation in different states is described below respectively.

For example, as shown in FIG. 7Y, when the reading interface is in an editing state, the reading interface includes a complete control 122, the user taps the complete control 122, and in response to the operation of tapping the complete control 122, an editing window 281 is displayed, as shown in FIG. 7Z. The editing window 281 includes a "Save" option and a "Not save" option. The user may select a corresponding option based on a requirement. For example, if the user taps the "Save" option, the annotation may be saved, and the state of the reading interface is switched to the reading state, as shown in FIG. 7AA, which includes an editing tool bar 282. If the user taps the "Not save" option, the editing state is exited, and the annotation is exited.

For example, as shown in FIG. 7AB, when the reading interface is in the reading state, the reading interface includes a temporary save control 1414. The user taps the temporary save control 1414, and an editing window 291 is displayed in response to the user operation of tapping the temporary save control 1414. As shown in FIG. 7AC, the editing window 291 includes a "Save" option and a "Not save" option. The user may select a corresponding option based on a requirement. For example, if the user taps the "Save" option, the annotation may be saved. Optionally, before saving the annotation, the user may further be prompted first whether to save all the annotations. For example, the display interface may be shown in FIG. 7AD. The display interface includes a selection window 292. The user may select whether to save all the annotations based on a requirement. If the user taps the "Not save" option, the global annotation is exited.

It should be understood that the annotation of the user for the reading material may be saved in the global collection. In this case, the user may add a new annotation to the annotations already collected in the global collection, and save the added new annotation in an original annotation file in the global collection. Detailed descriptions are provided below by using FIG. 8A to FIG. 8J.

After the annotation is saved in the global collection, as shown in FIG. 7N, text information "Collect successfully" is displayed on the global collection icon 213. After the user taps the global collection icon 213, a global collection window 301 in an expanded state is displayed. Icons of a plurality of collection content are displayed in the global collection window 301, including icons 3011 corresponding to the annotations, as shown in FIG. 8A. The user taps the icons 3011, and then a display interface 31 on which an annotation is added is jumped to, as shown in FIG. 8B. The display interface 31 displays an annotation addition window 311. The annotation addition window 311 displays the annotation 1 and the annotation 2 that are saved to the global collection last time, and an annotation addition control 3111. The user taps the annotation addition control 3111, as shown in FIG. 8C. In response to the user operation of tapping the annotation addition control 3111, the display interface is switched to a display interface 32 on which an annotation is added to the reading material, as shown in FIG. 8D. Reading materials corresponding to the annotation 1 and the annotation 2, and an editing tool bar 321 are displayed on the display interface 32. It should be understood that the annotation 1 and the annotation 2 are annotations obtained by annotating a reading material. A page of the reading material displayed on the display interface 32 may be any page of the foregoing reading material, may be a first page of the foregoing reading material, or may be a page corresponding to the annotation 1 or the annotation 2. This is not limited in this embodiment of this application. The editing tool bar 321 includes an annotation start control 3211, an export control 3212, and a complete control 3213. A state of the annotation start control 3211 is an available state, and states of the export control 3212 and the complete control 3213 are an unavailable state. A color of the annotation start control 3211 is black corresponding to the available state, and a color of the export control 3212 and a color of the complete control 3213 is gray corresponding to the unavailable state. To be specific, the user may tap the annotation start control 3211 to start annotating, but does not start to perform a corresponding operation of exporting an annotation or completing an annotation when tapping the export control 3212 or the complete control 3213. After the user taps the annotation start control 3211, the editing tool bar 321 on the display interface is closed, and an editing tool bar 322 and an annotation tool bar 323 are opened. The editing tool bar 322 includes an annotation pause control 3221 and an export control 3222 in an available state, and a complete control 3223 in an unavailable state, as shown in FIG. 8E. A color of the annotation pause control 3221 and a color of the export control 3222 are black corresponding to the available state, and a color of the complete control 3223 is gray corresponding to the unavailable state. In this case, the user may select a corresponding brush from the annotation tool bar 323 to start to annotate. If completing annotating, the user may tap the annotation pause control 3221 to temporarily save the annotation, as shown in FIG. 8F. In response to the user operation of tapping the annotation pause control 3221, the state of the complete control 3223 is switched from the unavailable state to the available state, and the color of the complete control 3223 is switched from gray corresponding to the unavailable state to black corresponding to the available state, as shown in FIG. 8G.

In this case, the user may tap the complete control 3223 to save the newly added annotation into the global collection, as shown in FIG. 8H. In response to the user operation of tapping the complete control 3223, the editing tool bar 322 is closed, and a global collection icon 324 is displayed, as shown in FIG. 8I. It should be understood that a newly added annotation (for example, the annotation 3) may be in a same file group as the annotation 1 and the annotation 2 that are saved in the global collection last time. In this case, when the user taps the global collection icon 323 to display the global collection window 301 in an expanded state, and taps the icons 3011 corresponding to the annotations in the global collection window 301, the annotation 1, the annotation 2, and the newly added annotation (i.e. the annotation 3) are displayed in the annotation addition window 311, as shown in FIG. 8J.

In addition to adding a new annotation, the annotations saved in the global collection may be further secondarily edited. Detailed description is provided below by using FIG. 9A to FIG. 9E.

When the user taps the global collection icon 323 to display the global collection window 301 in an expanded state, and taps the icons 3011 corresponding to the annotations in the global collection window 301. After the annotation addition window 311 is displayed, the user may further tap any one of the annotations to secondarily edit the annotation.

For example, as shown in FIG. 9A, the user taps the annotation 1 in the annotation addition window 311. In response to the user operation of tapping the annotation 1, the electronic device displays a display interface 41 for the reading material corresponding to the annotation 1, and further displays an editing tool bar 401 on the display interface 41, as shown in FIG. 9B. The editing tool bar 401 includes an edit control 4011, an export control 4012, and a delete control 4013. It should be understood that annotations for the content of the display interface 41 last time already exist on the display interface 41. The user taps the edit control 4011, as shown in FIG. 9C. In response to the user operation of tapping the edit control 4011, an annotation tool bar 402 is displayed on a page 40, as shown in FIG. 9D. The annotation tool bar 402 may be disposed above the editing tool bar 401, to completely block the editing tool bar 402. Alternatively, the electronic device may close the editing tool bar 401 when opening the annotation tool bar 402. This is not limited in this embodiment of this application.

After the annotation tool bar 402 is started, the user may select a corresponding brush to secondarily edit the annotation 1. To be specific, based on annotating the annotation 1 last time, key content on the page corresponding to the annotation 1 is marked again. It should be understood that a color and style of an annotation line drawn during the secondary editing may be the same as or different from that of a line drawn during the previous annotation. This is not limited in this embodiment of this application. For example, when annotation is performed for the first time, the color of the drawn line is black. During the secondary editing, the color of the drawn line is red. After the user taps the export control 4012, a display interface 42 shown in FIG. 9E is displayed. The annotation 1 is updated to the annotation 4. The annotation 4 is a new annotation obtained by editing based on the annotation 1.

After a global annotation function is newly added to the electronic device, the user may set a gesture action of activating global annotation, and after performing a responding gesture action, the global annotation function is started. How to set the gesture action of activating global annotation is described in detail below by using embodiments shown in FIG. 10A to FIG. 10H.

In a possible case, the electronic device that performs annotation is a mobile phone. The mobile phone may be a bar phone, or may be a foldable phone. This is not limited in this embodiment of this application.

For example, the electronic device that performs annotation is a bar phone. The user may enter an option "Shortcuts & gestures" from settings, and select an option "Global annotation" from "Shortcuts & gestures", as shown in FIG. 10A. After the option "Global annotation" is selected, the display interface of the mobile phone is switched to a display interface 10A, as shown in FIG. 10B. In the display interface 10A, the user may select an option of Global annotation using a knuckle 10A1, and enable a function of activating global annotation by means of a gesture of drawing a character C with a knuckle.

For another example, the electronic device that performs annotation is a foldable phone. Some foldable phones may include two display screens that are folded in half. Some foldable phones include two display screens that may be folded in half and a display screen that is located on the outside after a screen is folded. To be specific, the foldable phone may include three display screens. The two display screens that may be folded in half may be referred to as inner screens for short, and the display screen that is located on the outside after a screen is folded may be referred to as an outer screen for short. The user may enter an option "Accessibility features" 10A2 from settings, and select an option "Global annotation" 10A3 from the option "Accessibility features" 10A2, to display a display interface 10B shown in FIG. 10C. The display interface 10B includes an option of Global annotation using a knuckle 10B1. The user selects the option of Global annotation using a knuckle 10B1, and enables a function of activating global annotation by means of a gesture of drawing a character C with a knuckle. A display interface on the outer screen of the foldable phone may be a display interface 10C shown in FIG. 10D. The display interface 10C includes an option of Global annotation using a knuckle 10C1. The user selects the option of Global annotation using a knuckle 10C1, and enables a function of activating global annotation by means of a gesture of drawing a character C with a knuckle.

Optionally, when the global annotation is performed by using the foldable phone, the user may further wake up the global annotation by moving a stylus from an upper right corner to the center, as shown in FIG. 3T to FIG. 3X. To be specific, the user may further select to wake up the global annotation by using a gesture action of drawing a character C with a knuckle, or wake up the global annotation by moving a stylus from an upper right corner to the center. The user may select, by using a switching option 10D4, a manner in which the global annotation is woken up. As shown in FIG. 10C, the display interface 10B further includes a switching option 10B2. A switching control displayed in the switching option 10B2 displays text "Global annotation using a stylus". After tapping the text "Global annotation using a stylus" on the switching control in the switching option 10B2, the user may switch to wake up the global annotation by moving a stylus from an upper right corner to the center. Meanwhile, the switching option 10B2 is switched to a switching option 10B3, as shown in FIG. 10E. Text displayed on a switching control in the switching option 10B3 is "Quick activation gesture for global annotation".

In a possible case, the electronic device that performs annotation is a Pad. The user may enter an option "Accessibility features" 10D1 from settings, and select an option "Global annotation" 10D2 from the option "Accessibility features" 10D1, to display a display interface 10D shown in FIG. 10F. The display interface 10D further includes an option of Global annotation using a knuckle 10D3 and a switching option 10D4. The user selects the option of Global annotation using a knuckle 10D3, and enables a function of activating global annotation by means of a gesture of drawing a character C with a knuckle.

Optionally, when the global annotation is performed by using the Pad, the user may further wake up the global annotation by moving a stylus from an upper right corner to the center, as shown in FIG. 3T to FIG. 3X. To be specific, the user may further select to wake up the global annotation by using a gesture action of drawing a character C with a knuckle, or wake up the global annotation by moving a stylus from an upper right corner to the center. The user may select, by using a switching option 10D4, a manner in which the global annotation is woken up. For example, after the user taps, on the display interface 10D, text "Global annotation using a stylus" on the switching control in the switching option 10D4, the user may switch to wake up the global annotation by moving a stylus from an upper right corner to the center. Meanwhile, a stylus setting interface, for example, a display interface 10E shown in FIG. 10G is entered. A global annotation option 10E1 is included on the display interface 10E. After selecting the global annotation option 10E1, the user may switch to wake up the global annotation by moving a stylus from an upper right corner to the center. Meanwhile, the display interface 10E for setting a stylus is switched to a display interface 10F of the global annotation, as shown in FIG. 10H. In this case, text displayed in the switching option 10F1 is "Quick activation gesture for global annotation".

FIG. 11 is a schematic flowchart of an annotation method according to an embodiment of this application. As shown in FIG. 11, the method includes:

S101: Display a second interface in response to a first operation on a first interface, where the first interface displays a first reading page, and the second interface includes the first reading page and a first control.

The first interface may be a display interface 10 shown in FIG. 3B. The first reading page may be, for example, a text page displayed on the display interface 10.

Optionally, the first operation may be a gesture operation of drawing a character C with a knuckle.

Optionally, the first operation may be an operation of moving a stylus from a corner of a display screen to the center.

The second interface may be a display interface 11 shown in FIG. 3C. The first control may be a pause control 1011.

Alternatively, the second interface may be a display interface 12 shown in FIG. 3I. The first control may be a write control 1111.

Alternatively, the second interface may be a display interface 13 shown in FIG. 3P. The first control may be a complete control 122.

S102: Obtain a first annotation in response to an operation on the first control, and display a third interface, where the third interface includes the first reading page and a first editing window, the first editing window blocks some content of the first reading page, the first editing window includes a second control, and the first annotation is an annotation for the first reading page.

When the second interface is the display interface 11 shown in FIG. 3C and the first control may be the pause control 1011, the obtaining a first annotation in response to an operation on the first control may include an operation of tapping, after a user completes annotation, the pause control 1011 to temporarily save the annotation. The third interface may be a display interface 11A shown in FIG. 3H. The first editing window may be an editing tool bar 103 shown in FIG. 3H. The second control may be a complete control 1033.

When the second interface may be the display interface 12 shown in FIG. 3I and the first control may be the write control 1111, the third interface may be a display interface 12A shown in FIG. 3M. The first editing window may be an editing tool bar 111. The second control may be a complete control 1114.

When the second interface may be a display interface 13 shown in FIG. 3P and the first control may be a complete control 122, the third interface may be a display interface 13A shown in FIG. SQ. The first editing window may be an editing tool bar 141 shown in FIG. SQ. The second control may be a temporary save control 1414 shown in FIG. 5Q.

S103: Display a fourth interface in response to a second operation on the third interface, where the fourth interface includes a second reading page and a second editing window, and the second editing window blocks some content of the second reading page.

The second operation may be a page turning operation on the third interface, so that the electronic device displays the second reading page. For example, the second operation may be swiping left. The second operation may further be an operation of exiting a currently running application and entering another application. This is not limited in this embodiment of this application.

When the second interface is the display interface 11 shown in FIG. 3C, the first control may be the pause control 1011, the third interface may be the display interface 11A shown in FIG. 3H, the first editing window may be an editing tool bar 103 shown in FIG. 3H, and the second control may be a complete control 1033, the fourth interface may be a display interface 30 shown in FIG. 5B, the second reading page may be a text page displayed in the display interface 30, and the second editing window may be the editing tool bar 103.

When the second interface may be the display interface 12 shown in FIG. 3I, the first control may be the write control 1111, the third interface may be the display interface 12A shown in FIG. 3M, the first editing window may be the editing tool bar 111, and the second control may be the complete control 1114, the fourth interface may be a display interface 23 shown in FIG. 5K, the second reading page may be a text page displayed in the display interface 23, and the second editing window may be the editing tool bar 111.

When the second interface may be the display interface 13 shown in FIG. 3P, the first control may be the complete control 122, the third interface may be the display interface 13A shown in FIG. 5Q, the first editing window may be the editing tool bar 141 shown in FIG. 5Q, and the second control may be the temporary save control 1414 shown in FIG. 5Q, the fourth interface may be a display interface 24 shown in FIG. 5T, the second reading page may be a text page displayed in the display interface 24, and the second editing window may be the editing tool bar 141.

S104: Obtain a second annotation in response to an operation on the second control, and display a fifth interface, where the fifth interface includes the second reading page and a first icon, the first icon is configured for indicating that the first annotation and the second annotation are saved into a first application, the first application is an application corresponding to the first icon, and the second annotation is an annotation for the second reading page.

When the second interface is the display interface 11 shown in FIG. 3C, the first control may be the pause control 1011, the third interface may be the display interface 11A shown in FIG. 3H, the first editing window may be the editing tool bar 103 shown in FIG. 3H, the second control may be the complete control 1033, the fourth interface may be the display interface 30 shown in FIG. 5B, the second reading page may be the text page displayed in the display interface 30, and the second editing window may be the editing tool bar 103, the fifth interface may be a display interface 30A shown in FIG. 5F, and the first icon may be an icon 105.

When the second interface may be the display interface 12 shown in FIG. 3I, the first control may be the write control 1111, the third interface may be the display interface 12A shown in FIG. 3M, the first editing window may be the editing tool bar 111, the second control may be the complete control 1114, the fourth interface may be the display interface 23 shown in FIG. 5K, the second reading page may be the text page displayed in the display interface 23, and the second editing window may be the editing tool bar 111, the fifth interface may be a display interface 23A shown in FIG. 5F, and the first icon may be the icon 105.

When the second interface may be the display interface 13 shown in FIG. 3P, the first control may be the complete control 122, the third interface may be the display interface 13A shown in FIG. 5Q, the first editing window may be the editing tool bar 141 shown in FIG. 5Q, and the second control may be the temporary save control 1414 shown in FIG. 5Q, the fourth interface may be the display interface 24 shown in FIG. 5T, the second reading page may be the text page displayed in the display interface 24, and the second editing window may be the editing tool bar 141, the fifth interface may be a display interface 24A shown in FIG. 5F, and the first icon may be the icon 105.

The annotation method according to this embodiment of this application includes: displaying a second interface in response to a first operation on a first interface, where the first interface displays a first reading page, and the second interface includes the first reading page and a first control; obtaining a first annotation in response to an operation on the first control, and displaying a third interface, where the third interface includes the first reading page and a first editing window, the first editing window blocks some content of the first reading page, the first editing window includes a second control, and the first annotation is an annotation for the first reading page; displaying a fourth interface in response to a second operation on the third interface, where the fourth interface includes a second reading page and a second editing window, and the second editing window blocks some content of the second reading page; and obtaining a second annotation in response to an operation on the second control, and displaying a fifth interface, where the fifth interface includes the second reading page and a first icon, the first icon is configured for indicating that the first annotation and the second annotation are saved into a first application, the first application is an application corresponding to the first icon, and the second annotation is an annotation for the second reading page. Because the first annotation and the second annotation are different annotations, it is equivalent to continuously annotating a reading material, thereby improving user experience.

Optionally, the first annotation is obtained in response to the operation on the first control, and the third interface is displayed by using a first preset dynamic effect.

The first preset dynamic effect may be a dynamic effect shown in FIG. 3J to FIG. 3L.

Optionally, when the first operation is a gesture operation of drawing a character C with a knuckle, the second interface is displayed by using a second preset dynamic effect in response to the gesture operation of drawing a character C with a knuckle on the first interface.

The second preset dynamic effect may be a dynamic effect shown in FIG. 3N to FIG. 3P.

Optionally, when the first operation is an operation of moving a stylus from a corner of a display screen to the center, the second interface is displayed by using a third preset dynamic effect in response to the operation of moving a stylus from a corner of the first interface to the center on the first interface.

The third preset dynamic effect may be a dynamic effect shown in FIG. 3U to FIG. 3X.

Optionally, the second editing window further includes a first region. The first region includes a preview annotation image. The preview annotation image includes a thumbnail of the first annotation.

The first region may be a region 1041 shown in FIG. 6A.

Optionally, there are a plurality of first annotations in the first region. The method further includes: displaying a sixth interface in response to a third operation in the first region, where the sixth interface includes a second region, and the second region includes the first annotations arranged in an order indicated by the second operation.

The sixth interface may be a region 1041 shown in FIG. 6D.

Optionally, the method further includes: displaying a ninth interface in response to a zoom-in operation on the third interface, where the ninth interface includes some content of the first reading page, and an area of a reading material in the first reading page is increased from a first area value to a second area value.

The ninth interface may be a display interface 20 shown in FIG. 4C.

Optionally, the first reading page includes a first image. An area of the first image on the ninth interface is greater than an area of the first image on the third interface.

The first image may be an image 201 shown in FIG. 4D.

Optionally, the method further includes: displaying a tenth interface, where the tenth interface includes a second icon of a first annotation; displaying an eleventh interface in response to an operation on the second icon, where the eleventh interface includes a fourth control; displaying a twelfth interface in response to an operation on the fourth control, where the twelfth interface includes the first reading page corresponding to the first annotation and a fifth editing window, and the fifth editing window includes a fifth control; and obtaining a third annotation in response to an operation on the fifth control, and displaying a thirteenth interface, where the thirteenth interface includes the first annotation and the third annotation.

The tenth interface may be a display interface 40 shown in FIG. 8A. The second icon may be an icon 3011 in the display interface 40. The eleventh interface may be a display interface 31 shown in FIG. 8B. The fourth control may be an addition control 3111. The twelfth interface may be a display interface 32 shown in FIG. 8D. The fifth editing window may be an editing tool bar 321. The fifth control may be an annotation start control 3211. The thirteenth interface may be a display interface 33 shown in FIG. 8J.

Optionally, the method further includes: displaying a fourteenth interface, where the fourteenth interface includes a second icon of a first annotation; displaying a fifteenth interface in response to an operation on the first icon, where the fifteenth interface includes a thumbnail of the first annotation; displaying a sixteenth interface in response to an operation on the thumbnail of the first annotation, where the sixteenth interface includes an image of the first annotation and a sixth editing window, and the sixth editing window includes a sixth control; and obtaining a fourth annotation in response to an operation performed on the sixth control, and displaying a seventeenth interface, where the seventeenth interface includes the fourth annotation, and the fourth annotation is an annotation obtained by editing the first annotation.

The fourteenth interface may be a display interface 40 shown in FIG. 8A. The second icon may be an icon 3011 in the display interface 40. The fifteenth interface may be a display interface 31 shown in FIG. 9A. The sixteenth interface may be a display interface 41 shown in FIG. 9C. The sixth editing window may be an editing tool bar 401 in the display interface 41. The sixth control may be an edit control 4011. The seventeenth interface may be a display interface 42 shown in FIG. 9E. The fourth annotation may be an annotation 4.

Although the steps in the flowcharts of the embodiments are displayed sequentially according to instructions of arrows, these steps are not necessarily performed sequentially according to a sequence instructed by the arrows. Unless otherwise explicitly specified in this application, execution of the steps is not strictly limited, and the steps may be performed in other sequences. Moreover, at least some of the steps in the flowchart may include a plurality of sub-steps or a plurality of stages. The sub-steps or stages are not necessarily performed at the same moment but may be performed at different moments. The sub-steps or stages are not necessarily performed sequentially, but may be performed in turn or alternately with another step or at least some of sub-steps or stages of the another step.

It may be understood that to implement the foregoing functions, the electronic device includes corresponding hardware and/or software modules corresponding to the functions. Algorithm steps in the examples described with reference to the embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions with reference to embodiments for each particular application, but it should not be considered that the implementation goes beyond the scope of this application.

In the embodiments of this application, function modules of the electronic device may be divided based on the foregoing method example. For example, each function module may be divided according to each function, or two or more functions may be integrated into one processing module. It should be noted that in the embodiments of this application, division into the modules is an example, and is merely logical function division. In an actual implementation, another division manner may be used. It should be noted names of modules in the embodiments of this application are examples, and the names of the modules are not limited during actual implementation.

FIG. 12 shows a schematic diagram of a structure of an electronic device according to this application. A dotted line in FIG. 12 indicates that the unit or the module is optional. An electronic device 700 may be configured to implement the annotation method in the foregoing method embodiments.

The electronic device 700 includes one or more processors 701. The one or more processors 701 may support the electronic device 700 to implement the annotation method in the method embodiments. The processor 701 may be a general-purpose processor or a dedicated processor. For example, the processor 701 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like.

The processor 701 may be configured to control the electronic device 700, execute a software program, process data of the software program, and the like. The electronic device 700 may further include a communication unit 705, configured to implement input (receiving) and output (sending) of signals.

For example, the electronic device 700 may be a chip, and the communication unit 705 may be an input and/or output circuit of the chip, or the communication unit 705 may be a communication interface of the chip. The chip may be used as a component of a terminal device or another electronic device.

For another example, the electronic device 700 may be a terminal device. The communication unit 705 may be a transceiver of the terminal device. Alternatively, the communication unit 705 may be a transceiver circuit of the terminal device.

The electronic device 700 may include one or more memories 702, having a program 704 stored therein. The program 704 may be run by the processor 701 to generate an instruction 703, so that the processor 701 performs the impedance matching method described in the foregoing method embodiments according to the instruction 703.

Optionally, the memory 702 may further store data. Optionally, the processor 701 may further read the data stored in the memory 702. The data and the program 704 may be stored at the same storage address. The data and the program 704 may alternatively be stored at different storage addresses.

The processor 701 and the memory 702 may be disposed separately, or may be integrated together, for example, integrated on a system on chip (system on chip, SOC) of the terminal device.

For example, the memory 702 may be configured to store a related program 704 of the annotation method provided in the embodiments of this application. The processor 701 may be configured to invoke the related program 704 of the annotation method stored in the memory 702 when repairing an image, and perform the annotation method according to the embodiments of this application. The method includes: displaying a second interface in response to a first operation on a first interface, where the first interface displays a first reading page, and the second interface includes the first reading page and a first control; obtaining a first annotation in response to an operation on the first control, and displaying a third interface, where the third interface includes the first reading page and a first editing window, the first editing window blocks some content of the first reading page, the first editing window includes a second control, and the first annotation is an annotation for the first reading page; displaying a fourth interface in response to a second operation on the third interface, where the fourth interface includes a second reading page and a second editing window, and the second editing window blocks some content of the second reading page; and obtaining a second annotation in response to an operation on the second control, and displaying a fifth interface, where the fifth interface includes the second reading page and a first icon, the first icon is configured for indicating that the first annotation and the second annotation are saved into a first application, the first application is an application corresponding to the first icon, and the second annotation is an annotation for the second reading page.

This application further provides a computer program product. When the computer program product is executed by a processor 701, the annotation method according to any one of the method embodiments of this application is implemented.

The computer program product may be stored in a memory 702, such as a program 704. The program 704 is finally converted into an executable target file that may be performed by the processor 701 through processing processes such as preprocessing, compilation, assembly, and linking.

This application further provides a computer-readable storage medium, having a computer program stored therein. When the computer program is executed by a computer, the annotation method according to any one of the method embodiments of this application is implemented. The computer program may be a high-level language program or an executable target program.

The computer-readable storage medium is, for example, a memory 702. The memory 702 may be a volatile memory or a non-volatile memory. Alternatively, the memory 702 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may represent a, b, c, a-b, a-c, b-c, or a-b-c, where there may be a single or a plurality of a, b, and c.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

A person of ordinary skill in the art may be aware that, the units and the algorithm steps in the examples described with reference to the embodiments disclosed in this specification can be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but this implementation should not be considered as beyond the scope of this application.

A person skilled in the art may clearly understand that for convenience and conciseness of description, for specific working processes of the foregoing systems, devices and units, reference may be made to the corresponding processes in the foregoing method embodiments, and details are not described herein again.

In the several embodiments provided in this application, it should be understood that the disclosed system, apparatus, and method may be implemented in other manners. For example, the described apparatus embodiments are merely examples. For example, the division of the units is only a logical function division, and there may be another division mode during actual implementation. For example, a plurality of units or components may be combined, or may be integrated into another system. Alternatively, some features may be ignored, or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be determined by the protection scope of the claims.

## Claims

1. An annotation method, comprising:
displaying a second interface in response to a first operation on a first interface, wherein the first interface displays a first reading page, and the second interface comprises the first reading page and a first control;
obtaining a first annotation in response to an operation on the first control, and displaying a third interface, wherein the third interface comprises the first reading page and a first editing window, the first editing window blocks some content of the first reading page, the first editing window comprises a second control, and the first annotation is an annotation for the first reading page;
displaying a fourth interface in response to a second operation on the third interface, wherein the fourth interface comprises a second reading page and a second editing window, and the second editing window blocks some content of the second reading page; and
obtaining a second annotation in response to an operation on the second control, and displaying a fifth interface, wherein the fifth interface comprises the second reading page and a first icon, the first icon is configured for indicating that the first annotation and the second annotation are saved into a first application, the first application is an application corresponding to the first icon, and the second annotation is an annotation for the second reading page.

2. The method according to claim 1, wherein the obtaining a first annotation in response to an operation on the first control and displaying a third interface comprises:
obtaining the first annotation in response to the operation on the first control, and displaying the third interface by using a first preset dynamic effect.

3. The method according to claim 1 or 2, wherein the first operation comprises a gesture operation of drawing a character C with a knuckle.

4. The method according to claim 3, wherein the displaying a second interface in response to a first operation on a first interface comprises:
displaying, in response to the gesture operation of drawing a character C with a knuckle on the first interface, the second interface by using a second preset dynamic effect.

5. The method according to claim 1 or 2, wherein the first operation comprises an operation of moving a stylus from a corner of a display screen to the center.

6. The method according to claim 5, wherein the displaying a second interface in response to a first operation on a first interface comprises:
displaying, in response to the operation of moving a stylus from a corner of the first interface to the center on the first interface, the second interface by using a third preset dynamic effect.

7. The method according to any one of claims 1 to 6, wherein the second editing window further comprises a first region, the first region comprises a preview annotation image, and the preview annotation image comprises a thumbnail of the first annotation.

8. The method according to claim 7, wherein there are a plurality of first annotations in the first region, and the method further comprises:
displaying a sixth interface in response to a third operation in the first region, wherein the sixth interface comprises a second region, and the second region comprises the first annotations arranged in an order indicated by the second operation.

9. The method according to claim 7, wherein a length of the first region is less than a preset threshold, the first region displays one first annotation, and the method further comprises:
displaying a seventh interface in response to a fourth operation in the first region, wherein the seventh interface comprises a third region, a length of the third region is greater than that of the first region, and the third region comprises the plurality of first annotations; and
displaying an eighth interface in response to a fifth operation in the third region, wherein the eighth interface comprises a fourth region, and the fourth region comprises the first annotations arranged in an order indicated by the fifth operation.

10. The method according to any one of claims 1 to 9, further comprising:
displaying a ninth interface in response to a zoom-in operation on the third interface, wherein the ninth interface comprises some content of the first reading page, and an area of a reading material in the first reading page is increased from a first area value to a second area value.

11. The method according to claim 10, wherein the first reading page comprises a first image, and an area of the first image on the ninth interface is greater than an area of the first image on the third interface.

12. The method according to any one of claims 1 to 11, further comprising:
displaying a tenth interface, wherein the tenth interface comprises a second icon of a first annotation;
displaying an eleventh interface in response to an operation on the second icon, wherein the eleventh interface comprises a fourth control;
displaying a twelfth interface in response to an operation on the fourth control, wherein the twelfth interface comprises the first reading page corresponding to the first annotation and a fifth editing window, and the fifth editing window comprises a fifth control; and
obtaining a third annotation in response to an operation on the fifth control, and displaying a thirteenth interface, wherein the thirteenth interface comprises the first annotation and the third annotation.

13. The method according to any one of claims 1 to 12, further comprising:
displaying a fourteenth interface, wherein the fourteenth interface comprises a second icon of a first annotation;
displaying a fifteenth interface in response to an operation on the first icon, wherein the fifteenth interface comprises a thumbnail of the first annotation;
displaying a sixteenth interface in response to an operation on the thumbnail of the first annotation, wherein the sixteenth interface comprises an image of the first annotation and a sixth editing window, and the sixth editing window comprises a sixth control; and
obtaining a fourth annotation in response to an operation performed on the sixth control, and displaying a seventeenth interface, wherein the seventeenth interface comprises the fourth annotation, and the fourth annotation is an annotation obtained by editing the first annotation.

14. The method according to any one of claims 1 to 13, wherein the first application comprises a global collection.

15. An electronic device, comprising a module for performing the method according to any one of claims 1 to 14.

16. An electronic device, comprising:
one or more processors;
a memory;
and one or more computer programs, wherein the one or more computer programs are stored in the memory, and when the computer program is executed by the one or more processors, the electronic device is enabled to perform the method according to any one of claims 1 to 14.

17. A chip system, comprising a processor, configured to invoke, from a memory, and run a computer program, to enable an electronic device equipped with the chip system to perform the method according to any one of claims 1 to 14.

18. A computer-readable storage medium, comprising a computer program, wherein when the computer program is run on an electronic device, the electronic device is enabled to perform the method according to any one of claims 1 to 14.
